# EUROPEAN PATENT SPECIFICATION

(11) **EP 4 475 557 B1**
(45) Date of publication and mention of the grant of the patent: **06.05.2026**
(21) Application number: 23778114.1
(22) Date of filing: 27.03.2023
(51) Int. Cl.: H04R 1/34, G02C 5/14, G02C 11/06, G10K 11/178, H04R 9/04, H04R 1/02, H04R 7/04, H04R 7/20, G02C 11/00, H04R 9/02, H04R 1/06

(54) **LOUDSPEAKER MODULE AND ELECTRONIC DEVICE**
LAUTSPRECHERMODUL UND ELEKTRONISCHE VORRICHTUNG
MODULE DE HAUT-PARLEUR ET DISPOSITIF ÉLECTRONIQUE

(30) Priority: 28.03.2022 CN 202220695643 U; 21.11.2022 CN 202223081917 U
(43) Date of publication of application: 11.12.2024
(73) Proprietor: Huawei Technologies Co., Ltd., Shenzhen, Guangdong 518129 (CN)
(72) Inventor: GUO, Li, Shenzhen, Guangdong 518129 (CN); QIN, Renxuan, Shenzhen, Guangdong 518129 (CN); LIU, Yang, Shenzhen, Guangdong 518129 (CN); PANG, Lichen, Shenzhen, Guangdong 518129 (CN); SHAN, Tingjia, Shenzhen, Guangdong 518129 (CN)
(74) Representative: Isarpatent
(86) International application number: PCT/CN2023/084128
(87) International publication number: WO 2023/185748

(56) References cited:
- CN-A- 108 566 606
- CN-A- 108 566 606
- CN-A- 112 770 232
- CN-A- 112 770 232
- CN-A- 113 099 365
- CN-A- 113 556 655
- CN-A- 113 556 655
- CN-A- 115 826 246
- CN-U- 214 381 372
- US-A1- 2004 136 558
- US-A1- 2020 275 189

## Description

### TECHNICAL FIELD

The following technical description generally relates to the field of audio technologies.

The invention in particular relates to a speaker module and an electronic device.

### BACKGROUND

As a common electro-acoustic transducer, a speaker is widely used in various electronic devices (for example, terminals such as mobile phones and smart glasses). For example, when the speaker is used in smart glasses, the speaker may be disposed in a glasses temple of the smart glasses, and is different from an in-ear device like a headset. When the speaker is disposed in the glasses temple of the smart glasses, there is a large distance between the speaker and an ear canal, and propagation of a sound wave in air is non-directional. Therefore, the speaker disposed in the glasses temple has low loudness and a sound leakage in a use process. Hereinafter, some published patent prior art is described which discloses further technological background for further contributing to the understanding of the present invention as described further below.

CN 108566606 A discloses a sound production device, and a portable terminal. The sound production device comprises a first vibration system, wherein the first vibration system comprises a skeleton voice coil, the skeleton voice coil is arranged on the inner side of a first diaphragm, the skeleton voice coil is fixedly connected with the first diaphragm, the skeleton voice coil comprises a skeleton, and a voice coil main body formed by twining a voice coil lead on the skeleton, and one end of the skeleton away from the first diaphragm at least partially protrudes from the voice coil main body;a second vibration system comprising a second diaphragm arranged to be opposite to the first diaphragm; and a magnetic circuit system arranged between the first diaphragm and the second diaphragm, wherein the magnetic circuit system is provided with an evasion portion; and one end of the skeleton away from the first diaphragm can movably penetrate through the evasion portion and is fixedly connected with the second diaphragm. According to the sound production device disclosed in this document, the volume occupied by a structure for realizing two-way sound production is small, so that the soundproduction device can be widely applied to portable terminals.

CN 113556655 A discloses an intelligent head-mounted device. The intelligent head-mounted device comprises a device shell and a loudspeaker module installed in the device shell, wherein the device shell is provided with a front sound outlet hole and a rear sound outlet hole; the loudspeaker module comprises a module shell and a loudspeaker individual; the module shell is provided therein with an installation space; the module shell is provided with a sound outlet hole and a sound leakage hole; the sound outlet hole is in communication with the front sound outlet hole; the sound leakage hole is in communication with the rear sound outlet hole; the loudspeaker individual is arranged in the installation space and comprises a vibrating diaphragm capable of vibrating to produce sound; an effective volume on a path from a first side of the vibrating diaphragm to the sound outlet hole forms a front sound cavity; an effective volume on a path from a second side of the vibrating diaphragm to the sound leakage hole forms a rear sound cavity; the volume of the front sound cavity and the volume of the rear sound cavity meet the relational expression that/is larger than or equal to and smaller than or equal to 5.

CN 112770232 A discloses a miniature loudspeaker comprising an upper shell, a lower shell covering the upper shell and a loudspeaker unit fixed between the upper shell and the lower shell, the upper shell is divided into a front sound cavity and a rear sound cavity through a vibrating diaphragm of the loudspeaker unit, and the upper shell is provided with a first sound outlet hole communicated with the front sound cavity. The upper shell is further provided with a second sound outlet hole, an inverted sound channel is arranged between the upper shell and the lower shell, one end of the inverted sound channel is communicated with the rear sound cavity, and the other end of the inverted sound channel is communicated to the second sound outlet hole; sound waves generated by the vibrating diaphragm which is forced to vibrate in the front vocal cavity are radiated to the outside through the front vocal cavity and the first sound outlet hole, and sound waves generated by the vibrating diaphragm in the rear vocal cavity are radiated to the outside through the rear vocal cavity, the inverted sound channel and the second sound outlet hole or then radiated to the outside through the first sound outlet hole.

US 2020/275189 A1 discloses a speaker comprising a frame; a first magnetic body and a second magnetic body each coupled to the frame and spaced apart by a predetermined distance from each other to form a gap, wherein the first magnetic body and the second magnetic body are arranged such that opposite polarities of the first magnetic body and the second magnetic body are provided at adjacent lateral positions; a first diaphragm; a second diaphragm; and a first voice coil plate having at least one voice coil wound on and coupled to the voice coil plate, the first voice coil plate being located in the gap between the opposite polarities of the first magnetic body and the second magnetic body, wherein the first voice coil plate is coupled to the first diaphragm and second diaphragm.

US 2004/136558 A1 discloses that in an electroacoustic transducer of the disclosure, a casing supports a diaphragm, a drive coil is provided on the diaphragm, a first magnetic structure has a first space in a center thereof provided within the casing such that a center axis penetrates the first space, and a second magnetic structure has a second space in a center thereof provided within the casing on a side opposed to the first magnetic structure with respect to the diaphragm, such that the center axis penetrates the second space. The first magnetic structure is oriented such that a magnetization direction thereof is parallel to the center axis. The second magnetic structure is oriented such that a magnetization direction thereof is opposite to the magnetization direction of the first magnetic structure.

### SUMMARY

The object of the present invention is to provide a speaker module according to any of appended independent claims 1 and 8 and an electronic device including the speaker module, wherein the speaker module and the electronic device are provided to have high loudness and can effectively suppress a sound leakage. This object is solved by the attached independent claims and further embodiments and improvements of the invention are listed in the attached dependent claims.

According to a first aspect according to the invention, the invention provides a speaker module, including a housing and a speaker, where the housing has mounting space, the speaker is fastened in the mounting space and divides the mounting space into first space and second space, and when the speaker works, a first sound wave is formed in the first space, and a second sound wave is formed in the second space, where the second sound wave and the first sound wave have equal amplitudes and opposite phases; the housing further has a first sound emitting hole and a second sound emitting hole that are disposed opposite to each other, the first sound emitting hole communicates with the first space, and the second sound emitting hole communicates with the second space; and
the housing further has a third sound emitting hole and an inverter cavity, one end of the inverter cavity communicates with the second space, the other end of the inverter cavity communicates with the third sound emitting hole, the inverter cavity is configured to form a third sound wave at the third sound emitting hole when the speaker works, a phase of the third sound wave is the same as a phase of the first sound wave, and the third sound wave is superposed with the first sound wave passing through the first sound emitting hole.

In this application, because the first sound wave and the second sound wave have the equal amplitudes and the opposite phases, the speaker module can form a dipole sound field. Because a sound emitting direction of the first sound emitting hole and a sound emitting direction of the second sound emitting hole are opposite directions, the sound field formed by the speaker module has an 8-shaped directional characteristic, and the first sound wave and the second sound wave form two effective listening areas near the speaker module. When the first sound wave and the second sound wave are transmitted to a far place, the first sound wave and the second sound wave with the equal amplitudes and the opposite phases cancel each other in a far field, to form a silence area and implement far-field silence. Therefore, the electronic device including the speaker module can implement near-field directional sound emitting, to improve loudness, and can further implement far-field silence, effectively suppress a sound leakage, and improve privacy.

In addition, because the speaker module is provided with the inverter cavity, when the speaker works, the inverter cavity forms the third sound wave at the third sound emitting hole, and the phase of the third sound wave is the same as the phase of the first sound wave. Therefore, the third sound wave and the first sound wave are superposed, so that a frequency response of the speaker module can be effectively improved, to improve a frequency response of the electronic device including the speaker module, and improve experience of a wearer. Because energy of the third sound wave is weak, impact of the third sound wave on the far field may be ignored.

In some possible implementations, a sound emitting direction of the third sound emitting hole is the same as a sound emitting direction of the first sound emitting hole, so that a superposition effect of the third sound wave and the first sound wave is better.

In some possible implementations, the third sound wave produces resonance in a frequency band range of 50 Hz to 200 Hz, to effectively improve a frequency response of the speaker module 30 in a low frequency band, to resolve a problem of an insufficient frequency response in a low frequency band.

According to one aspect of the invention, the speaker includes a base, a vibration assembly, and a magnetic circuit assembly; the base has an inner cavity; the magnetic circuit assembly is disposed in the inner cavity, and the magnetic circuit assembly has a magnetic gap; the vibration assembly includes a first diaphragm, a second diaphragm, and a voice coil, where the first diaphragm and the second diaphragm are respectively located on two opposite sides of the magnetic circuit assembly, circumferential edges of the first diaphragm and the second diaphragm are connected to the base, the voice coil is located inside the magnetic gap, and two opposite sides of the voice coil are respectively connected to the first diaphragm and the second diaphragm; and one of the first diaphragm and the second diaphragm faces the first space, and the other faces the second space.

It may be understood that the voice coil is located between the first diaphragm and the second diaphragm, passes through the magnetic gap of the magnetic circuit assembly, and is connected to the two diaphragms. When the voice coil is powered on, the voice coil is affected by a magnetic field force, and the voice coil generates a Lorentz force perpendicular to a plane direction of the first diaphragm, performs a movement of cutting a magnetic induction line in a direction perpendicular to the plane direction of the first diaphragm, and pushes the first diaphragm and the second diaphragm to move back and forth in the direction. In other words, when the voice coil is powered on, the voice coil, the first diaphragm, and the second diaphragm move in a same direction as a whole.

It may be understood that, there is a specific deviation in a processing and assembly process of the speaker. Therefore, a phenomenon like a specific leftward or rightward deflection or tilt occurs (that is, a polarization phenomenon occurs) in a movement process of the diaphragm. In addition, this polarization phenomenon becomes clearer as an amplitude of the diaphragm increases. When the polarization phenomenon occurs in the movement process of the diaphragm, the diaphragm may touch the magnetic circuit assembly. This results in collision and some noise. Generation of the noise may cause the diaphragm to fail to reach an expected specified value of the amplitude during actual operation. This affects loudness of a sound emitted by the speaker.

According to the speaker in this application, the voice coil is disposed between the first diaphragm and the second diaphragm, and is connected to the first diaphragm and the second diaphragm, so that the first diaphragm, the second diaphragm, and the voice coil form a moving whole. This ensures consistency of the first diaphragm, the second diaphragm, and the voice coil in a movement process, ensures symmetry of upper and lower vibration rigidities of the vibration assembly, improves vibration stability of the entire vibration assembly. In addition, this can more effectively mitigate the polarization phenomenon, improve vibration balance of the vibration assembly under a condition of a large amplitude, and avoid generation of noise due to a collision with the magnetic circuit assembly, so that the speaker can reach the expected specified value of the amplitude during actual operation. Loudness of the speaker is determined by a vibration area and an amplitude. In other words, under a condition of a same effective radiation area, the speaker in this application may achieve a larger amplitude on a premise of miniaturization, to obtain higher loudness, so that loudness of a speaker used in a small electronic device like a band or a reading pen is not limited by space, and user experience is improved.

In some possible implementations, the voice coil includes a first side part and a second side part that are disposed opposite to each other, both the first side part and the second side part are parallel to a central axis of the voice coil, the first side part is connected to the first diaphragm, and the second side part is connected to the second diaphragm. It may be understood that the voice coil is vertically disposed between the first diaphragm and the second diaphragm, and is connected to the first diaphragm and the second diaphragm, so that the voice coil has a smaller size in a width direction of the speaker. This is conductive to miniaturization of the speaker in terms of width and makes the speaker more suitable for a long-strip product, for example, an electronic device like a reading pen or a selfie stick.

In some possible implementations, the vibration assembly further includes a first connecting piece and a second connecting piece. The first connecting piece is connected to the first side part and the first diaphragm, and the second connecting piece is connected to the second side part and the second diaphragm. The first connecting piece and the second connecting piece are the same, and a material of the first connecting piece and the second connecting piece may be a hard material such as plastic or metal. It may be understood that the voice coil is indirectly connected to the first diaphragm and the second diaphragm through the first connecting piece and the second connecting piece, so that the voice coil is located at an optimal position of the magnetic gap to be subject to force, to ensure that the voice coil is optimally subject to force. In addition, the voice coil, the first diaphragm, and the second diaphragm form a vibration whole, to improve overall vibration rigidity of the vibration assembly and ensure overall vibration stability of the vibration assembly. In addition, connecting pieces (the first connecting piece and the second connecting piece) are disposed on two sides of the voice coil, so that the vibration assembly is structurally symmetrical relative to the two sides of the voice coil, to ensure that upper and lower vibration rigidities of the vibration assembly are symmetrical, and further improve the vibration stability of the vibration assembly.

In a possible implementation, the vibration assembly further includes a support piece. The support piece is disposed inside the voice coil. One end is connected to the first side part, and another end is connected to the second side part, to support between the first side part and the second side part. Because the voice coil is of a hollow structure, the voice coil is prone to deform in the movement process, and this affects vibration stability. In this application, the support piece is disposed inside the voice coil, to ensure rigidity of the voice coil, avoid deformation of the voice coil in the movement process, and ensure vibration stability of the vibration assembly.

In some possible implementations, the magnetic circuit assembly includes a first part and a second part, both the first part and the second part are magnetic, the first part and the second part are spaced from each other, and the magnetic gap is formed between the first part and the second part. It may be understood that, two opposite surfaces of the first part and the second part are magnetically opposite. The first part and the second part of the magnetic circuit assembly are spaced from each other to form the magnetic gap, so that the voice coil can be disposed between the first part and the second part. In this way, when the voice coil is powered on, due to effect of the magnetic field force, the voice coil can generate the Lorentz force and perform the movement of cutting the magnetic induction line.

According to said one aspect of the invention, the voice coil includes a first end face and a second end face that are disposed opposite to each other, both the first end face and the second end face are perpendicular to a central axis of the voice coil, the first end face is connected to the first diaphragm, and the second end face is connected to the second diaphragm. It may be understood that the voice coil is disposed in parallel between the first diaphragm and the second diaphragm relative to the first diaphragm and the second diaphragm, and is connected to the first diaphragm and the second diaphragm, so that the speaker can fully use space in a horizontal direction, and a thickness of the speaker is reduced. In this way, the speaker can be adapted to an electronic device with an ultra-thin body design, like a mobile phone or a tablet.

In a possible implementation, there are a plurality of voice coils, and the plurality of voice coils are arranged in a length direction of the speaker. It may be understood that, in terms of a size of the speaker provided in this application, a voice coil may be added based on a specific form of a product device, so that the size of the speaker is more suitable for the product, and equivalent performance is obtained in limited space of the device. In addition, a length-width ratio obtained when a wire winding length of the voice coil is excessively long causes a decrease in size precision of the voice coil. One voice coil is changed to a plurality of horizontally arranged voice coils, to improve a yield rate of the voice coil and reduce costs.

In some possible implementations, the magnetic gap extends in the length direction of the speaker, and the plurality of voice coils are arranged at intervals in the magnetic gap; or the speaker includes a plurality of magnetic gaps, the plurality of magnetic gaps are provided at intervals in the length direction of the speaker, and the plurality of voice coils are located inside the plurality of magnetic gaps in a one-to-one correspondence. The magnetic gap is arranged in the length direction of the speaker, so that the speaker can obtain equivalent performance in limited width space.

In some possible implementations, the vibration assembly further includes a connection line. The connection line is disposed on a surface that is of the first diaphragm or the second diaphragm and that is close to the voice coil. The connection line is electrically connected to the voice coil. It may be understood that the connection line is disposed in the vibration assembly, so that the voice coil is electrically connected to an external electrical component of the speaker.

In some possible implementations, the connection line is a flexible printed circuit board. In comparison with a conventional manner in which the speaker leads out a line through the voice coil to be electrically connected to a circuit board of an electronic device, in this application, the flexible printed circuit board is disposed to be electrically connected to the circuit board of the electronic device, to improve electrical stability of the speaker.

In some possible implementations, the connection line is a wire. A line led-out solution in which a copper wire is printed on a surface of the first diaphragm is used to replace the flexible printed circuit board, to reduce vibration mass of the vibration assembly and improve vibration performance of the vibration assembly.

In some possible implementations, the first diaphragm and the second diaphragm are symmetrically disposed relative to the magnetic circuit assembly. It may be understood that, when the first diaphragm and the second diaphragm are symmetrically disposed relative to the magnetic circuit assembly, because the first diaphragm and the second diaphragm are driven by a same voice coil, sound waves emitted by the first diaphragm and the second diaphragm to the speaker are equal in magnitude and opposite in phase (that is, a phase difference is 180°). In other words, the speaker in this case is a dipole speaker, and may form a dipole sound field. When the speaker emits a sound, two sounds with opposite phases are respectively emitted from the first diaphragm and the second diaphragm and transmitted to the outside of the speaker. According to a dipole principle, two sound waves cancel each other in a far field, to form a silence area and implement far-field silence. This effectively enhances far-field privacy of the electronic device, and resolves a sound leakage problem of the speaker.

According to another aspect of
the invention, the speaker includes a base, a vibration assembly, a first magnetic circuit assembly, and a second magnetic circuit assembly, the base has an inner cavity, the vibration assembly is disposed in the inner cavity, and the first magnetic circuit assembly and the second magnetic circuit assembly are respectively located on two sides of the vibration assembly and are symmetrically disposed relative to the vibration assembly;
the vibration assembly includes a diaphragm, a first voice coil, and a second voice coil, the diaphragm, the first voice coil, and the second voice coil are stacked in a first direction, the diaphragm includes a first surface and a second surface that are disposed opposite to each other in the first direction, and the diaphragm divides the inner cavity into a first sound cavity and a second sound cavity; the first voice coil is fastened to the first surface, and the second voice coil is fastened to the second surface; the first magnetic circuit assembly and the second magnetic circuit assembly are respectively located in the first sound cavity and the second sound cavity; and the first sound cavity communicates with the first space, and the second sound cavity communicates with the second space.

In this implementation, the diaphragm is fastened in the middle of the base, and the first voice coil, the second voice coil, the first magnetic circuit assembly, and the second magnetic circuit assembly are all symmetrically distributed on two sides of the diaphragm, so that the inner cavity of the base is divided to form the first sound cavity and the second sound cavity that are symmetrical to the diaphragm. In this way, sound wave transfer channels and air volumes enclosed on the two sides of the diaphragm are equal or approximately equal, and sound waves are affected by propagation channels almost equally during transmission. Therefore, the sound waves emitted from the two sides of the diaphragm are the same in loudness. Therefore, the sound waves are of equal intensity on the two sides of the diaphragm, so that two sound sources equal in magnitude and opposite in phase can be obtained. From a perspective at a long-distance fixed position in an environment, because positions of the two sound sources are close, it may be considered that distances of the fixed position relative to the two sound sources are approximately equal. The two sound sources generate two sound fields equal in magnitude and opposite in phase. Therefore, two sound waves equal in magnitude and opposite in phase are received at the fixed position. Based on a dipole superposition effect, the sound waves at the fixed position can cancel each other to a greatest extent. This mitigates a sound leakage problem in a use process of the speaker, protects user privacy, and improves user experience.

In some possible implementations, a projection of the first voice coil on the first surface is a ring, a height of the first voice coil in the first direction is a first height, a distance between the first magnetic circuit assembly and the first surface is a first distance, and the first height is greater than the first distance; and/or a projection of the second voice coil on the second surface is a ring, a height of the second voice coil in the first direction is a second height, a distance between the second magnetic circuit assembly and the second surface is a second distance, and the second height is greater than the second distance.

When the first voice coil and the second voice coil are powered on, current directions of the first voice coil and the second voice coil are the same. Due to an effect of a magnetic field force, directions of Lorentz forces that the first voice coil and the second voice coil are subject to are the same. The two voice coils generate Lorentz forces perpendicular to a plane direction (the first direction) of the diaphragm, namely, Lorentz forces in a thickness direction of the speaker, perform a movement of cutting the magnetic induction line in the thickness direction of the speaker, and push the diaphragm to move back and forth in the direction. The diaphragm moves back and forth to push air to vibrate and emit a sound. When the diaphragm vibrates downwards, air below the diaphragm is compressed due to a reduced air volume, and air above the diaphragm is expanded due to an increased air volume. Therefore, phases of sound waves generated on the upper and lower sides of the diaphragm are opposite (that is, a phase difference is 180°). In this implementation, both the first voice coil and the second voice coil are subject to forces in a same direction, so that the diaphragm is more easily driven to vibrate. This facilitates a vibration effect.

In some possible implementations, the first voice coil and the second voice coil are symmetrically disposed relative to the diaphragm, so that the sound wave transfer channels and the air volumes enclosed on the two sides of the diaphragm are equal to or approximately equal, and sound waves are affected by propagation channels almost equally during transmission. Therefore, the sound waves emitted from the two sides of the diaphragm are the same in loudness. This mitigates a sound leakage problem of the speaker greatly in a use process, protects user privacy, and improves user experience.

In some possible implementations, the first magnetic circuit assembly and the second magnetic circuit assembly are symmetrically disposed relative to the diaphragm, so that the sound wave transfer channels and the air volumes enclosed on the two sides of the diaphragm are equal or approximately equal, and sound waves are affected by propagation channels almost equally during transmission. Therefore, the sound waves emitted from the two sides of the diaphragm are the same in loudness. This mitigates a sound leakage problem of the speaker in a use process, protects user privacy, and improves user experience.

In some possible implementations, a vibration direction of the diaphragm is the first direction, to push air on the two sides of the diaphragm to emit a sound. In some possible implementations, the base includes a frame body, a first cover plate, and a second cover plate, the first cover plate and the second cover plate respectively cover two opposite sides of the frame body, the diaphragm is connected to inside of the frame body, the first magnetic circuit assembly and the second magnetic circuit assembly are respectively connected to the first cover plate and the second cover plate, the first cover plate includes a first sound outlet hole, the second cover plate includes a second sound outlet hole, and the first sound outlet hole and the second sound outlet hole are symmetrical relative to the diaphragm. In this way, during an acoustic response of the dipole, generation of a sound in a transverse direction relative to the thickness direction of the speaker is limited to a greatest extent (or a little sound in a transverse direction is generated in an actual system), and a superposition cancellation effect of the dipole is implemented to a greatest extent. This mitigates a sound leakage problem.

In some possible implementations, the first sound outlet hole includes a first hole and a second hole, and the first hole and the second hole are symmetrically disposed relative to the first cover plate, so that distances from sound waves generated on left and right sides of the vibration assembly to the first hole and the second hole are the same, and air damping on the left and right sides is the same. This improves vibration synchronization and stability of the vibration assembly.

In some possible implementations, the first magnetic circuit assembly includes a first gap, the second magnetic circuit assembly includes a second gap, the first gap and the second gap are symmetrically disposed relative to the diaphragm, the first voice coil extends at least partially into the first gap, and the second voice coil extends at least partially into the second gap, so that the second voice coil moves in the thickness direction of the speaker after being powered on.

According to a second aspect according to the invention, the invention further provides an electronic device, where the electronic device includes a housing and the speaker module according to any one of the foregoing implementations, the housing has a first sound output hole and a second sound output hole, the speaker module is mounted inside the housing, both the first sound emitting hole and the third sound emitting hole of the speaker module communicate with the first sound output hole, and the second sound emitting hole of the speaker module communicates with the second sound output hole. The electronic device can implement near-field directional sound emitting with a high frequency response, and can further implement far-field silence, to effectively suppress a sound leakage and improve privacy.

### BRIEF DESCRIPTION OF DRAWINGS

To describe the technical solutions in embodiments of this application or in the background, the following briefly describes the accompanying drawings for describing embodiments of this application or the background.
FIG. 1 is a diagram of a structure of an electronic device according to an embodiment of this application;
FIG. 2 is a diagram of a structure of a glasses temple of the electronic device shown in FIG. 1 in some embodiments;
FIG. 3 is a diagram of the electronic device shown in FIG. 1 in some use scenarios;
FIG. 4 is a diagram of an exploded structure of the glasses temple shown in FIG. 2;
FIG. 5 is a diagram of a partial cross-sectional structure of the glasses temple shown in FIG. 2 in an A-A direction;
FIG. 6 is a diagram of an internal structure of a speaker module shown in FIG. 5 in some embodiments;
FIG. 7 is a diagram of a structure of the speaker module shown in FIG. 6 from another angle;
FIG. 8 is a diagram of a sound wave scenario of the speaker module shown in FIG. 6;
FIG. 9 is a diagram of a sound wave of the electronic device shown in FIG. 1 in some use scenarios;
FIG. 10 is a diagram of comparison between a test result of the use scenario shown in FIG. 9 and a sound pressure curve in a conventional solution in an embodiment;
FIG. 11 is a diagram of comparison between a test result of the speaker module shown in FIG. 7 and a sound pressure curve in a conventional solution in an embodiment;
FIG. 12 is a diagram of a structure of the speaker shown in FIG. 6 in some embodiments;
FIG. 13 is a diagram of an exploded structure of the speaker shown in FIG. 12;
FIG. 14 is a diagram of a cross-sectional structure of the speaker shown in FIG. 12 in a B-B direction;
FIG. 15 is a diagram of a structure of a first cover plate of the speaker shown in FIG. 12 from another angle;
FIG. 16 is a diagram of a structure of a magnetic circuit assembly of the speaker shown in FIG. 12 in some embodiments;
FIG. 17 is a diagram of a structure of a vibration assembly of the speaker shown in FIG. 12 in some embodiments;
FIG. 18 is a diagram of a cross-sectional structure of the speaker shown in FIG. 12 in a C-C direction;
FIG. 19 is a diagram of a cross-sectional structure of the speaker shown in FIG. 12 in the C-C direction in another implementation;
FIG. 20 is a diagram of a cross-sectional structure of the speaker shown in FIG. 12 in the C-C direction in another implementation;
FIG. 21 is a diagram of a structure of the speaker shown in FIG. 6 in another embodiment;
FIG. 22 is a diagram of a cross-sectional structure of the speaker shown in FIG. 21 in a D-D direction;
FIG. 23 is a diagram of a structure of a partial structure of the speaker shown in FIG. 21;
FIG. 24 is a diagram of a cross-sectional structure of the speaker shown in FIG. 21 in an E-E direction;
FIG. 25 is a diagram of a structure of a partial structure of the speaker shown in FIG. 21 in some other embodiments;
FIG. 26 is a diagram of a cross-sectional structure of the speaker shown in FIG. 12 in a B-B direction in another embodiment;
FIG. 27 is a diagram of a structure of the speaker shown in FIG. 6 in another embodiment;
FIG. 28 is a schematic exploded view of a partial structure of the speaker shown in FIG. 27;
FIG. 29 is a diagram of a cross-sectional structure of the speaker shown in FIG. 27 in an F-F direction;
FIG. 30 is a diagram of a structure of a magnetic circuit assembly of the speaker shown in FIG. 27;
FIG. 31 is a diagram of a structure of a third connecting piece shown in FIG. 28;
FIG. 32 is a diagram of a structure of a speaker shown in FIG. 6 in some embodiments;
FIG. 33 is a diagram of an exploded structure of the speaker shown in FIG. 32;
FIG. 34 is a diagram of another exploded structure of the speaker shown in FIG. 32;
FIG. 35 is a diagram of a structure of a first basin stand of the speaker shown in FIG. 34 in some embodiments;
FIG. 36 is a diagram of a cross-sectional structure of the speaker shown in FIG. 32 in an I-I direction;
FIG. 37 is a diagram of a structure of a vibration assembly of the speaker shown in FIG. 32 in some embodiments;
FIG. 38 is a diagram of a cross-sectional structure of the speaker shown in FIG. 32 in a G-G direction;
FIG. 39 is a specific diagram of a dipole effect of the speaker shown in FIG. 32;
FIG. 40 is a simulation analysis diagram of sound field intensity at a first sound outlet hole and a second sound outlet hole of a conventional speaker;
FIG. 41 is a simulation analysis diagram of sound field intensity at a first sound outlet hole and a second sound outlet hole of a speaker according to this application;
FIG. 42 is a diagram of a structure of a first magnetic circuit assembly of the speaker shown in FIG. 32 in some embodiments;
FIG. 43 is a diagram of magnetic pole setting of a magnetic circuit assembly of the speaker shown in FIG. 32;
FIG. 44 is a diagram of a structure of the speaker shown in FIG. 6 in another embodiment;
FIG. 45 is a diagram of a cross-sectional structure of the speaker shown in FIG. 44 in an H-H direction;
FIG. 46 is a diagram of a structure of the speaker shown in FIG. 45 in another implementation;
FIG. 47 is a diagram of a structure of the speaker shown in FIG. 46 in another implementation;
FIG. 48 is a diagram of a structure of the speaker shown in FIG. 6 in another embodiment;
FIG. 49 is a diagram of a structure of the speaker shown in FIG. 6 in another implementation; and
FIG. 50 is a diagram of a structure of another electronic device according to an embodiment.

### DESCRIPTION OF EMBODIMENTS

The following describes embodiments of this application with reference to the accompanying drawings in embodiments of this application.

In the descriptions of embodiments of this application, it should be noted that terms "mount" and "connection" should be understood in a broad sense unless there is a clear stipulation and limitation. For example, "connection" may be a detachable connection, an un-detachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation and be constructed and operated in a specific orientation. Therefore, this cannot be understood as a limitation on embodiments of this application. "A plurality of" means at least two.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The terms "include", "have", and their variants all mean "include but are not limited to", unless otherwise specifically emphasized in another manner.

This application is described in detail in the following with reference to the accompanying drawings and embodiments.

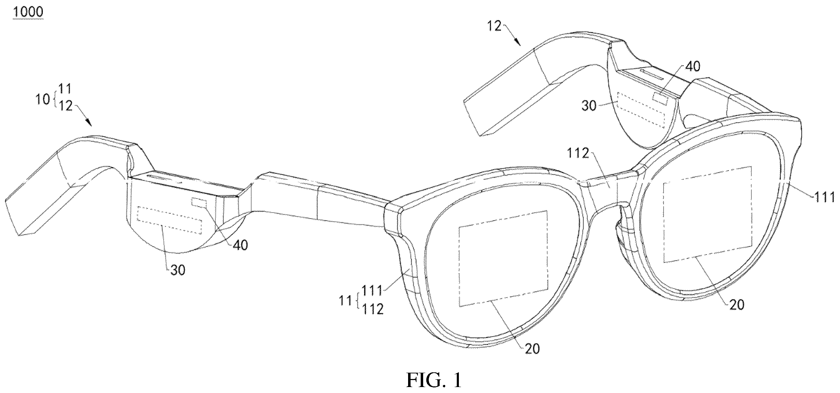

FIG. 1 is a diagram of a structure of an electronic device 1000 according to an embodiment of this application.

In some embodiments, the electronic device 1000 may be an electronic device 1000 that needs to output an audio by using a speaker, for example, a reading pen, a selfie stick, a band, a mobile phone, a smartwatch, augmented reality (augmented reality, AR) glasses, an AR helmet, or virtual reality (virtual reality, VR) glasses. In this application, an example in which the electronic device 1000 is AR glasses is used for specific description.

In this embodiment, the electronic device 1000 includes a frame 10, a display component 20, a speaker module 30, and a circuit board 40. The frame 10 is a housing of the electronic device 1000. The display component 20, the speaker module 30, and the circuit board 40 are all mounted on the frame 10. Both the display component 20 and the speaker module 30 are electrically connected to the circuit board 40, and the circuit board 40 is configured to: control the display component 20 to display and control the speaker module 30 to emit a sound.

For example, the frame 10 includes a rim 11 and glasses temples 12 connected to the rim 11. There are two glasses temples 12, and the two glasses temples 12 are connected to two opposite ends of the rim 11. It should be noted that, in some other embodiments, the frame 10 may include a rim 11 and a fastening strap connected to the rim 11. This is not specifically limited in this application.

For example, the rim 11 may include two frame bodies 111 and a beam 112 connected between the two frame bodies 111. Each of the two frame bodies 111 is provided with an accommodating cavity, to accommodate an electronic component of the electronic device 1000. The beam 112 and the two frame bodies 111 are integrally formed, to simplify a process of forming the rim 11, and increase overall strength of the rim 11. A material of the rim 11 includes but is not limited to metal, plastic, resin, or a natural material. It should be understood that the rim 11 is not limited to a full-rim frame shown in FIG. 1, or may be a half-rim frame or rimless frame.

For example, there are two display components 20, and structures of the two display components 20 are the same. Specifically, the two display components 20 are respectively mounted on the two frame bodies 111 of the rim 11. When the electronic device 1000 is worn on the head of a wearer, one display component 20 corresponds to a left eye of the wearer, and the other display component 20 corresponds to a right eye of the wearer. In this case, both eyes of the wearer may view a virtual scenario or a real scenario by using the two display components 20. It should be noted that in some other embodiments, structures of the two display components 20 may be different, or there may be one or more display components 20. This is not specifically limited in this application.

For example, the display component 20 is mounted on the frame body 111, and is electrically connected to the circuit board 40. In this embodiment, there may be two circuit boards 40 that may be mounted inside the glasses temples 12. The two circuit boards 40 are respectively located in the two glasses temples 12, and are electrically connected to the display components 20 corresponding to the two circuit boards 40. In some other embodiments, there may be one circuit board 40, and the circuit board 40 is located in one of the glasses temples 12. In some other embodiments, the circuit board 40 may be further mounted in the frame body 111 or another position.

For example, the two glasses temples 12 are rotatably connected to the two opposite ends of the rim 11. Specifically, the two glasses temples 12 are respectively rotatably connected to the two frame bodies 111 of the rim 11. When the electronic device 1000 is in an unfolded state (as shown in FIG. 1), the two glasses temples 12 are rotated relative to the rim 11 to be opposite to each other. In this case, the two glasses temples 12 of the electronic device 1000 may be respectively mounted on the two ears of the wearer, and the beam 112 is mounted on a nose bridge of the wearer, so that the electronic device 1000 is worn on the head of the user. When the electronic device 1000 is in a folded state, the two glasses temples 12 rotate relative to the rim 11 to at least partially overlap each other and be accommodated inside the rim 11. In this case, the electronic device 1000 may be accommodated.

It should be noted that orientation words such as "inside" and "outside" used when the electronic device 1000 is mentioned in this application are mainly described based on an orientation of the electronic device 1000 when the electronic device 1000 is worn by the wearer on the head. When the electronic device 1000 is worn by the wearer, a side close to the head of the wearer is the inside, and a side away from the head of the wearer is the outside. This does not constitute a limitation on an orientation of the electronic device 1000 in another scenario.

It may be understood that, in another embodiment, the two glasses temples 12 may be respectively fastened to the two frame bodies 111, or the two glasses temples 12 and the rim 11 may be integrally formed. In other words, the electronic device 1000 is always in the unfolded state. This is not specifically limited in this application.

It may be understood that the two glasses temples 12 in this embodiment have a same structure. The following uses one of the glasses temples 12 as an example to describe the structure of the glasses temple 12. Certainly, in some other embodiments, structures of the two glasses temples 12 may alternatively be different.

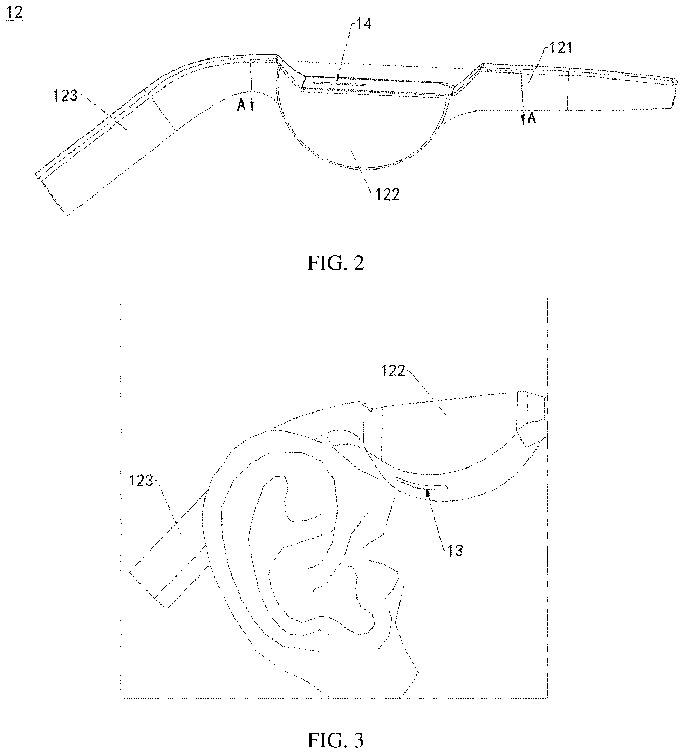

Refer to FIG. 2 and FIG. 3 together. FIG. 2 is a diagram of a structure of a glasses temple 12 of the electronic device 1000 shown in FIG. 1 in some embodiments, and FIG. 3 is a diagram of the electronic device 1000 shown in FIG. 1 in some usage scenarios.

In some embodiments, the glasses temple 12 may include a connection segment 121, a middle segment 122, and an earloop segment 123. The connection segment 121, the middle segment 122, and the earloop segment 123 are sequentially connected. A side that is of the connection segment 121 and that is far away from the middle segment 122 may be rotatably connected to the corresponding frame body 111, and the earloop segment 123 is configured to wear the glasses temple 12 above the ear of the wearer. The middle segment 122 is provided with an accommodating cavity and a first sound output hole 13 and a second sound output hole 14 that communicate with the accommodating cavity, and the first sound output hole 13 and the second sound output hole 14 may be disposed opposite to each other. The speaker module 30 may be mounted in the accommodating cavity, and a sound emitted by the speaker module 30 may be output to an outside of the accommodating cavity through the first sound output hole 13 and the second sound output hole 14.

A sound emitting direction of the first sound output hole 13 may face the ear of the wearer, and a sound emitting direction of the second sound output hole 14 may face away from the ear of the wearer. In this embodiment of this application, "a sound emitting direction of a hole" may be roughly understood as a propagation direction in which a sound passes through the hole. For example, sound emitting directions of the first sound output hole 13 and the second sound output hole 14 are opposite. In some other embodiments, the sound emitting directions of the first sound output hole 13 and the second sound output hole 14 may alternatively have an included angle.

For example, as shown in FIG. 2 and FIG. 3, the middle segment 122 may protrude downwards, a protruding part is close to an outer ear canal of the wearer, and the first sound output hole 13 is provided on the protruding part, so that the first sound output hole 13 may be closer to the ear of the wearer, and a sound emitted by the speaker module 30 directly enters the outer ear canal of the wearer after passing through the first sound output hole 13. The wearer can quickly hear the sound emitted by the speaker module 30. Certainly, in some other embodiments, the middle segment 122 may not protrude downwards. In some other embodiments, the speaker module 30 may be alternatively disposed at another position, for example, disposed at another position like the connection segment 121, the earloop segment 123, or the frame body 111.

In some embodiments, there are two speaker modules 30, and the two speaker modules 30 are respectively disposed on the two glasses temples 12. It may be understood that, in this embodiment, structures of the speaker modules 30 disposed in the two glasses temples 12 are the same. Certainly, in another embodiment, structures of the speaker modules 30 disposed in the two glasses temples 12 may alternatively be different.

For example, the circuit board 40 integrates a processor, a memory, and various other circuit components. The display component 20 and the speaker module 30 are coupled to the processor. The processor may include one or more processing units. For example, the processor may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The processor may generate an operation control signal based on instruction operation code and a time sequence signal to control instruction fetching and instruction executing.

An internal memory may be further disposed in the processor, and is configured to store instructions and data. In some embodiments, the memory in the processor may be a cache. The memory may store instructions or data that has been used or frequently used by the processor. If the processor needs to use the instructions or the data, the processor may directly invoke the instructions or the data from the memory. This avoids repeated access and reduces waiting time of the processor, thereby improving system efficiency.

In some embodiments, the processor may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a wearer identity module (subscriber identity module, SIM) interface, a universal serial bus (universal serial bus, USB) interface, and/or the like. The processor may be connected to a module like a touch sensor, a wireless communication module, a display, and a camera through at least one of the foregoing interfaces.

The memory may be configured to store computer-executable program code. The executable program code includes instructions. The memory may include a program storage area and a data storage area. The program storage area may store an operating system, an application required by at least one function (for example, a photographing function or a video recording function), and the like. The data storage area may store data (for example, image data or video data) created during use of the electronic device 1000, and the like. In addition, the memory may include a high-speed random access memory, and may further include a nonvolatile memory, for example, at least one magnetic disk storage device, a flash memory device, or a universal flash storage (universal flash storage, UFS).

The processor executes various function methods or data processing of the electronic device 1000 by running the instructions stored in the memory and/or the instructions stored in the memory disposed in the processor, for example, enabling the display component 20 to present a virtual reality picture, and enabling the speaker module 30 to emit a sound.

In this embodiment, when the wearer wears the AR glasses, the virtual reality picture may be transmitted to the two eyes of the wearer through the display component 20, and a sound emitted by the speaker module 30 can be transmitted to the outside of the electronic device 1000 through a sound emitting hole and be heard by the wearer, to implement an audio-visual function of the electronic device 1000.

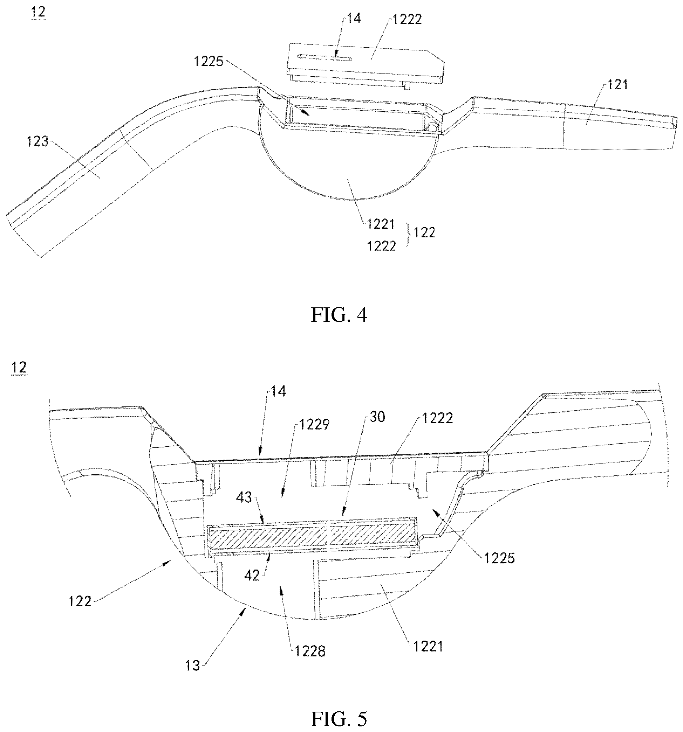

Refer to FIG. 4 and FIG. 5 together. FIG. 4 is a diagram of an exploded structure of the glasses temple 12 shown in FIG. 2. FIG. 5 is a diagram of a partial cross-sectional structure of the glasses temple 12 shown in FIG. 2 in an A-A direction.

In some embodiments, the middle segment 122 of the glasses temple 12 may include a carrier 1221 and a cover plate 1222. A cavity is formed inside the carrier 1221, the cavity forms an opening on a side of the carrier 1221, the cover plate 1222 is mounted on the opening, and the carrier 1221 and the cover plate 1222 jointly enclose an accommodating cavity 1225. In other words, the accommodating cavity 1225 includes two components, so that the speaker module 30 and another component are mounted in the accommodating cavity 1225. The cover plate 1222 may be detachably connected to the opening, to facilitate maintenance of a component in the accommodating cavity 1225. Certainly, in some other embodiments, the cover plate 1222 may alternatively be fastened to the opening in an un-detachable manner.

For example, the speaker module 30 is mounted in the accommodating cavity 1225, and divides the accommodating cavity 1225 into two independent channels. A channel located below the speaker module 30 is a first channel 1228, and a channel located above the speaker module 30 is a second channel 1229. The first sound output hole 13 communicates with the first channel 1228, and a second sound output hole 14 is disposed on the cover plate 1222 and communicates with the second channel 1229.

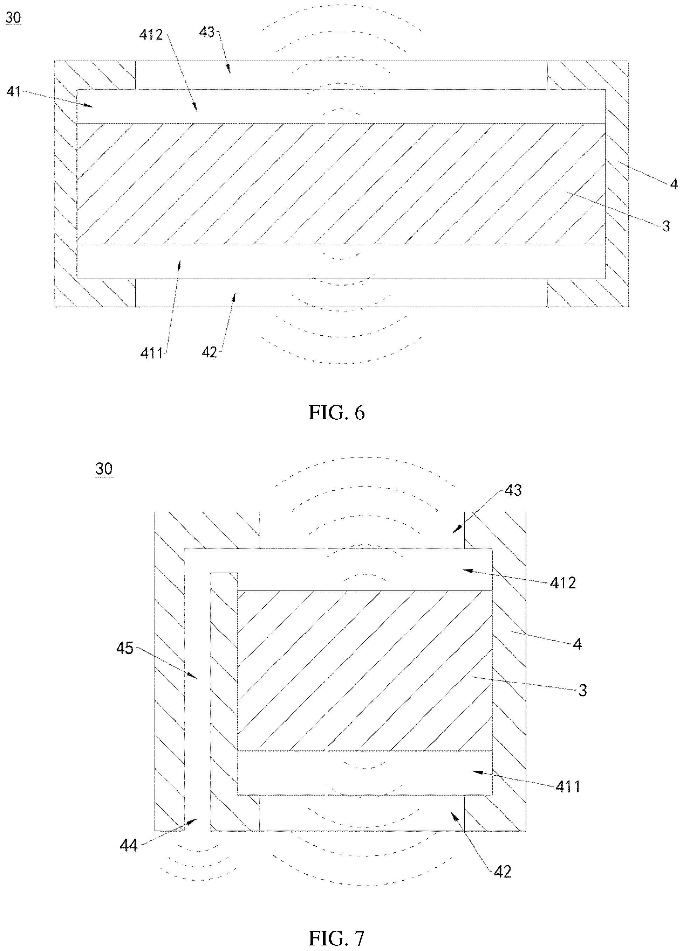

Refer to FIG. 6 and FIG. 7 together. FIG. 6 is a diagram of an internal structure of the speaker module 30 shown in FIG. 5 in some embodiments. FIG. 7 is a diagram of a structure of the speaker module 30 shown in FIG. 6 from another angle.

In some embodiments, the speaker module 30 includes a speaker 3 and a housing 4. The housing 4 has mounting space 41, and the speaker 3 is fastened in the mounting space 41, and divides the mounting space 41 into first space 411 and second space 412. When the speaker 3 works, a first sound wave is formed in the first space 411, and a second sound wave is formed in the second space 412, where the second sound wave and the first sound wave have equal amplitudes and opposite phases.

The housing 4 further has a first sound emitting hole 42 and a second sound emitting hole 43 that are disposed opposite to each other. The first sound emitting hole 42 communicates with the first space 411, and the first sound wave can be transmitted to the outside of the speaker module 30 through the first sound emitting hole 42, to emit a sound. The second sound emitting hole 43 communicates with the second space 412, and the second sound wave can be transmitted to the outside of the speaker module 30 through the second sound emitting hole 43, to emit a sound.

The housing 4 may further have a third sound emitting hole 44 and an inverter cavity 45, one end of the inverter cavity 45 communicates with the second space 412, the other end of the inverter cavity 45 communicates with the third sound emitting hole 44, the inverter cavity 45 is configured to form a third sound wave at the third sound emitting hole 44 when the speaker 3 works, a phase of the third sound wave is the same as a phase of the first sound wave, and the third sound wave is superposed with the first sound wave passing through the first sound emitting hole 42.

For example, a sound emitting direction of the third sound emitting hole 44 may be the same as a sound emitting direction of the first sound emitting hole 42, so that a superposition effect of the third sound wave and the first sound wave is better. In some other embodiments, the sound emitting direction of the third sound emitting hole 44 may not be the same as the sound emitting direction of the first sound emitting hole 42, for example, an angle is formed between the sound emitting direction of the third sound emitting hole 44 and the sound emitting direction of the first sound emitting hole 42, provided that the third sound wave and the first sound wave can be superimposed.

The inverter cavity 45 may be formed by internal space of an inverter tube, and the inverter tube is mounted with another part of the housing 4 in an assembly manner; or the housing 4 may not include the inverter tube, and the inverter cavity 45 is formed by a partial structure of the housing 4 through surrounding. A specific structure of the inverter cavity 45 is not strictly limited in this embodiment of this application.

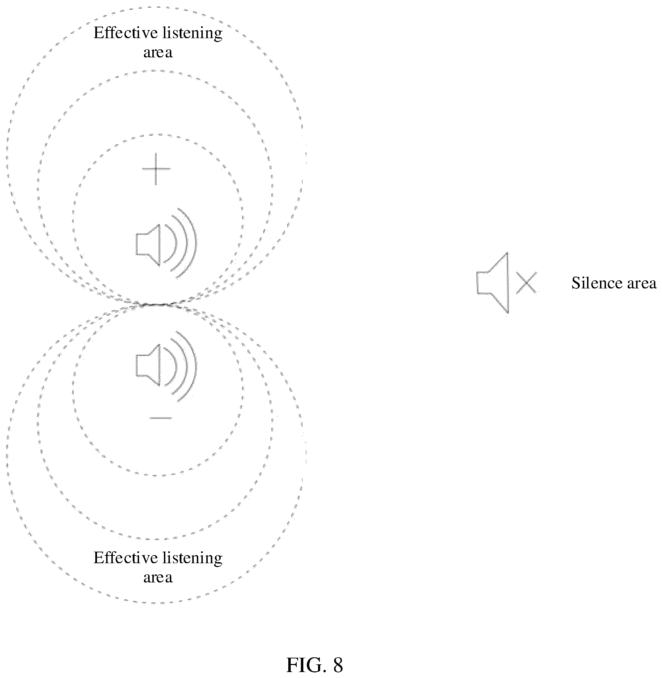

FIG. 8 is a diagram of a sound wave scenario of the speaker module 30 shown in FIG. 6.

In this embodiment, because the first sound wave and the second sound wave have the equal amplitudes and the opposite phases, the speaker module 30 can form a dipole sound field. Because a sound emitting direction of the first sound emitting hole 42 and a sound emitting direction of the second sound emitting hole 43 are opposite directions, the sound field formed by the speaker module 30 has an 8-shaped directional characteristic, and the first sound wave and the second sound wave form two effective listening areas near the speaker module 30. When the first sound wave and the second sound wave are transmitted to a far place, the first sound wave and the second sound wave with the equal amplitudes and the opposite phases cancel each other in a far field, to form a silence area and implement far-field silence. Therefore, the electronic device 1000 including the speaker module 30 can implement near-field directional sound emitting, to improve loudness, and can further implement far-field silence, effectively suppress a sound leakage, and improve privacy.

In addition, because the speaker module 30 is provided with the inverter cavity 45, when the speaker 3 works, the inverter cavity 45 forms the third sound wave at the third sound emitting hole 44, and the phase of the third sound wave is the same as the phase of the first sound wave. Therefore, the third sound wave and the first sound wave are superposed, so that a frequency response of the speaker module 30 can be effectively improved, to improve a frequency response of the electronic device 1000 including the speaker module 30, and improve experience of a wearer. Because energy of the third sound wave is weak, impact of the third sound wave on the far field may be ignored.

Refer to FIG. 5 to FIG. 7. The speaker module 30 is mounted inside the housing of the electronic device 1000, the first sound emitting hole 42 and the third sound emitting hole 44 of the speaker module 30 communicate with the first sound output hole 13 through the first channel 1228, and the second sound emitting hole 43 of the speaker module 30 communicates with the second sound output hole 14. When the speaker 3 of the speaker module 30 works, the first sound wave and the third sound wave are superimposed, and are emitted from the first sound output hole 13, and the second sound wave is emitted from the second sound output hole 14.

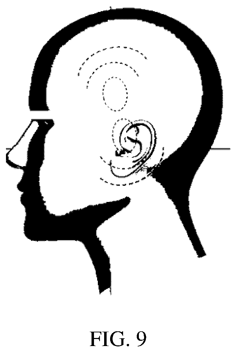

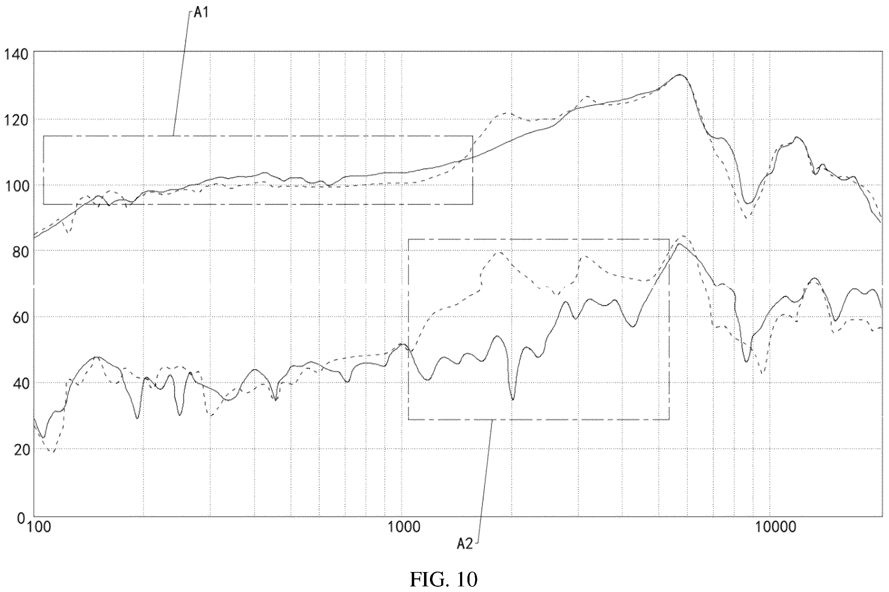

Refer to FIG. 3, FIG. 9, and FIG. 10. FIG. 9 is a diagram of a sound wave of the electronic device shown in FIG. 1 in some use scenarios. FIG. 10 is a diagram of comparison between a test result of the use scenario shown in FIG. 9 and a sound pressure curve in a conventional solution in an embodiment.

When the wearer wears the electronic device 1000 shown in FIG. 1, the first sound output hole 13 of the electronic device 1000 faces the ear of the wearer, and the second sound output hole 14 faces away from the ear of the wearer. The sound field formed by the speaker module 30 of the electronic device 1000 has an 8-shaped directional characteristic. The ear of the wearer is located in the effective listening area, and can receive the first sound wave and the third sound wave. A frequency response of a sound emitted by the speaker module 30 can meet a listening requirement of the wearer, and the wearer can obtain better in-ear loudness experience. This improves use experience of the wearer. In addition, the first sound wave and the second sound wave cancel each other in a far field, to form a silence area and implement far-field silence. This effectively improves far-field privacy of the electronic device 1000. In addition, for the wearer, there is a large difference between distances from the first sound output hole 13 and the second sound output hole 14 to the ear, and a condition of a sound dipole effect is not met. A sound wave cancellation degree is small. Therefore, the wearer can hear a sound with proper loudness. Therefore, the electronic device 1000 can implement high loudness and can effectively suppress a sound leakage.

In FIG. 10, a horizontal coordinate is a frequency in a unit of Hertz (Hz), and a vertical coordinate is sound pressure in a unit of dB. In FIG. 10, a solid line represents a solution in this embodiment of this application, and a dashed line represents a conventional solution. As shown in FIG. 10, a comparison between the solid line and the dashed line in a block A1 shows that a frequency response of a low frequency band lower than 1K Hz heard by the ear of the wearer is improved and is higher than that in the conventional solution. A comparison between the solid line and the dashed line in a block A2 shows that a frequency response in a medium and high frequency band from 1K Hz to 5K Hz at a far field position is lower than that in the conventional solution, and a sound leakage is small.

In some embodiments, the third sound wave produces resonance in a frequency band range of 50 Hz to 200 Hz. A size of the inverter cavity 45 may be designed, so that the inverter cavity 45 forms the third sound wave at the third sound emitting hole 44, and the third sound wave produces the resonance in the frequency band range of 50 Hz to 200 Hz, to effectively improve a frequency response of a low frequency band of the speaker module 30, to resolve a problem of an insufficient frequency response in a low frequency band. In addition, because a problem of a sound leakage of a conventional speaker module 30 in a far field is mainly formed in a medium and high frequency band, the inverter cavity 45 sets a resonance frequency band of the third sound wave to a low frequency band, so that the third sound wave essentially has no impact on a sound leakage phenomenon, and the impact may be ignored.

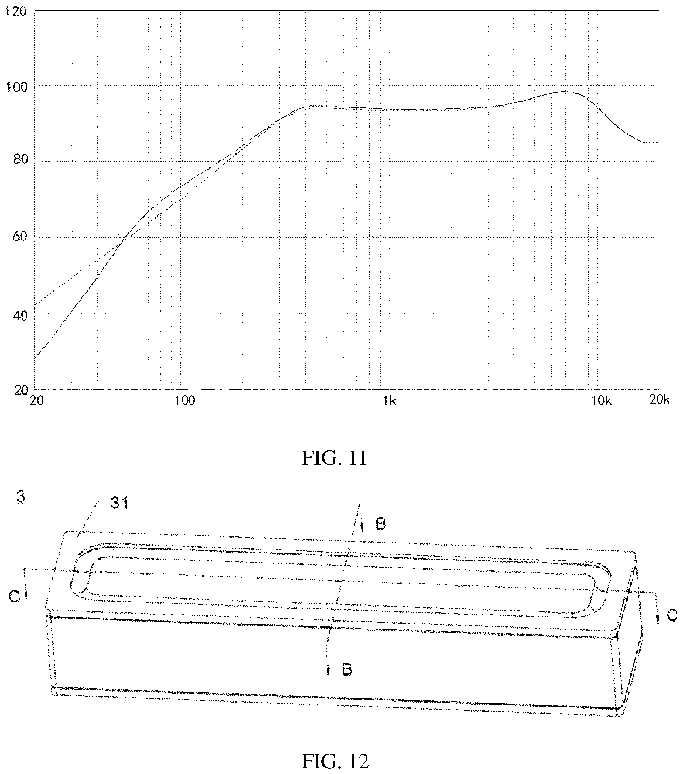

FIG. 11 is a diagram of comparison between a test result of the speaker module 30 shown in FIG. 7 and a sound pressure curve in a conventional solution in an embodiment.

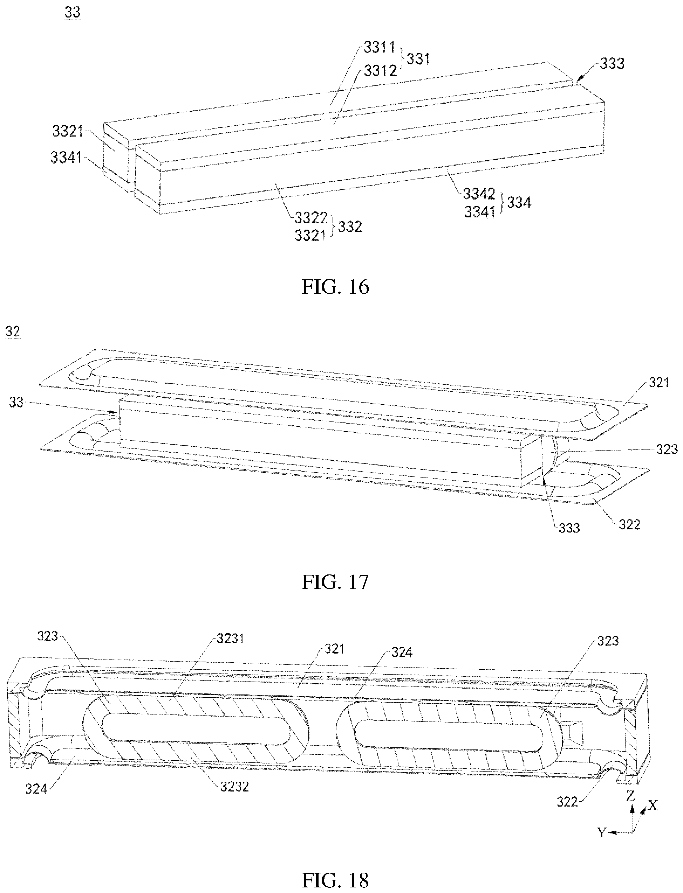

In FIG. 11, a horizontal coordinate is a frequency in a unit of Hertz (Hz), and a vertical coordinate is sound pressure in a unit of dB. In FIG. 11, a solid line represents a solution in this embodiment of this application, and a dashed line represents a conventional solution. As shown in FIG. 17, a frequency response of the speaker module 30 in a frequency band range of 50 Hz to 200 Hz is higher than that in a conventional solution.

For example, the inverter cavity 45 may be a linear cavity, or may be a curve cavity, for example, a snake-shape cavity or a curved-shape cavity, to meet a requirement for adjusting a resonance frequency of the third sound wave.

In this application, the speaker 3 of the speaker module 30 has a plurality of different embodiments. The following specifically describes some embodiments of the speaker 3.

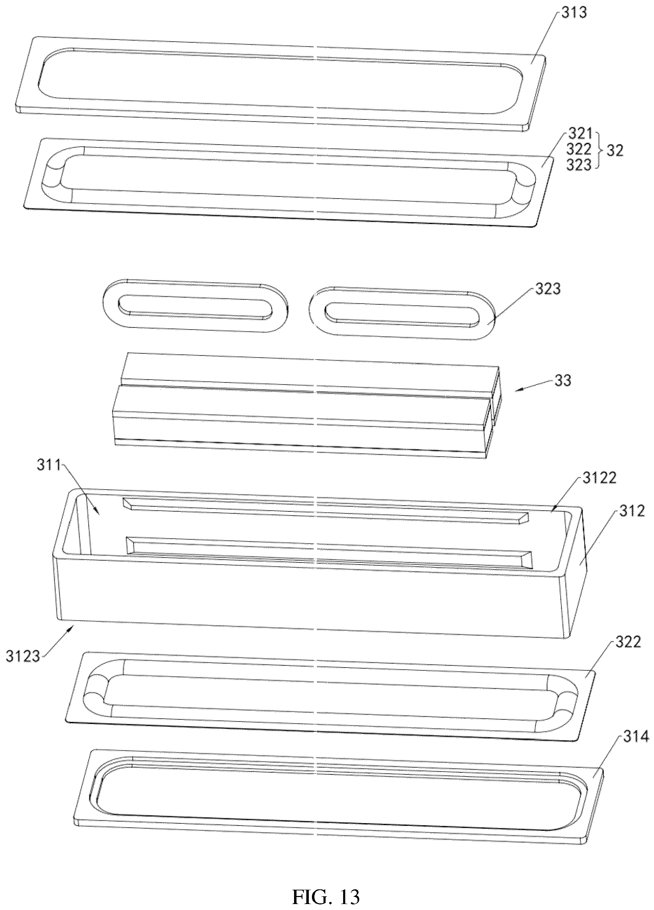

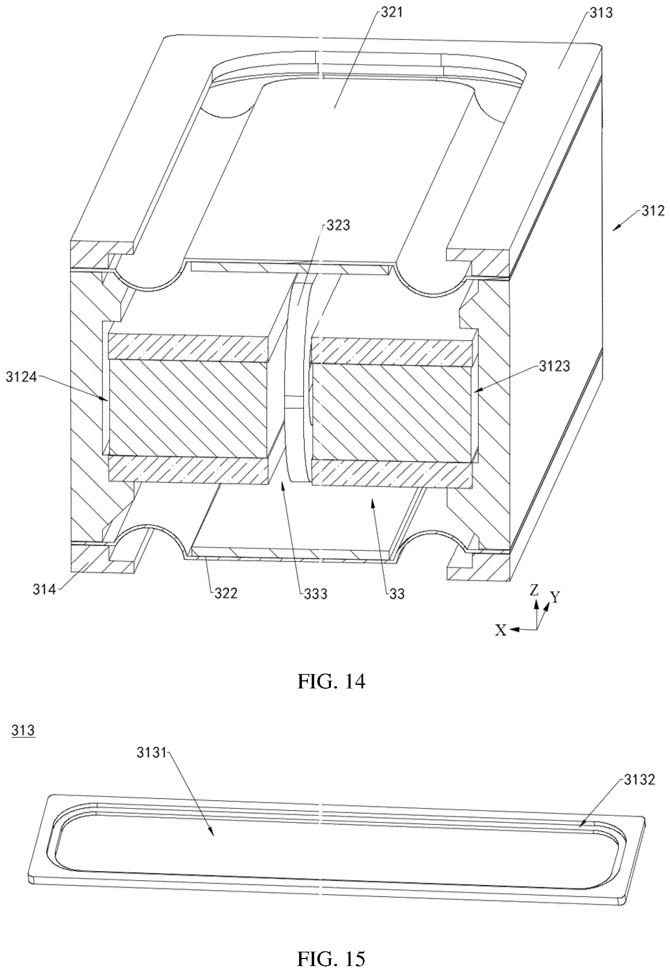

In an embodiment, refer to FIG. 12, FIG. 13, and FIG. 14. FIG. 12 is a diagram of a structure of the speaker 3 shown in FIG. 6 in some embodiments. FIG. 13 is a diagram of an exploded structure of the speaker 3 shown in FIG. 12. FIG. 14 is a diagram of a cross-sectional structure of the speaker 3 shown in FIG. 12 in a B-B direction. As shown in FIG. 14, a width direction of the speaker 3 is an X-axis direction, a length direction of the speaker 3 is a Y-axis direction, and a thickness direction of the speaker 3 is a Z-axis direction.

For example, the speaker 3 includes a base 31, a vibration assembly 32, and a magnetic circuit assembly 33. The base 31 has an inner cavity 311. The magnetic circuit assembly 33 is disposed in the inner cavity 311, and the magnetic circuit assembly 33 has a magnetic gap 333. The vibration assembly 32 includes a first diaphragm 321, a second diaphragm 322, and a voice coil 323. The first diaphragm 321 and the second diaphragm 322 are respectively located on two opposite sides of the magnetic circuit assembly 33. It may also be understood that the second diaphragm 322, the magnetic circuit assembly 33, and the first diaphragm 321 are sequentially stacked in the Z-axis direction of the speaker 3. Circumferential edges of the first diaphragm 321 and the second diaphragm 322 are connected to the base 31, the voice coil 323 is located inside the magnetic gap 333, and two opposite sides of the voice coil 323 are respectively connected to the first diaphragm 321 and the second diaphragm 322. A circumferential edge of the first diaphragm 321 (or the second diaphragm 322) may be completely connected to the base 31, or may be partially connected to the base 31.

It may be understood that, when the voice coil 323 is powered on, the voice coil 323 is affected by a magnetic field force, and the voice coil 323 generates a Lorentz force parallel to a first direction, performs a movement of cutting a magnetic induction line in the direction, and pushes the first diaphragm 321 and the second diaphragm 322 to move back and forth in the direction. The first direction is a direction perpendicular to the first diaphragm 321 and the second diaphragm 322. In other words, when the voice coil 323 is powered on, the voice coil 323, the first diaphragm 321, and the second diaphragm 322 move in a same direction as a whole, both the first diaphragm 321 and the second diaphragm 322 emit a sound, to generate the first sound wave and the second sound wave, and the first sound wave and the second sound wave have equal amplitudes and opposite phases. When amplitudes of the first sound wave and the second sound wave are close, it is also considered that the amplitudes of the first sound wave and the second sound wave are equal.

For example, when the speaker 3 is applied to the speaker module 30, one of the first diaphragm 321 and the second diaphragm 322 faces the first space 411, and the other faces the second space 412. In this embodiment, an example in which the first diaphragm 321 faces the first space 411, and the second diaphragm 322 faces the second space 412 is used for description. In this case, the first diaphragm 321 faces the first sound emitting hole 42, and the second diaphragm 322 faces the second sound emitting hole 43. When the first diaphragm 321 vibrates, a first sound wave is formed in the first space 411. When the second diaphragm vibrates, a second sound wave is formed in the second space 412. The second sound wave and the first sound wave have equal amplitudes and opposite phases.

It may be understood that, there is a specific deviation in a processing and assembly process of the speaker 3. Therefore, a phenomenon like a specific leftward or rightward deflection or tilt occurs (that is, a polarization phenomenon occurs) in a movement process of the diaphragm. In addition, this polarization phenomenon becomes more obvious as an amplitude of the diaphragm increases. When the polarization phenomenon occurs in the movement process of the diaphragm, the diaphragm may touch the magnetic circuit assembly, and rub against the magnetic circuit assembly and make some noise. Generation of the noise causes the diaphragm to fail to reach an expected amplitude specified value during actual operation, and affects sound loudness of the speaker 3.

For the speaker 3 in this embodiment, the two diaphragms (namely, the first diaphragm 321 and the second diaphragm 322) are respectively disposed on the two sides of the magnetic circuit assembly 33, the voice coil 323 is disposed in the magnetic gap 333 of the magnetic circuit assembly 33, and two sides of the voice coil 323 are respectively connected to the first diaphragm 321 and the second diaphragm 322. Through a voice-coil-and-double-diaphragm design that combines the voice coil 323 and the two diaphragms (321, 322), the first diaphragm 321, the second diaphragm 322 and the voice coil 323 have consistency during movement. This ensures symmetry of upper and lower vibration rigidities of the vibration assembly 32, improves vibration stability of the entire vibration assembly 32. In addition, this can more effectively mitigate the polarization phenomenon, improve vibration balance of the vibration assembly 32 under a condition of a large amplitude, and avoid generation of noise due to a collision with the magnetic circuit assembly 33, so that the speaker 3 can reach the expected specified value of the amplitude during actual operation. Loudness of the speaker 3 is determined by a vibration area and an amplitude. In other words, under a condition of a same effective radiation area, the speaker 3 in the voice-coil-and-double-diaphragm design may achieve a larger amplitude on a premise of miniaturization, to obtain higher loudness, so that loudness of a speaker 3 used in a small electronic device like a band or a reading pen is not limited by space, and wearer experience is improved.

In addition, because the voice-coil-and-double-diaphragm design improves vibration stability of the vibration assembly 32, the speaker 3 in this application can reach a larger specified value of the amplitude, and obtain higher loudness.

In addition, in this application, the first diaphragm 321 and the second diaphragm 322 are respectively located on the two opposite sides of the magnetic circuit assembly 33. In comparison with disposing the diaphragm outside the magnetic circuit assembly, this can effectively increase a vibration area of the speaker 3, improve utilization of the speaker 3 in limited space, and obtain higher loudness.

In some embodiments, as shown in FIG. 12 and FIG. 13, the base 31 is a substantially rectangular cylinder. The base 31 includes a frame body 312, a first cover plate 313, and a second cover plate 314. The frame body 312 is of a hollow structure with openings on two sides. The two openings of the frame body 312 are respectively a first opening 3122 and a second opening 3123. The first diaphragm 321 covers the first opening 3122 of the frame body 312. The first cover plate 313 fastens the first diaphragm 321 to the frame body 312. The second diaphragm 322 covers the second opening 3123 of the frame body 312. The second cover plate 314 fastens the second diaphragm 322 to the frame body 312. In other words, the first diaphragm 321 and the second diaphragm 322 respectively cover the two opposite sides of the frame body 312, to seal the inner cavity 311.

It may be understood that the base 31 includes three parts (namely, the frame body 312, the first cover plate 313, and the second cover plate 314), so that the first diaphragm 321 and the second diaphragm 322 are fastened to the frame body 312. This facilitates assembly of the speaker 3. In some other embodiments, a shape of the base 31 may alternatively be a cylindrical, a rectangular, special-shaped, or the like.

For example, as shown in FIG. 14, the frame body 312 may further include a first slot 3123 and a second slot 3124. The first slot 3123 and the second slot 3124 are respectively provided on two opposite side walls inside the frame body 312 in the length direction. The magnetic circuit assembly 33 is fastened inside the frame body 312, and the magnetic circuit assembly 33 may be limited inside the frame body 312 by using the first slot 3123 and the second slot 3124, so that the magnetic circuit assembly 33 is securely fastened to the frame body 312.

Certainly, in some other embodiments, the frame body 312 may alternatively not include the first slot and the second slot. The magnetic circuit assembly 33 may alternatively be fastened to the frame body 312 in a connection manner like bonding or bolting. The connection manner between the magnetic circuit assembly 33 and the frame body 312 is not limited in this application. Alternatively, the frame body 312 may further include a limiting structure other than the first slot and the second slot to limit the magnetic circuit assembly 33, where the magnetic circuit assembly 33 is fastened to the frame body 312.

In some other embodiments, a material of the frame body 312 may alternatively be a thermally conductive material. It may be understood that the inner cavity of the speaker 3 is sealed space. Because the voice coil 323 emits heat when moving, pressure of the inner cavity of the speaker 3 changes, and working performance is affected. The frame body 312 is manufactured by using the thermally conductive material, so that pressure inside the speaker 3 can be effectively balanced, and impact of the pressure change on the working performance of the speaker 3 is reduced.

It may be understood that, in a conventional speaker, because pressure inside the speaker changes with movement of a diaphragm, a hole needs to be drilled on a base, to relieve pressure and balance internal and external pressure. However, an opening-hole design of the base makes it likely to introduce impurities, water vapor, sweat, and the like into the speaker, which causes a magnet in a magnetic circuit assembly to be corroded, and causes a performance failure of the speaker. Therefore, some speakers may prevent impurities or water vapor from entering by adding, inside the speakers, a component like a dustproof mesh. This increases manufacturing costs of the speakers.

However, according to the speaker 3 in this embodiment, the voice-coil-and-double-diaphragm design is used, and the two diaphragms (the first diaphragm 321 and the second diaphragm 322) are connected to the same voice coil 323 and move in the same direction. Therefore, no pressure change occurs inside the speaker 3 due to movement of the diaphragm. In addition, because the pressure change caused by heating of the voice coil 323 is actually small, an internal pressure relief requirement of the speaker 3 may be met only by using the thermally conductive material to make the frame body 312. This avoids impurities and water vapor entering due to hole-drilling on the base 31, and effectively reduces protection costs while improving a dustproof capability of the speaker 3.

In some other embodiments, the material of the frame body 312 may alternatively not be the thermally conductive material. Alternatively, a thermally conductive material like a thermally conductive gel may be coated on a surface of the frame body 312 to form a thermally conductive coating, to dissipate heat inside the speaker 3 and relieve the pressure inside the speaker 3.

In some other embodiments, the frame body 312 may alternatively relieve the pressure inside the speaker 3 by drilling only a microhole. Because a diameter of the microhole is small, impact on dust prevention is small, and requirements for dust prevention and heat dissipation can be met at the same time. In some implementations, a hole wall of the microhole may be straight. In some other embodiments, the hole wall of the microhole may alternatively be curved, to effectively prevent impurities, water vapor, and the like from entering the inner cavity of the speaker 3.

In some embodiments, structures of the first cover plate 313 and the second cover plate 314 are the same. The following uses the first cover plate 313 as an example for specific description.

Refer to FIG. 14 and FIG. 15 together. FIG. 15 is a diagram of a structure of the first cover plate 313 of the speaker 3 shown in FIG. 12 from another angle.

In some embodiments, the first cover plate 313 may include a middle part and an edge part disposed around a periphery of the middle part. The edge part is fastened to a side that is of the first diaphragm 321 and that faces away from the frame body 312, to fasten the first diaphragm 321 to the frame body 312. The middle part is of a hollow structure 3131, and is used to avoid the first diaphragm 321, so that the first diaphragm 321 vibrates.

For example, the first cover plate 313 may further include an avoidance slot 3132. The avoidance slot 3132 is provided on a surface that is of the edge part and that faces the first diaphragm 321, and communicates with the hollow structure 3131. The avoidance slot 3132 is used to avoid the first diaphragm 321, so that the first diaphragm 321 vibrates. In some other embodiments, the first cover plate 313 may alternatively not include an avoidance groove, and a width of an edge part may be narrow enough to avoid obstructing vibration of the first diaphragm 321.

In some other embodiments, the base 31 may alternatively include only the frame body 312. In other words, the base 31 may not include the first cover plate and the second cover plate, and the first diaphragm 321 and the second diaphragm 322 may be directly fastened to the frame body 312 separately through bonding.

It may be understood that a connection manner between the second diaphragm 322 and the second cover plate 314 is the same as a connection manner between the first diaphragm 321 and the first cover plate 313. Details are not described herein again.

FIG. 16 is a diagram of a structure of the magnetic circuit assembly 33 of the speaker 3 shown in FIG. 12 in some embodiments.

In some embodiments, the magnetic circuit assembly 33 may include an upper clamping plate 331, a magnetic steel 332, and a lower clamping plate 334. In this embodiment, the upper clamping plate 331 is fastened to a side of the magnetic steel 332, and the lower clamping plate 334 is fastened to a side that is of the magnetic steel 332 and that faces away from the upper clamping plate 331. In other words, the upper clamping plate 331 and the lower clamping plate 334 are respectively disposed on two opposite sides of the magnetic steel 332. The upper clamping plate 331 and the lower clamping plate 334 may be respectively fastened to the two opposite sides of the magnetic steel 332 through bonding.

The upper clamping plate 331 includes a first upper clamping plate 3311 and a second upper clamping plate 3312 that are spaced from each other. The magnetic steel 332 includes a first sub-magnetic steel 3321 and a second sub-magnetic steel 3322 that are spaced from each other. The lower clamping plate 334 includes a first lower clamping plate 3341 and a second lower clamping plate 3342 that are spaced from each other. The first upper clamping plate 3311 and the first lower clamping plate 3341 are respectively fastened to two opposite sides of the first sub-magnetic steel 3321. The second upper clamping plate 3312 and the second lower clamping plate 3342 are respectively fastened to two opposite sides of the second sub-magnetic steel 3322.

It may be understood that the first upper clamping plate 3311 of the upper clamping plate 331, the first sub-magnetic steel 3321 of the magnetic steel 332, and the first lower clamping plate 3341 of the lower clamping plate 334 jointly form a first part of the magnetic circuit assembly 33. The second upper clamping plate 3312 of the upper clamping plate 331, the second sub-magnetic steel 3322 of the magnetic steel 332, and the second lower clamping plate 3342 of the lower clamping plate 334 jointly form a second part of the magnetic circuit assembly 33. Both the first part and the second part are mounted inside the frame body 312. The first part and the second part are spaced from each other. The magnetic gap 333 is formed between the first part and the second part.

Both the first part and the second part are magnetic, and two opposite surfaces of the first part and the second part are magnetically opposite. In other words, two opposite surfaces of the first sub-magnetic steel 3321 and the second sub-magnetic steel 3322 are magnetically opposite. For example, a part that is of the first sub-magnetic steel 3321 and that is close to the first upper clamping plate 3311 is an N pole, and a part that is of the first sub-magnetic steel 3321 and that is close to the first lower clamping plate 3341 is an S pole. Correspondingly, a part that is of the second sub-magnetic steel 3322 and that is close to the second upper clamping plate 3312 is the S pole, and a part that is of the second sub-magnetic steel 3322 and that is close to the second lower clamping plate 3342 is the N pole. Certainly, the part that is of the first sub-magnetic steel 3321 and that is close to the first upper clamping plate 3311 may alternatively be the S pole, and the part that is of the first sub-magnetic steel 3321 and that is close to the first lower clamping plate 3341 may alternatively be the N pole. Correspondingly, the part that is of the second sub-magnetic steel 3322 and that is close to the second upper clamping plate 3312 is the N pole, and the part that is of the second sub-magnetic steel 3322 and that is close to the second lower clamping plate 3342 is the S pole.

The first part may be mounted in the first slot 3123 of the frame body 312 through bonding, and the second part may be mounted in the second slot 3124 of the frame body 312 through bonding. It may be understood that the first slot 3123 and the second slot 3124 mainly limit the first part and the second part.

It may be understood that the magnetic circuit assembly 33 in this embodiment has two magnetic circuits (namely, the first part and the second part). The magnetic circuit assembly 33 and the voice coil 323 form a dual magnetic circuit structure of the magnetic circuit + the voice coil + the magnetic circuit in a horizontal direction. In comparison with a structure of three magnetic circuits or five magnetic circuits in a conventional speaker, the speaker 3 in this embodiment compresses, in the width direction, a size in the width direction by simplifying a magnetic circuit system, to adapt to a product form with a narrow width.

In some implementations, materials of the upper clamping plate 331 and the lower clamping plate 334 may alternatively be magnetically conductive materials, to enhance overall magnetic field intensity of the magnetic steel, so that a size of the magnetic steel 332 may be smaller under a condition of same magnetic field intensity. This is conductive to miniaturization of the entire speaker 3.

In some other embodiments, a connection manner between the first sub-magnetic steel 3321 and the first upper clamping plate 3311 and the first lower clamping plate 3341 may alternatively be a connection manner other than bonding. Alternatively, the materials of the upper clamping plate 331 and the lower clamping plate 334 may not be magnetically conductive materials. The connection manner and the materials of the magnetic steel 332, the upper clamping plate 331, and the lower clamping plate 334 are not limited in this application.

In some other embodiments, the magnetic circuit assembly 33 may alternatively include only the magnetic steel, and does not include the upper clamping plate or the lower clamping plate. Alternatively, the magnetic circuit assembly may alternatively include the magnetic steel 332 and one of the upper clamping plate 331 or the lower clamping plate 334.

Refer to FIG. 17 and FIG. 18 together. FIG. 17 is a diagram of a structure of the vibration assembly 32 of the speaker 3 shown in FIG. 12 in some embodiments. FIG. 18 is a diagram of a cross-sectional structure of the speaker 3 shown in FIG. 12 in a C-C direction.

In this embodiment, the voice coil 323 may include a first side part 3231 and a second side part 3232 that are disposed opposite to each other. It may be understood that when the voice coil 323 is powered on, a current circulates through the first side part 3231, the second side part 3232, the first side part 3231, and the second side part 3232. Both the first side part 3231 and the second side part 3232 are parallel to a central axis of the voice coil 323. The first side part 3231 is connected to the first diaphragm 321, and the second side part 3232 is connected to the second diaphragm 322. In other words, the voice coil 323 is vertically disposed relative to the first diaphragm 321 and the second diaphragm 322, so that the voice coil 323 has a smaller size in the width direction of the speaker 3. This is conductive to miniaturization of the speaker 3 in terms of width and enables the speaker 3 to be more suitable for a long-strip product. For example, when the speaker 3 in this embodiment is used in a conventional thick reading pen, a width of the reading pen can be effectively reduced, so that a size of the reading pen is closer to a size of a conventional sign pen.

For example, there may be two voice coils 323 of the vibration assembly 32. The magnetic gap 333 extends in the length direction of the speaker 3. The two voice coils 323 are horizontally arranged and spaced from each other in the magnetic gap 333 in the length direction of the speaker 3, and shapes of the two voice coils 323 are completely the same. The length direction of the speaker 3 is a Y-axis direction in FIG. 18. The first side parts 3231 of the two voice coils 323 are both connected to the first diaphragm 321, and second side parts 3232 of the two voice coils 323 are both connected to the second diaphragm 322. In other words, the two voice coils 323, the first diaphragm 321, and the second diaphragm 322 form a vibration whole. When the voice coils 323 are powered on, the two voice coils 323 are both subject to a Lorentz force in a same direction, and both push the first diaphragm 321 and the second diaphragm 322 to move back and forth.

It may be understood that a horizontally-arranged-double-voice-coil design may fully utilize space in the length direction of the speaker 3. In addition, when only one voice coil is disposed under a condition of same space in the length direction, because a length-width ratio obtained when a wire winding length of the voice coil is excessively long causes a decrease in size precision of the voice coil, a force on the voice coil during a vibration process is unbalanced, and the polarization phenomenon occurs. In the double-voice-coil design, a plurality of voice coils 323 with a more appropriate length-width ratio may be designed with reference to an actual length of the speaker 3 to form a vibration whole, to improve stability of the vibration assembly 32 in the vibration process, and improve a yield rate of the voice coil 323.

In some other embodiments, there may alternatively be one or more voice coils 323 of the vibration assembly 32. The plurality of voice coils 323 are arranged at intervals in the magnetic gap 333. Shapes of the plurality of voice coils 323 may be completely the same or may be different. A specific quantity of voice coils 323 and a specific shape of the voice coil 323 are not limited in this application.

Refer to FIG. 14 and FIG. 17 again. In some embodiments, the first diaphragm 321 and the second diaphragm 322 may be alternatively symmetrically disposed relative to the magnetic circuit assembly 33. Because the first diaphragm 321 and the second diaphragm 322 are driven by a same voice coil 323, and are symmetrically disposed relative to the magnetic circuit assembly 33, vibration consistency between the first diaphragm 321 and the second diaphragm 322 is better, and sound waves (namely, the first sound wave and the second sound wave) emitted by the first diaphragm 321 and the second diaphragm 322 have opposite phases (that is, a phase difference is 180°) and equal amplitudes. In other words, the speaker 3 in this case is a dipole speaker, and may form a dipole sound field.

When the speaker 3 emits a sound, two sounds with opposite phases and equal amplitudes are respectively emitted from the first diaphragm 321 and the second diaphragm 322 and transmitted to the outside of the speaker 3. For example, a sound emitted from the first diaphragm 321 is emitted to the outside of the glasses temple 12 through the first channel 1228 from the first sound output hole 13, and a sound emitted from the second diaphragm 322 is emitted to the outside of the glasses temple 12 through the second channel 1229 from the second sound output hole 14.

In this embodiment, there is an 8-shaped directional characteristic around the first diaphragm 321 and the second diaphragm 322. According to a dipole principle, when a human ear is in an effective listening area, and it is ensured that the first diaphragm 321 and the second diaphragm 322 have low loudness, a hearing requirement of the wearer can be met. When a sound is transmitted to a far place, two sound waves with equal amplitudes and opposite phases cancel each other in the far field, to form a silence area, and implement far-field silence. In addition, because of the voice-coil-and-double-diaphragm design of the speaker 3 in this embodiment, the diaphragm may have a larger diaphragm, and higher loudness is provided.

In some embodiments, as shown in FIG. 18, edges of the first diaphragm 321 and the second diaphragm 322 may further include folded ring parts. The folded ring part is designed in a semicircular arc shape, and is used to increase displacement in a vibration direction. In actual use, another effective means of increasing displacement may be used. For example, the folded ring part is designed in an elliptical manner, or the first diaphragm 321/second diaphragm 322 is made of a material with a high elastic modulus. Certainly, in some other embodiments, the first diaphragm 321 or the second diaphragm 322 may alternatively not include the folded ring part. Shapes of the first diaphragm 321 and the second diaphragm 322 are not limited in this application.

In some embodiments, as shown in FIG. 18, the vibration assembly 32 may further include a dome 324, and there may be two domes 324. The two domes 324 respectively cover surfaces that are of the first diaphragm 321 and the second diaphragm 322 and that are close to the voice coil 323, to increase rigidity of the first diaphragm 321 and the second diaphragm 322. It may be understood that the dome 324 is an additional component of the vibration assembly 32. Certainly, the two domes 324 may further separately cover surfaces that are of the first diaphragm 321 and the second diaphragm 322 and that are away from the voice coil 323.

In some other embodiments, the dome 324 may alternatively cover only a surface of the first diaphragm 321 or the second diaphragm 322 to increase rigidity, for example, cover a surface that is of the first diaphragm 321 and that is close to or away from the voice coil 323.

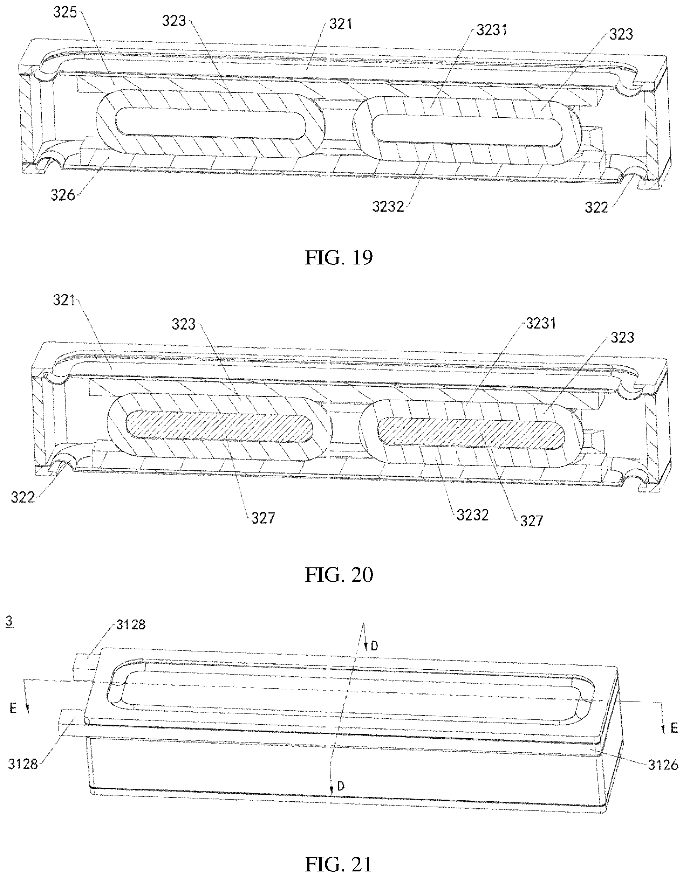

FIG. 19 is a diagram of a cross-sectional structure of the speaker 3 shown in FIG. 12 in the C-C direction in another implementation.

A structure of this embodiment is roughly the same as the structure of the embodiment shown in FIG. 18, and a same part is not described again. A difference lies in that in this embodiment, the vibration assembly 32 may further include a first connecting piece 325 and a second connecting piece 326. Shapes of the first connecting piece 325 and the second connecting piece 326 are the same, and materials may be hard materials, such as plastic or metal. A side of the first connecting piece 325 is connected to the first diaphragm 321, and another side that is of the first connecting piece 325 and that is away from the first diaphragm 321 is connected to first side parts 3231 of the two voice coils 323. A side of the second connecting piece 326 is connected to the second diaphragm 322, and another side that is of the second connecting piece 326 and that is away from the second diaphragm 322 is connected to second side parts 3232 of the voice coils 323. In other words, the two voice coils 323 are respectively connected to the first diaphragm 321 and the second diaphragm 322 by using the first connecting piece 325 and the second connecting piece 326, so that the voice coil 323 is located at an optimal position of the magnetic gap to be subject to a force, to ensure that the voice coil 323 is optimally subject to a force.

In addition, the two voice coils 323 are respectively connected to the first diaphragm 321 and the second diaphragm 322 by using the first connecting piece 325 and the second connecting piece 326, to form a vibration whole, to avoid that when the two voice coils 323 move together, due to a process error, movements of the two voice coils 323 cannot be completely consistent, which causes unbalanced force on the left and right of the diaphragm, and affects vibration stability of the vibration assembly 32. In addition, the first connecting piece 325 and the second connecting piece 326 are respectively connected to the two voice coils 323 and the corresponding diaphragms, to increase rigidity between the voice coil 323 and the diaphragm, and improve vibration stability of the vibration assembly 32.

In addition, the connecting pieces (the first connecting piece 325 or the second connecting piece 326) are disposed on the two sides of the voice coil 323. This ensures that the vibration assembly 32 is structurally symmetrical relative to the two sides of the voice coil 323, so that upper and lower vibration rigidities of the vibration assembly 32 are symmetrical, to further improve vibration stability of the vibration assembly 32.

In some other embodiments, only one connecting piece may alternatively be disposed on the vibration assembly 32. The connecting piece is connected between the voice coil and the first diaphragm, or the connecting piece is connected between the voice coil and the second diaphragm. A specific quantity of connecting pieces and a shape of the connecting piece are not limited in this application. In some other embodiments, shapes of the first connecting piece 325 and the second connecting piece 326 may alternatively be different.

FIG. 20 is a diagram of a cross-sectional structure of the speaker 3 shown in FIG. 12 in the C-C direction in another implementation.

A structure of this embodiment is roughly the same as the structure of the embodiment shown in FIG. 19, and a same part is not described again. A difference lies in that in this embodiment, the vibration assembly 32 may further include a supporting piece 327. There may be two supporting pieces 327. The two supporting pieces 327 are respectively disposed inside the two voice coils 323 of the vibration assembly 32. One end is connected to the first side part 3231, and another end is connected to the second side part 3232, to support the two supporting pieces between the first side part 3231 and the second side part 3232 of the voice coil 323. In some other embodiments, there may be one or more supporting pieces, or a plurality of supporting pieces may alternatively be disposed in one voice coil.

It may be understood that, because the voice coil 323 is of a hollow structure, when the voice coil 323 is powered on, the voice coil 323 performs the movement of cutting the magnetic induction line with the Lorentz force and drives the first diaphragm 321 and the second diaphragm 322 to vibrate, the voice coil 323 is prone to deform in the vibration direction (the first direction), which affects vibration stability of the vibration assembly 32 and reduces working performance of the vibration assembly 32. In this embodiment, the supporting pieces 327 are disposed inside the voice coil 323, to improve rigidity of the voice coil 323, and improve a deformation phenomenon of the voice coil 323 in the first direction in a vibration process, to reduce a performance loss caused by deformation in the vibration process, and improve working efficiency of the speaker 3.

In some other embodiments, the voice coil 323 may alternatively be wound around the supporting piece 327, to enhance rigidity of the voice coil 323 and improve deformation. A material of the supporting piece 327 may be a hard material, for example, a material like metal or liquid crystal polymer (Liquid Crystal Polymer, LPC). The material of the supporting piece 327 and a connection manner between the supporting piece 327 and the voice coil 323 are not limited in this application.

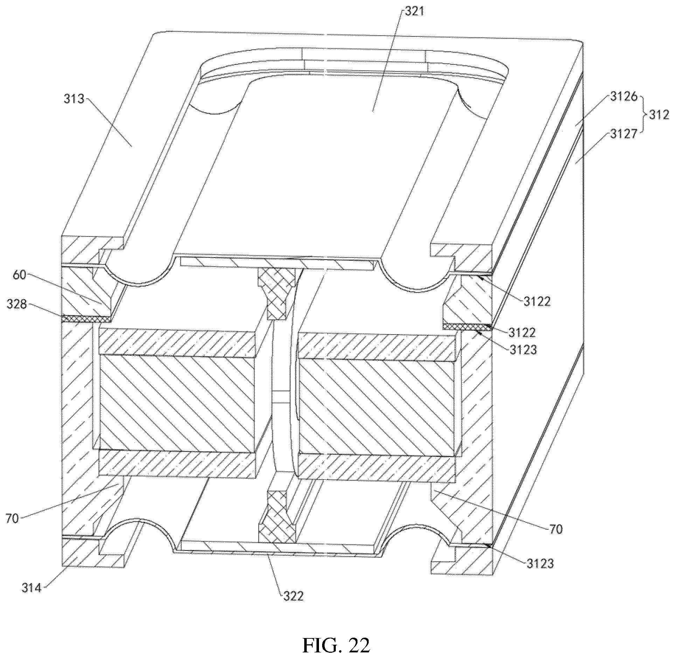

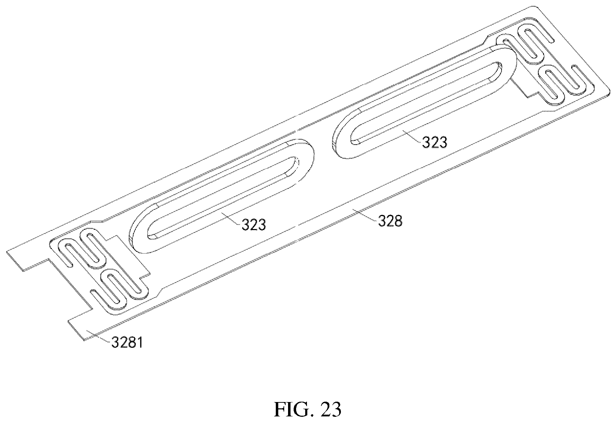

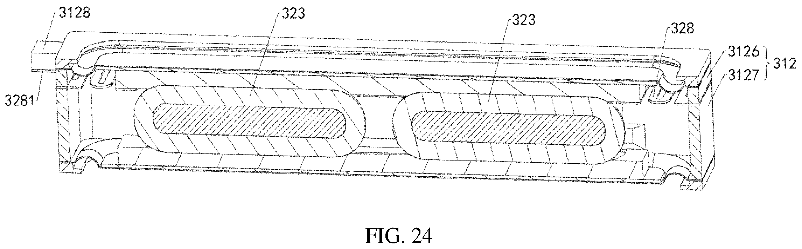

Refer to FIG. 21 to FIG. 24. FIG. 21 is a diagram of a structure of the speaker 3 shown in FIG. 6 in another embodiment. FIG. 22 is a diagram of a cross-sectional structure of the speaker 3 shown in FIG. 21 in a D-D direction. FIG. 23 is a diagram of a structure of a partial structure of the speaker 3 shown in FIG. 21. FIG. 24 is a diagram of a cross-sectional structure of the speaker 3 shown in FIG. 21 in an E-E direction.

A structure of this embodiment is roughly the same as the structure of the embodiment shown in FIG. 20, and a same part is not described again. A difference lies in that in this embodiment, the frame body 312 may further include a first basin stand 3126 and a second basin stand 3127, and both the first basin stand 3126 and the second basin stand 3127 are of hollow structures with openings on two sides. The first basin stand 3126 and the second basin stand 3127 are stacked to form the frame body 312.

In some implementations, openings on two sides of the first basin stand 3126 are both first openings 3122, and openings on two sides of the second basin stand 3127 are both second openings 3123. When the first basin stand 3126 and the second basin stand 3127 are stacked, one first opening 3122 of the first basin stand 3126 is butt-connected to one second opening 3123 of the second basin stand 3127, so that space enclosed by the first basin stand 3126 and the second basin stand 3127 communicate.

The first diaphragm 321 covers a first opening 3122 that is of the first basin stand 3126 and that faces away from the second basin stand 3127, and the first cover plate 313 fastens the first diaphragm 321 to the first basin stand 3126. The second diaphragm 322 covers a second opening 3123 that is of the second basin stand 3127 and that faces away from the first basin stand 3126, and the second cover plate 314 fastens the second diaphragm 322 to the second basin stand 3127. In this embodiment, the foregoing components are all fastened to each other through bonding. Certainly, in another embodiment, the foregoing components may alternatively be connected in another connection manner like clamping, welding, or bolting.

It may be understood that, according to the speaker 3 in this application, the first basin stand 3126 and the second basin stand 3127 are disposed, and the first basin stand 3126 and the second basin stand 3127 are connected to form the frame body 312, to facilitate assembly of the magnetic circuit assembly 33 and internal components of another speaker 3.

In this embodiment, as shown in FIG. 22, the first basin stand 3126 may further include a first limiting block 60. The first limiting block 60 is disposed on an inner wall of the first basin stand 3126. The second basin stand 3127 may further include a second limiting block 70. The second limiting block 70 is disposed on an inner wall of the second basin stand 3127 and is disposed opposite to the first limiting block 60. The magnetic circuit assembly 33 is fastened inside the frame body 312. For example, the magnetic circuit assembly 33 may be limited inside the frame body 312 by using the first limiting block 60 and the second limiting block 70, so that the magnetic circuit assembly 33 is securely fastened to the frame body 312.

Certainly, in some other embodiments, the first basin stand 3126 may alternatively not include the first limiting block, and the second basin stand 3127 may not include the second limiting block. The magnetic circuit assembly 33 may alternatively be fastened to the frame body 312 in a connection manner like bonding or bolting. The connection manner between the magnetic circuit assembly 33 and the frame body 312 is not limited in this application. Alternatively, the frame body 312 may further include a limiting structure other than the first limiting block and the second limiting block to limit the magnetic circuit assembly 33 to be fastened to the frame body 312.

In this embodiment, as shown in FIG. 21, an extension segment 3128 is further disposed on the first basin stand 3126. In this embodiment, there are two extension segments 3128, and the two extension segments 3128 are spaced from each other on a side of the first basin stand 3126. The two extension segments 3128 are configured to carry another component of the speaker 3. Certainly, in another embodiment, there may alternatively be one or more extension segments 3128. Alternatively, no extension segment may be disposed on the first basin stand 3126.

As shown in FIG. 22 to FIG. 24, the vibration assembly 32 further includes a connection line. In this embodiment, the connection line is a flexible printed circuit (Flexible Printed Circuit, FPC) board 328. The flexible printed circuit board 328 is of an annular structure. The flexible printed circuit board 328 includes an inner side and an outer side. The inner side is electrically connected to the voice coil 323. A part of the outer side is fastened to a joint between the first basin stand 3126 and the second basin stand 3127 through bonding. In other words, the flexible printed circuit board 328 is clamped between the first basin stand 3126 and the second basin stand 3127, to facilitate assembly of the flexible printed circuit board 328. In comparison with a conventional manner in which the speaker leads out a line through the voice coil to be electrically connected to a circuit board of an electronic device, in this application, the flexible printed circuit board 328 is disposed to be electrically connected to the circuit board 40 of the electronic device 1000, to improve electrical stability of the speaker 3.

As shown in FIG. 21, FIG. 23, and FIG. 24, the flexible printed circuit board 328 further includes two elongation segments 3281, and the two elongation segments 3281 cover surfaces that are of the two extension segments 3128 of the first basin stand 3126 and that face a side of the second basin stand 3127. The two elongation segments 3281 are configured to be electrically connected to an external circuit, for example, may be configured to be electrically connected to the circuit board 40 of the electronic device 1000.

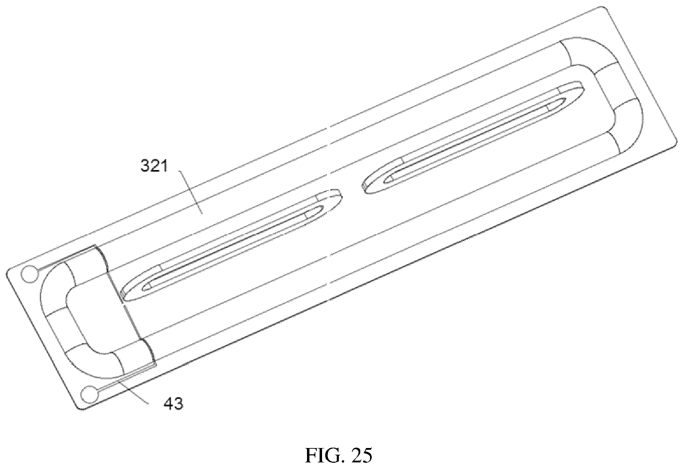

FIG. 25 is a diagram of a structure of a partial structure of the speaker 3 shown in FIG. 21 in some other embodiments.

In some embodiments, the connection line may alternatively be a conducting wire. For example, a line led-out solution in which a copper wire 43 is printed on a surface of the first diaphragm 321 may be used to replace the flexible printed circuit board, to reduce vibration mass of the vibration assembly 32 and improve vibration performance of the vibration assembly 32. Certainly, in some other embodiments, a line may be etched on the first diaphragm 321 to serve as a line led-out solution, or the connection line is disposed on the second diaphragm 322. The line led-out solution is not limited in this application

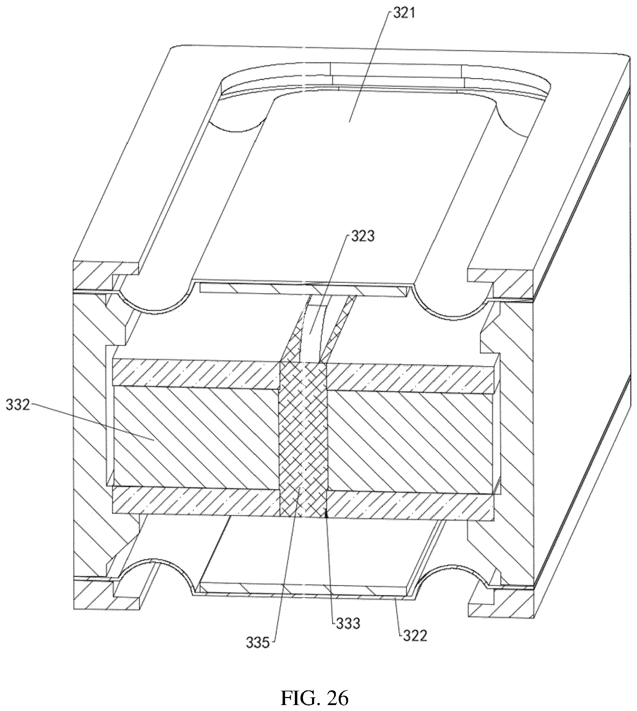

FIG. 26 is a diagram of a cross-sectional structure of the speaker 3 shown in FIG. 12 in the B-B direction in another embodiment.

The speaker 3 in this embodiment is roughly the same as the speaker 3 shown in FIG. 12, and a same part is not described again. A difference lies in that a magnetic fluid 335 may be further disposed in the magnetic gap 333 of the magnetic circuit assembly 33 in this embodiment. Specifically, the magnetic fluid 335 is a functional material that has both liquid fluidity and magnetism of a solid magnetic material. When the magnetic fluid 335 is static, the magnetic fluid 335 has no magnetic attraction. When an external magnetic field is applied, the magnetic fluid 335 is magnetic. Therefore, when the magnetic fluid 335 is filled in the magnetic gap 333, because the magnetic steel 332 generates a magnetic field, the magnetic fluid 335 is adsorbed in the magnetic gap 333 and does not drop.

In a vibration process of the vibration assembly 32, when the voice coil 323 is powered on and performs the movement of cutting the magnetic induction line in the direction (namely, the first direction) perpendicular to the first diaphragm 321 due to an effect of the Lorentz force, the voice coil 323 further generates vibration in a non-first direction, and moves or tilts in the non-first direction. A phenomenon that the voice coil 323 collides with the magnetic steel 332 in the vibration process may occur.

However, in this embodiment, the magnetic fluid 335 is filled in the magnetic gap 333. Because the magnetic fluid 335 has fluidity, when the voice coil 323 is disposed in the magnetic gap 333, the magnetic fluid 335 may wrap a part that the voice coil 323 extends into the magnetic gap 333. When the voice coil 323 generates vibration in the non-first direction in the vibration process, the magnetic fluid 335 limits moving or tilting of the voice coil 323 in the non-first direction, to reduce the moving or tilting of the voice coil 323 in the non-first direction. In addition, due to fluidity of the magnetic fluid 335, limitation of the magnetic fluid 335 on the voice coil 323 does not affect movement of the voice coil 323, so that the voice coil 323 vibrates more stably in the vibration process and avoids colliding with the magnetic steel 332, and vibration stability of the vibration assembly 32 is improved.

In another aspect, in a conventional speaker design, to avoid a phenomenon that a voice coil collides with a magnetic steel, a magnetic gap is designed to be wide enough. This is not conducive to miniaturization of the entire speaker. However, in this embodiment, the magnetic fluid 335 is filled in the magnetic gap 333 to mitigate the collision problem. Therefore, in terms of design of the speaker 3, a width of the magnetic gap 333 may further be reduced, magnetic field intensity may be improved, and working efficiency of the speaker 3 may be improved. In addition, the magnetic gap 333 is reduced, which improves overall integration of the speaker 3, and is conductive to miniaturization of the entire speaker 3.

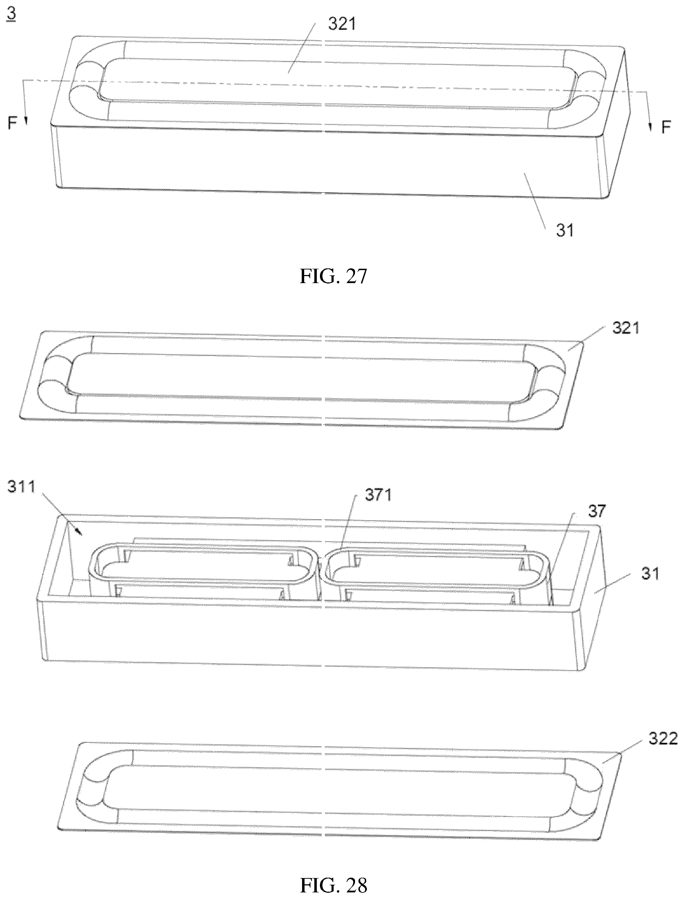

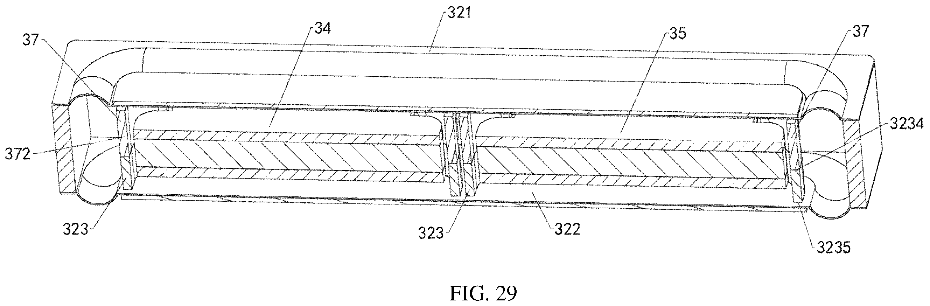

Refer to FIG. 27, FIG. 28, and FIG. 29. FIG. 27 is a diagram of a structure of the speaker 3 shown in FIG. 6 in another embodiment. FIG. 28 is a schematic exploded view of a partial structure of the speaker 3 shown in FIG. 27. FIG. 29 is a diagram of a cross-sectional structure of the speaker 3 shown in FIG. 27 in an F-F direction.

In some embodiments, the speaker 3 includes a base 31, a vibration assembly 32, and a magnetic circuit assembly 33. The base 31 is of a hollow structure with openings on two sides and has an inner cavity 311. The magnetic circuit assembly 33 is disposed in the inner cavity 311. The magnetic circuit assembly 33 has a magnetic gap 333. The vibration assembly 32 may include a first diaphragm 321, a second diaphragm 322, and a voice coil 323. An edge of the first diaphragm 321 is connected to an opening on a side of the base 31. An edge of the second diaphragm 322 is connected to an opening on another side that is of the base 31 and that faces away from the first diaphragm 321. The edge of the first diaphragm 321 and the edge of the second diaphragm 322 are fastened to the base 31 through bonding, to seal the inner cavity 311. A voice coil 323 is located inside the magnetic gap 333. Two sides of the voice coil 323 are respectively connected to the first diaphragm 321 and the second diaphragm 322.

When the voice coil 323 is powered on, due to effect of a magnetic field force, the voice coil 323 generates a Lorentz force in a first direction, performs a movement of cutting a magnetic induction line in the first direction, and pushes the first diaphragm 321 and the second diaphragm 322 to move back and forth together in the first direction. In other words, when the voice coil 323 is powered on, the voice coil 323, the first diaphragm 321, and the second diaphragm 322 move in a same direction as a whole.

In this embodiment, the vibration assembly 32 includes two voice coils 323, and the two voice coils 323 are respectively horizontally arranged and spaced from each other in the magnetic gap 333 of the magnetic circuit assembly 33. The voice coil 323 includes a first end face 3234 and a second end face 3235 that are disposed opposite to each other. Both the first end face 3234 and the second end face 3235 are perpendicular to a central axis of the voice coil 323. In other words, a winding plane of the voice coil 323 is parallel to the first end face 3234 and the second end face 3235. The first end faces 3234 of the two voice coils 323 are both connected to the first diaphragm 321. The second end faces 3235 of the two voice coils 323 are both connected to the second diaphragm 322. In other words, the two voice coils 323 are both disposed in parallel to the first diaphragm 321.

The first end face 3234 is located inside the magnetic gap 333, and the second end face 3235 is located outside the magnetic gap 333, so that the second end face 3235 is connected to the second diaphragm 322.

It may be understood that, according to the speaker 3 in this embodiment, the voice coil 323 is disposed in parallel to the first diaphragm 321, so that the speaker 3 can fully use space in a horizontal direction, and a thickness of the speaker 3 is reduced. In this way, the speaker 3 can be adapted to an electronic device with an ultra-thin body design, for example, a mobile phone or a tablet computer.

In some other embodiments, the base 31 may further include a first cover plate and a second cover plate. The first diaphragm 321 covers the opening on the side of the base 31, and the first cover plate fastens the first diaphragm 321 to the base 31. The second diaphragm 322 covers the opening on the side that is of the base 31 and that is away from the first diaphragm 321, and the second cover plate fastens the second diaphragm 322 to the base 31. A connection manner between the first diaphragm 321 and the second diaphragm 322 and the base 31 is not limited in this application.

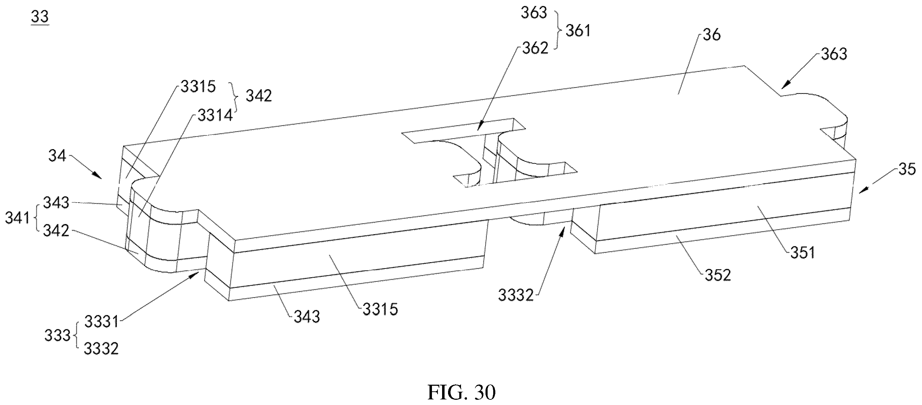

Refer to FIG. 28 and FIG. 30. FIG. 30 is a diagram of a structure of the magnetic circuit assembly 33 of the speaker 3 shown in FIG. 27.

In some embodiments, the magnetic circuit assembly 33 may include a first magnetic circuit assembly 34, a second magnetic circuit assembly 35, and a connecting plate 36. The first magnetic circuit assembly 34 and the second magnetic circuit assembly 35 are fastened to the connecting plate 36. The connecting plate 36 is fastened inside the base 31. The first magnetic circuit assembly 34 and the second magnetic circuit assembly 35 are horizontally arranged and spaced from each other in the inner cavity 311 in a length direction of the speaker 3. The first magnetic circuit assembly 34 and the second magnetic circuit assembly 35 are respectively fastened to the connecting plate 36 through bonding. It may be understood that the first magnetic circuit assembly 34 and the second magnetic circuit assembly 35 are indirectly fastened inside the base 31 by using the connecting plate 36.

In some embodiments, the connecting plate 36 may be fastened inside the base 31 through bonding. Certainly, in some other embodiments, the connecting plate 36 may alternatively be fastened inside the base 31 in a connection manner like inlaying, screwing, clamping, or welding. In some other embodiments, the first magnetic circuit assembly 34 and the second magnetic circuit assembly 35 may alternatively be fastened to the connecting plate 36 in a connection manner like bonding, clamping, or screwing. The connection manner between the connecting plate 36 and the base 31 and the connection manner between the first magnetic circuit assembly 34 and the second magnetic circuit assembly 35 and the connecting plate are not limited in this application.

In some embodiments, the magnetic circuit assembly 33 further includes an avoidance hole 361. In this embodiment, the avoidance hole 361 may be provided on the connecting plate 36. For example, the avoidance hole 361 is provided on the connecting plate 36 and passes through surfaces of two sides of the connecting plate 36. The avoidance hole 361 includes a middle avoidance hole 362 and two edge avoidance holes 363 located on left and right sides of the middle avoidance hole 362. In some embodiments, the middle avoidance hole 362 is provided in the connecting plate 36 and corresponds to a spacing between the two voice coils 323. To be specific, a center of the middle avoidance hole 362 is located at a center of the spacing between the two voice coils 323. In other words, the middle avoidance hole 362 is located above the spacing between the two voice coils 323. The two edge avoidance holes 363 are respectively located on a side that is of the first magnetic circuit assembly 34 and that is away from the second magnetic circuit assembly 35 and a side that is of the second magnetic circuit assembly 35 and that is away from the first magnetic circuit assembly 34.

In some embodiments, structures of the first magnetic circuit assembly 34 and the second magnetic circuit assembly 35 are the same. The following uses the first magnetic circuit assembly 34 as an example for specific description.

For example, the first magnetic circuit assembly 34 includes a first magnetically conductive plate 341 and a first magnetic steel 342. The first magnetically conductive plate 341 is connected to a surface of a side of the first magnetic steel 342, and a surface of another side that is of the first magnetic steel 342 and that is away from the first magnetically conductive plate 341 is fastened to the connecting plate 36. In other words, the first magnetic steel 342 is clamped between the first magnetically conductive plate 341 and the connecting plate 36. In some embodiments, the first magnetic steel 342 may be fastened to the connecting plate 36 in a connection manner like bonding, clamping, or screwing. The first magnetically conductive plate 341 may be fastened to the first magnetic steel 342 in a connection manner like bonding, clamping, or screwing. The connection manners between the foregoing components are not limited in this application.

In some embodiments, a material of the first magnetically conductive plate 341 may alternatively be a magnetically conductive material, to enhance overall magnetic field intensity of the first magnetic circuit assembly 34, so that a size of the first magnetic steel 342 may be smaller under a condition of same magnetic field intensity. This is conductive to miniaturization of the entire speaker 3. Certainly, in some other embodiments, the first magnetic circuit assembly 34 may alternatively not include the first magnetically conductive plate.

In this embodiment, the first magnetic steel 342 may include a central magnetic steel 3314 and edge magnetic steels 3315 disposed on two sides of the central magnetic steel 3314. The central magnetic steel 3314 is separately spaced from the two edge magnetic steels 3315 to form a first magnetic gap 3331. The first magnetic gap 3331 communicates with the corresponding middle avoidance hole 362 and edge avoidance holes 363. One voice coil 323 of the vibration assembly 32 is disposed in the first magnetic gap 3331, so that when the voice coil 323 is powered on, the voice coil 323 implements the movement of cutting the magnetic induction line in the first direction. A specific structure and shape of the first magnetic steel 342 are not limited in this application.

The first magnetically conductive plate 341 includes a middle magnetically conductive plate 342 and edge magnetically conductive plates 343 disposed on two sides of the middle magnetically conductive plate 342. The middle magnetically conductive plate 342 is fastened to a surface that is of the central magnetic steel 3314 and that faces away from the connecting plate 36. The two edge magnetically conductive plates 343 are respectively fastened to surfaces that are of the two edge magnetic steels 3315 and that face away from the connecting plate 36.

In an implementation scenario of some implementations, to further enhance the magnetic field intensity and improve working efficiency of the speaker 3, a material of the connecting plate 36 may alternatively be a magnetically conductive material. In other words, the first magnetic steel 342 is clamped between two magnetically conductive materials, and the two magnetically conductive materials jointly act on the first magnetic steel 342, so that the magnetic field intensity of the first magnetic steel 342 increases, and the size of the first magnetic steel 342 may be smaller under the condition of the same magnetic field intensity. This is conductive to miniaturization of the entire speaker 3.

As shown in FIG. 30, the second magnetic circuit assembly 35 may further include a second magnetic steel 351 and a second magnetically conductive plate 352. It may be understood that structures of the second magnetic steel 351 and the second magnetically conductive plate 352 and an assembly manner between the second magnetic steel 351 and the second magnetically conductive plate 352 and the connecting plate 36 are respectively the same as structures of the first magnetic steel 342 and the first magnetically conductive plate 341 and an assembly manner between the first magnetic steel 342 and the first magnetically conductive plate 341 and the connecting plate 36. Details are not described again. A second magnetic gap 3332 is provided on the second magnetic steel 351. The second magnetic gap 3332 communicates with the corresponding middle avoidance hole 362 and edge avoidance holes 363. The other voice coil 323 of the vibration assembly 32 is disposed in the second magnetic gap 3332, so that when the other voice coil 323 is powered on, the other voice coil 323 implements the movement of cutting the magnetic induction line in the first direction. In some other embodiments, magnetic fluid 335 may further be filled in the first magnetic gap 3331 and the second magnetic gap 3332 of the magnetic circuit assembly 33. Alternatively, magnetic fluid 335 may further be filled in one of the first magnetic gap 3331 and the second magnetic gap 3332.

In some other embodiments, there may alternatively be a plurality of voice coils, and correspondingly, there are a plurality of magnetic gaps. The plurality of magnetic gaps are provided at intervals in the length direction of the speaker 3, and the plurality of voice coils are located inside the plurality of magnetic gaps in a one-to-one correspondence.

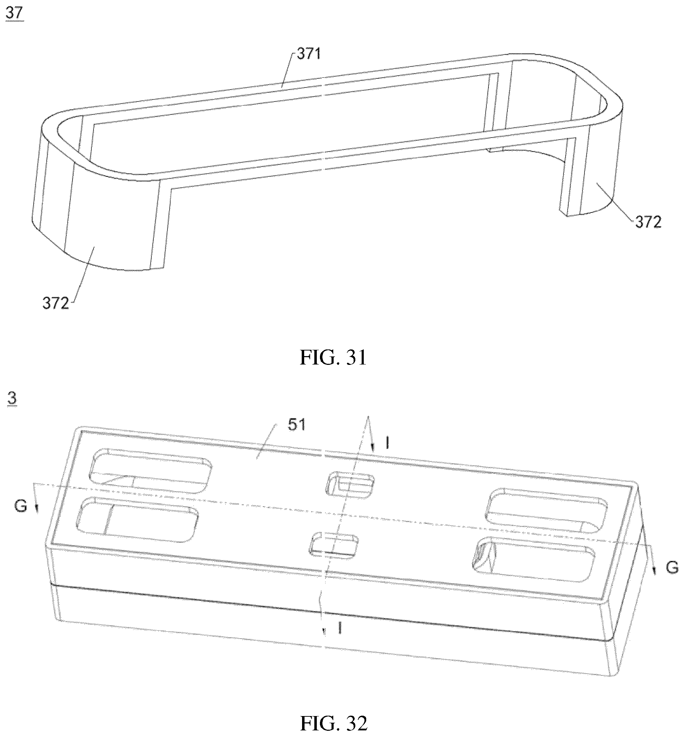

Refer to FIG. 28, FIG. 29, and FIG. 31. FIG. 31 is a diagram of a structure of a third connecting piece 37 shown in FIG. 28.

In some embodiments, the vibration assembly 32 may further include the third connecting piece 37. In this embodiment, there are two third connecting pieces 37. The two third connecting pieces 37 are respectively disposed between the first diaphragm 321 and the two voice coils 323. In other words, one third connecting piece 37 is disposed between one voice coil 323 and the first diaphragm 321, and the other third connecting piece 37 is disposed between the other voice coil 323 and the first diaphragm 321. One end of the third connecting piece 37 is connected to the first diaphragm 321. Another end extends to the magnetic gap 333 and is connected to the first end face 3234. The third connecting piece 37 includes a bonding part 371 and an extension part 372. In this embodiment, the bonding part 371 includes a mounting side. There are two extension parts 372, and the two extension parts 372 are connected to two opposite ends of the mounting side. In this embodiment, the bonding part 371 and the two extension parts 372 are of an integrally formed structure, to ensure strength of the third connecting piece 37.

In some other embodiments, the bonding part 371 and the two extension parts 372 may further be fastened through connection. There may be one or more extension parts 372.

For example, the bonding part 371 of a third connecting piece 37 is connected to the first diaphragm 321. The two extension parts 372 respectively and correspondingly pass through the edge avoidance holes 363 and the middle avoidance hole 362, and are connected to two ends of the first end face 3234 of the voice coil 323. A connection manner between the other third connecting piece 37 and the first diaphragm 321 and the other voice coil 323 is the same as the foregoing connection manner. Details are not described again. In other words, the voice coil 323, the third connecting piece 37, the first diaphragm 321, and the second diaphragm 322 jointly form a vibration whole. When the voice coil 323 is powered on and performs the movement of cutting the magnetic induction line, the voice coil 323 pushes the second diaphragm 322 to move back and forth. In addition, the voice coil 323 pushes the first diaphragm 321 and the second diaphragm 322 to move back and forth in a same direction by pushing the third connecting piece 37.

The third connecting piece 37 is disposed between the voice coil 323 and the first diaphragm 321, and the avoidance hole cooperating with the third connecting piece 37 is provided on the connecting plate 36 of the magnetic circuit assembly 33, so that the voice coil 323 can pass through, by using the third connecting piece 37, the magnetic circuit assembly 33 to be connected to the first diaphragm 321. In this way, the voice coil 323 is connected between the first diaphragm 321 and the second diaphragm 322. In this way, the first diaphragm 321, the second diaphragm 322, and the voice coil 323 form a voice-coil-and-double-diaphragm structure, and have consistency in a movement process. This ensures symmetry of upper and lower vibration rigidities of the vibration assembly 32, improves vibration stability of the entire vibration assembly 32, and can more effectively improve a polarization phenomenon, improve vibration balance of the vibration assembly 32 under a condition of a large amplitude, and avoid generation of noise due to a collision with the magnetic circuit assembly, so that the speaker 3 can reach an expected specified value of an amplitude during actual operation. Loudness of the speaker 3 is determined by a vibration area and an amplitude. In other words, under a condition of a same effective radiation area, the speaker 3 in a voice-coil-and-double-diaphragm design may achieve a larger amplitude on a premise of miniaturization, to obtain higher loudness, so that loudness of a speaker 3 used in a small electronic device like a band or a reading pen is not limited by space, and wearer experience is improved.

In addition, because the voice-coil-and-double-diaphragm design improves vibration stability of the vibration assembly 32, the speaker 3 in this application can reach a larger specified value of the amplitude, and obtain higher loudness.

In addition, in this embodiment, there are two extension parts 372, and the two extension parts 372 are respectively connected to the two ends of the first end face 3234 of the voice coil 323, so that a connection between the voice coil 323 and the third connecting piece 37 is more stable, to improve vibration stability of the vibration assembly 32.

For example, the bonding part 371 of the third connecting piece 37 is of a hollow annular structure, and the structure is the same as a structure of the second end face 3235 of the voice coil 323, so that a bonding area of the bonding part 371 and the first diaphragm 321 is the same as a bonding area of the second end face 3235 and the second diaphragm 322, and a whole formed by the third connecting piece 37 and the voice coil 323 has a same bonding area with both the first diaphragm 321 and the second diaphragm 322. In other words, connection rigidity on two sides of the whole is the same, to improve vibration stability of the vibration assembly 32.

For example, shapes of the two extension parts 372 of the third connecting piece 37 are the same as shapes of parts, of the voice coil 323, that are in contact with the two extension parts 372, to increase a connection area between the extension part 372 and the voice coil 323, and ensure that the extension part 372 is securely connected to the voice coil 323. For example, when the two ends of the voice coil 323 are arc-shaped, the extension part 372 is also correspondingly arc-shaped.

In some other embodiments, there may be one or more third connecting pieces 37. Shapes of the bonding part 371 and the extension part 372 may alternatively be in other styles. A quantity of third connecting pieces 37 and a style of the third connecting piece 37 are not limited in this application.

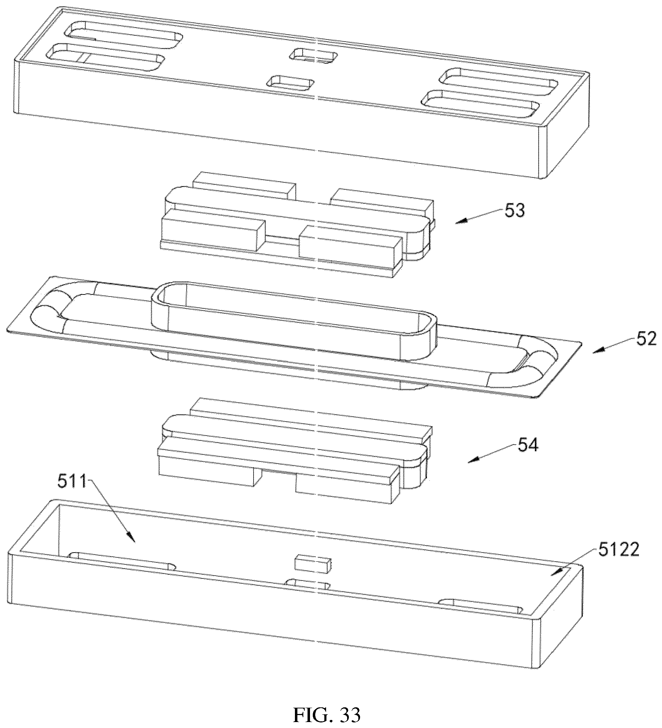

Refer to FIG. 32 and FIG. 33 together. FIG. 32 is a diagram of a structure of the speaker 3 in some embodiments according to this application. FIG. 33 is a diagram of an exploded structure of the speaker 3 shown in FIG. 32.

In an embodiment, the speaker 3 may include a base 51, a vibration assembly 52, a first magnetic circuit assembly 53, and a second magnetic circuit assembly 54. The base 51 has an inner cavity 511, and the vibration assembly 52, the first magnetic circuit assembly 53, and the second magnetic circuit assembly 54 are all disposed inside the inner cavity 511. The first magnetic circuit assembly 53 and the second magnetic circuit assembly 54 are respectively located on two sides of the vibration assembly 52, and are symmetrically disposed relative to the vibration assembly 52.

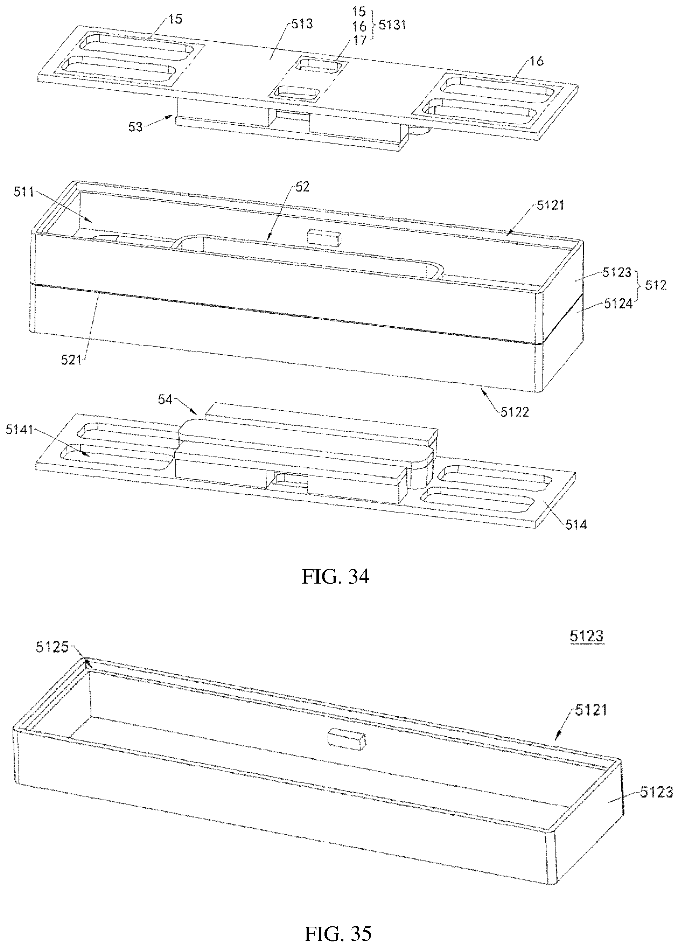

FIG. 34 is a diagram of another exploded structure of the speaker 3 shown in FIG. 32.

In some embodiments, the base 51 is a substantially rectangular cylinder. The base 51 (FIG. 32) includes a frame body 512, a first cover plate 513, and a second cover plate 514. The frame body 512 is of a hollow structure with openings on two sides. The first cover plate 513 and the second cover plate 514 respectively cover the two opposite sides of the frame body 512. The frame body 512, the first cover plate 513, and the second cover plate 514 jointly form an inner cavity 511. The two openings are a first opening 5121 and a second opening 5122 respectively. The first cover plate 513 covers the first opening 5121 of the frame body 512. The second cover plate 514 covers the second opening 5122 of the frame body 512. In another embodiment, a shape of the base 51 may alternatively be a cylindrical, a rectangular, special-shaped, or the like.

In this embodiment, the frame body 512 may further include a first basin stand 5123 and a second basin stand 5124, and both the first basin stand 5123 and the second basin stand 5124 are of hollow structures with openings on two sides. The first basin stand 5123 and the second basin stand 5124 are stacked to form the frame body 512. Specifically, openings on two sides of the first basin stand 5123 are both first openings 5121, and openings on two sides of the second basin stand 5124 are both second openings 5122. When the first basin stand 5123 and the second basin stand 5124 are stacked, one first opening 5121 of the first basin stand 5123 is butt-connected to one second opening 5122 of the second basin stand 5124, so that space enclosed by the first basin stand 5123 and the second basin stand 5124 communicate. The first cover plate 513 covers the first opening 5121 that is of the first basin stand 5123 and that faces away from the second basin stand 5124, and the second cover plate 514 covers the second opening 5122 that is of the second basin stand 5124 and that faces away from the first basin stand 5123. In this embodiment, the first basin stand 5123 and the second basin stand 5124 are fastened to each other. Certainly, in another embodiment, the first basin stand 5123 and the second basin stand 5124 may alternatively be fastened to each other in another connection manner like clamping, welding, or the like.

In this embodiment, an edge of the vibration assembly 52 is fastened between the first basin stand 5123 and the second basin stand 5124. In other words, the edge of the vibration assembly 52 is clamped between the first basin stand 5123 and the second basin stand 5124. It may be understood that the frame body 512 includes two parts (the first basin stand 5123 and the second basin stand 5124), so that the vibration assembly 52 is fastened to the frame body 512. This facilitates assembly of the speaker 3. Certainly, in another embodiment, the frame body 512 may alternatively be a whole, and the first cover plate 513 and the second cover plate 514 directly cover the two opposite sides of the frame body 512.

As shown in FIG. 34, in this embodiment, a first magnetic circuit assembly 53 may be fastened to the first cover plate 513, and the second magnetic circuit assembly 54 may be fastened to the second cover plate 514. The first magnetic circuit assembly 53 and the second magnetic circuit assembly 54 may be symmetrically disposed relative to the vibration assembly 52. For example, the vibration assembly 52 has a diaphragm 521, the first magnetic circuit assembly 53 and the second magnetic circuit assembly 54 are respectively located on two opposite sides of the diaphragm 521, and the first magnetic circuit assembly 53 and the second magnetic circuit assembly 54 are mirror-symmetrical on opposite sides of the diaphragm 521. The diaphragm 521 may be understood as a mirror. It may be understood that, when the first magnetic circuit assembly 53 and the second magnetic circuit assembly 54 are mirror-symmetrical on the two opposite sides of the diaphragm 521, a first distance from a side that is of the first magnetic circuit assembly 53 and that is close to the diaphragm 521 to the diaphragm 521 is equal to or approximately equal to a second distance from a side that is of the second magnetic circuit assembly 54 and that is close to the diaphragm 521 to the diaphragm 521. When the first distance is approximately equal to the second distance, a distance difference between the first distance and the second distance is less than 0.05 mm. The first magnetic circuit assembly 53 and the second magnetic circuit assembly 54 may be respectively fastened to the first cover plate 513 and the second cover plate 514 in one or more of connection manners like bonding, clamping, and screwing.

In this embodiment, the first cover plate 513 is provided with at least one first sound outlet hole 5131 that penetrates two opposite surfaces of the first cover plate 513, and the second cover plate 514 is provided with a second sound outlet hole 5141 that penetrates two opposite surfaces of the second cover plate 514. The first sound outlet hole 5131 and the second sound outlet hole 5141 are symmetrically disposed relative to the vibration assembly 52, and both communicate with the inner cavity 511 of the base 51. When the speaker 3 works, a sound wave on an upper side of the vibration assembly 52 is transferred to an outside through the first sound outlet hole 5131, and a sound wave on a lower side of the vibration assembly 52 is transferred to the outside through the second sound outlet hole 5141. However, the first sound outlet hole 5131 and the second sound outlet hole 5141 are symmetrically disposed, so that output positions of sound waves on the upper and lower sides of the vibration assembly 52 are the same, and a superposition cancellation effect of the sound waves on the two sides of the speaker 3 is better.

In this embodiment, the first sound outlet hole 5131 may include at least one first hole 15, at least one second hole 16, and at least one third hole 17. The third hole 17 is located in a middle of the first cover plate 513, and the first hole 15 and the second hole 16 are separately symmetrical relative to the third hole 17. It may also be understood that the first hole 15, the second hole 16, and the third hole 17 are symmetrically disposed relative to a center of the first cover plate 513. Because the vibration assembly 52 is affected by front air damping in a vibration process, to enable the vibration assembly 52 to obtain a more stable sound field in the vibration process, the first hole 15, the second hole 16, and the third hole 17 of the first sound outlet hole 5131 are provided symmetrically relative to the center of the first cover plate 513, so that distances of sound waves generated on left and right sides of the vibration assembly 52 reach holes on the two sides are the same, and air damping on the left and right sides is the same. This improves vibration synchronization and stability of the vibration assembly 52. It may be understood that each of the first hole 15, the second hole 16, and the third hole 17 may include two small holes spaced from each other.

Certainly, in another embodiment, the first hole 15, the second hole 16, or the third hole 17 may alternatively include one small hole or a plurality of small holes arranged at intervals. A quantity of small holes and a shape of the small hole are not limited in this application. Alternatively, in another embodiment, the first sound outlet hole 5131 may alternatively include only a first hole and a second hole, and the first hole and the second hole are symmetrical to a center of a first cover plate, so that distances from sound waves generated on the left and right sides of the vibration assembly 52 to the first hole and the second hole are the same, and air damping on the left and right sides is the same. This improves vibration synchronization and stability of the vibration assembly 52.

It may be understood that a structure of the second sound outlet hole 5141 is the same as a structure of the first sound outlet hole 5131, and positions of the second sound outlet hole 5141 and the first sound outlet hole 5131 are mirror-symmetrical relative to the diaphragm 521 (or the vibration assembly 52). Refer to related descriptions of the first sound outlet hole 5131. Details are not described again.

In this embodiment, a structure of the first basin stand 5123 is the same as that of the second basin stand 5124. The following uses the first basin stand 5123 as an example for specific description.

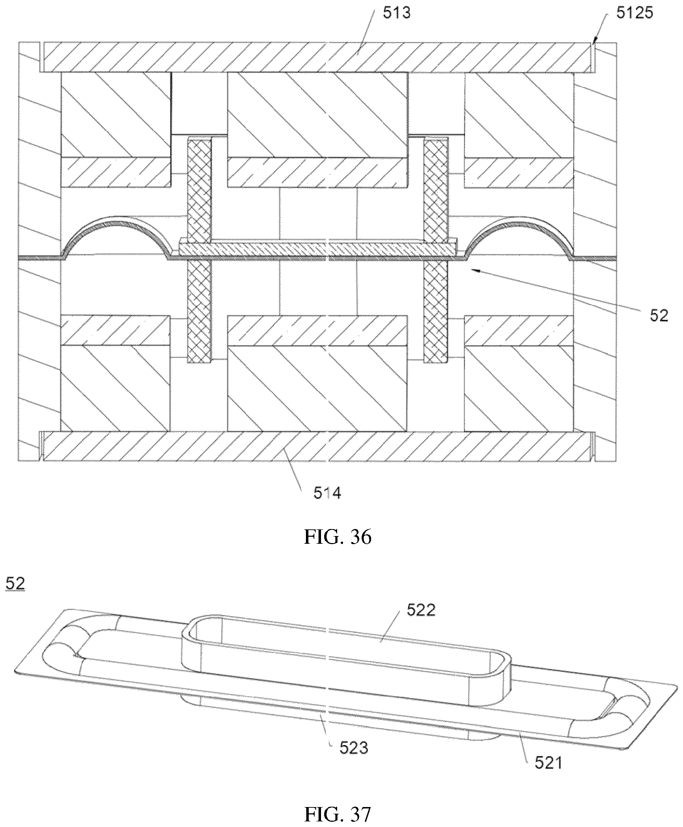

Referring to FIG. 35 and FIG. 36 together. FIG. 35 is a diagram of a structure of a first basin stand 5123 of the speaker 3 shown in FIG. 34 in some embodiments. FIG. 36 is a diagram of a cross-sectional structure of the speaker 3 shown in FIG. 32 in an I-I direction.

In some embodiments, the first basin stand 5123 may include a first mounting groove 5125. The first mounting groove 5125 is disposed at the first opening 5121 on the side that is of the first basin stand 5123 and faces away from the second basin stand 5124. In this embodiment, the first cover plate 513 is mounted in the first mounting groove 5125. The first mounting groove 5125 is configured to mount the first cover plate 513 in one aspect, and is further configured to limit the first cover plate 513 in another aspect, so that the first cover plate 513 is more securely mounted in the first mounting groove 5125.

The first cover plate 513 may be detachably connected to the first mounting groove 5125, to facilitate maintenance of a component in the inner cavity 511. Certainly, the first cover plate 513 may alternatively be fastened to the first mounting groove 5125 in an un-detachable manner.

In an implementation scenario of another embodiment, the frame body 512 may not include the first mounting groove, and the first cover plate 513 may be fastened to the frame body 512 in another connection manner like bonding, bolt fastening, or the like. A manner of fastening the first cover plate 513 to the frame body 512 is not limited in this application.

It may be understood that a connection manner between the second basin stand 5124 and the second cover plate 514 is the same as a connection manner between the first basin stand 5123 and the first cover plate 513. Details are not described herein again.

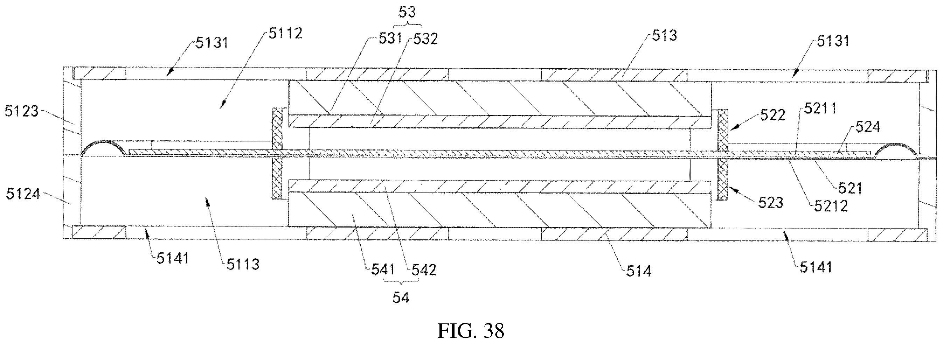

Refer to FIG. 37 and FIG. 38 together. FIG. 37 is a diagram of a structure of the vibration assembly 52 of the speaker 3 shown in FIG. 32 in some embodiments. FIG. 38 is a diagram of a cross-sectional structure of the speaker 3 shown in FIG. 32 in a G-G direction.

In some embodiments, the vibration assembly 52 may include a diaphragm 521, a first voice coil 522, and a second voice coil 523. The diaphragm 521, the first voice coil 522, and the second voice coil 523 are stacked in a first direction. The diaphragm 521 includes a first surface 5211 and a second surface 5212 that are disposed opposite to each other in the first direction. The first voice coil 522 is fastened to the first surface 5211, and the second voice coil 523 is fastened to the second surface 5212. The diaphragm 521 may be a planar diaphragm, and the diaphragm 521 is disposed in the inner cavity 511 (FIG. 34), and is connected inside the frame body 512. In some embodiments, a circumferential edge of the diaphragm 521 is connected between the first basin stand 5123 and the second basin stand 5124, and divides the inner cavity 511 to form a first sound cavity 5112 and the second sound cavity 5113. The first sound outlet hole 5131 communicates with the first sound cavity 5112, and the second sound outlet hole 5141 communicates with the second sound cavity 5113. The first voice coil 522 is located in the first sound cavity 5112, and the second voice coil 523 is located in the second sound cavity 5113. When the speaker 3 is mounted in the speaker module 30, the first sound cavity 5112 communicates with the first space 411, and the second sound cavity 5113 communicates with the second space 412.

There may be a plurality of cases in which the diaphragm 521 is a planar diaphragm. In one case, the entire diaphragm 521 is a flat diaphragm without an unevenness. In another case, the diaphragm 521 has some unevenness, but the unevenness is not obvious. This does not cause an area difference between the first sound cavity 5112 and the second sound cavity 5113 to be excessively large that there is an obvious difference between sounds emitted by the first sound cavity 5112 and the second sound cavity 5113. In still another case, when a spring structure like a folded ring structure is disposed on an edge of the diaphragm 521, the diaphragm 521 may also be considered as a planar diaphragm.

It may be understood that a projection of the first voice coil 522 on the first surface 5211 is annular, and a projection of the second voice coil 523 on the second surface 5212 is annular. In other words, a cross section of the first voice coil 522 is annular, a cross section of the second voice coil 523 is annular, and the cross section is a surface perpendicular to the first direction. In some embodiments, the cross section of the first voice coil 522 and/or the cross section of the second voice coil 523 are/is a closed ring like a racetrack. When the first voice coil 522 and the second voice coil 523 are powered on, current directions of the first voice coil 522 and the second voice coil 523 are the same. Due to an effect of a magnetic field force, directions of Lorentz forces that the first voice coil 522 and the second voice coil 523 are subject to are the same. The two voice coils generate Lorentz forces perpendicular to a plane direction (the first direction) of the diaphragm 521, namely, Lorentz forces in a thickness direction of the speaker, perform a movement of cutting the magnetic induction line in the thickness direction of the speaker, and push the diaphragm 521 to move back and forth in the direction. The diaphragm 521 moves back and forth to push air to vibrate and emit a sound. When the diaphragm 521 vibrates downwards, air under the diaphragm 521 is compressed due to a reduced air volume, and air above the diaphragm 521 is expanded due to an increased air volume. Therefore, phases of sound waves generated on the upper and lower sides of the diaphragm 521 are opposite (that is, a phase difference is 180°). In this embodiment, both the first voice coil 522 and the second voice coil 523 are subject to forces in a same direction, so that the diaphragm 521 is more easily driven to vibrate. This facilitates a vibration effect.

In this embodiment, the first sound outlet hole 5131 and the second sound outlet hole 5141 of the speaker 3 may emit sound waves with equal amplitudes and opposite phases (that is, a phase difference is 180°). In other words, the speaker 3 is a dipole speaker, and may form a dipole sound field. When the speaker 3 emits a sound, the two sound waves with the opposite phases are respectively emitted through the first sound outlet hole 5131 and the second sound outlet hole 5141. A sound wave emitted from the first sound outlet hole 5131 is emitted to the outside of the glasses temple through the first channel 1228 from the first sound output hole 13, and a sound wave emitted from the second sound outlet hole 5141 is emitted to the outside of the glasses temple 12 through the second channel 1229 from the second sound output hole 14.

In this embodiment, there is an 8-shaped directional characteristic around the first sound outlet hole 5131 and the second sound outlet hole 5141. According to a dipole principle, when a human ear is in an effective listening area, and it is ensured that the first sound outlet hole 5131 and the second sound outlet hole 5141 have low loudness, a hearing requirement of the wearer can be met. Two sound waves cancel each other in a far field, to form a silence area and implement far-field silence. This effectively enhances far-field privacy of the electronic device, and improves user experience.

When using an electronic device, a user places the first sound output hole 13 close to an ear of a wearer, and the second sound output hole 14 is far away from the ear of the wearer relative to the first sound output hole 13. For a person around the wearer, a sound dipole effect can be formed. Specifically, a distance between the two sound output holes may be ignored, distances from the two sound output holes to an ear of the surrounding person are close, and sound waves of opposite phases of the two sound output holes cancel each other when reaching a position of an ear of the surrounding person, to reduce a sound leakage. For the wearer, there is a large difference between distances from the two sound output holes to the ear of the wearer, and a condition of a sound dipole effect is not met. A sound wave cancellation degree is small. Therefore, the wearer can hear a sound with proper loudness.

However, propagation of a sound wave in the air is non-directional, sound emitting holes and sound wave transmission channels on two sides of the diaphragm 521 are inconsistent in a structural design of a conventional speaker, and superposition and cancellation cannot be implemented for sound waves in each direction. Therefore, some sound may leak out in a use process, and an effect of mitigating a sound leakage is not good.

In this embodiment, the diaphragm 521 is fastened in the middle of the base 51, and the first voice coil 522, the second voice coil 523, the first magnetic circuit assembly 53, and the second magnetic circuit assembly 54 are all symmetrically distributed on two sides of the diaphragm 521, so that the inner cavity 511 of the base 51 is divided to form the first sound cavity 5112 and the second sound cavity 5113 that are symmetrical to the diaphragm 521, so that sound wave transfer channels and air volumes enclosed on the two sides of the diaphragm 521 are equal or approximately equal, and sound waves are affected by propagation channels almost equally during transmission. Therefore, the sound waves emitted from the two sides of the diaphragm 521 are the same in loudness. Therefore, the sound waves are of equal intensity at the first sound outlet hole and the second sound outlet hole, so that two sound sources equal in magnitude and opposite in phase can be obtained. From a perspective at a long-distance fixed position in an environment, because positions of the two sound sources are close, it may be considered that distances of the fixed position relative to the two sound sources are approximately equal. The two sound sources generate two sound fields equal in magnitude and opposite in phase. Therefore, two sound waves equal in magnitude and opposite in phase are received at the fixed position. Based on a dipole superposition effect, the sound waves at the fixed position can cancel each other to a greatest extent. This mitigates a sound leakage problem in a use process of the speaker 3, protects user privacy, and improves user experience.

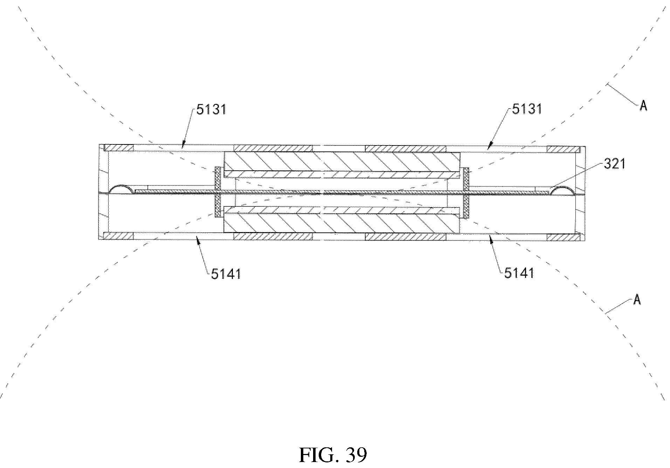

FIG. 39 is a specific diagram of a dipole effect of the speaker 3 shown in FIG. 32.

In this embodiment of this application, the speaker 3 is centered on the diaphragm 521, and structures on two sides of the diaphragm 521 are symmetrically disposed. In other words, the first voice coil 522 and the second voice coil 523 are symmetrically disposed relative to the diaphragm 521, and the first magnetic circuit assembly 53 and the second magnetic circuit assembly 54 are symmetrically disposed relative to the diaphragm 521, so that the sound wave transfer channels and the air volumes enclosed on the two sides of the diaphragm 521 are equal or approximately equal. Therefore, the sound waves emitted from the two sides of the diaphragm 521 are the same in loudness. This mitigates a sound leakage problem of the speaker 3 in a use process, protects user privacy, and improves user experience.

In addition, because the first sound outlet hole 5131 and the second sound outlet hole 5141 are also designed to be symmetrical relative to the diaphragm 521, each hole in the first sound outlet hole 5131 and that in the second sound outlet hole 5141 are aligned with each other to limit a plurality of parallel lines (not shown in the figure) formed when each group of holes pass through the diaphragm 521. Two dashed-line lobes A in FIG. 39 generally show a dipole polarity response pattern formed by an acoustic response of the speaker 3. The response pattern is symmetrical relative to the diaphragm 521 and shows directional sound emission from the speaker 3. In this embodiment, during an acoustic response of the dipole, generation of a sound in a transverse direction relative to the thickness direction of the speaker is limited to a greatest extent (or a little sound in a transverse direction is generated in an actual system), and a superposition cancellation effect of the dipole is implemented to a greatest extent. This mitigates a sound leakage problem.

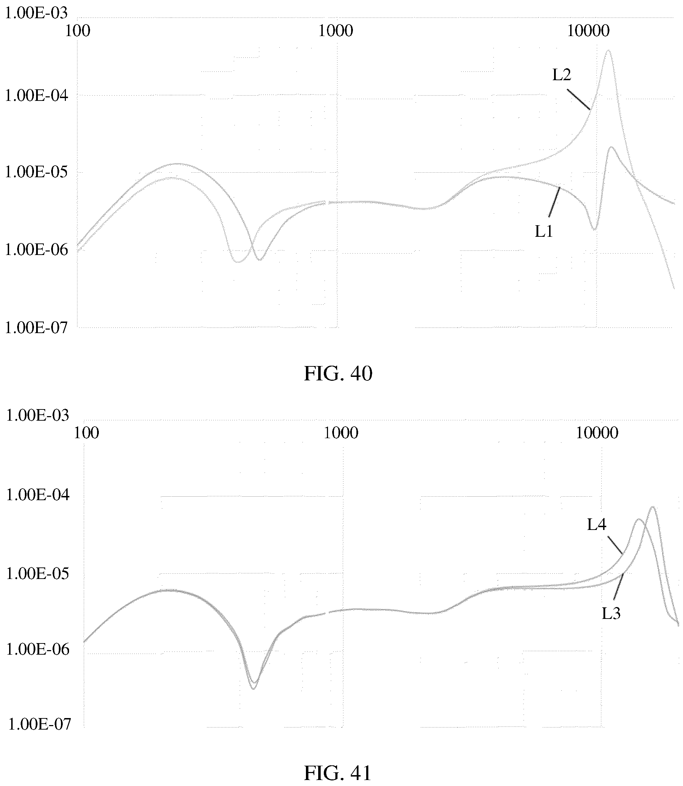

Refer to FIG. 40 and FIG. 41 together. FIG. 40 is a simulation analysis diagram of sound field intensity at a first sound outlet hole and a second sound outlet hole of a conventional speaker. FIG. 41 is a simulation analysis diagram of sound field intensity at the first sound outlet hole 5131 and the second sound outlet hole 5141 of the speaker 3 according to this application.

In FIG. 40, a curve marked L1 is a simulation curve of the sound field intensity at the first sound outlet hole of the conventional speaker at different frequencies, and a curve marked L2 is a simulation curve of the sound field intensity at the second sound outlet hole at the different frequencies. In FIG. 41, a curve marked L3 is a simulation curve of the sound field intensity at the first sound outlet hole 5131 of the speaker 3 of this application at different frequencies, and a curve marked L4 is a simulation curve of the sound field intensity at the second sound outlet hole 5141 at the different frequencies.

The conventional speaker includes a basin stand, a vibration assembly, and a magnetic circuit assembly, where two opposite sides of the basin stand have openings, the vibration assembly covers one of the openings, and the magnetic circuit assembly covers the other opening. The first sound outlet hole of the conventional speaker is located on a side that is of the vibration assembly and that faces away from the magnetic circuit assembly, and the second sound outlet hole is located on a side that is of the magnetic circuit assembly and that faces away from the vibration assembly. It can be learned from FIG. 40 that sound field intensity change curves of the first sound outlet hole and the second sound outlet hole of the conventional speaker at the different frequencies basically do not overlap. In other words, although the conventional speaker also uses a superposition cancellation principle of a dipole, because sound wave transfer channels on upper and lower sides of a diaphragm are inconsistent in a conventional solution, sound field intensity on the upper and lower sides of the speaker is different. This causes attenuation of a superposition cancellation effect of the dipole.

It can be learned from FIG. 41 that, sound field intensity change curves at the first sound outlet hole 5131 and the second sound outlet hole 5141 of the speaker 3 at the different frequencies in this application are almost consistent. In other words, in a structural design of the speaker 3 in this application, the diaphragm 521 is used as a central plane, and structures of two sides are symmetrically disposed, so that the sound wave transfer channels and the air volumes enclosed on the two sides of the diaphragm 521 are equal to or approximately equal, and equal sound field intensity is obtained at the first sound outlet hole 5131 and the second sound outlet hole 5141. In addition, the speaker 3 in this application has only one diaphragm 521 to emit a sound, and is a single sound source. Phases of sound waves generated by the two sides of the diaphragm 521 that vibrate are naturally opposite. Therefore, a better dipole implementation is obtained, the superposition cancellation effect of the dipole is implemented to a maximum extent, a sound leakage problem of the speaker 3 is effectively mitigated, and user privacy experience is improved.

As shown in FIG. 38, in this embodiment, an edge of the diaphragm 521 may further include an elastic structure like a folded ring part. The folded ring part is designed in a semicircular arc shape, and is used to increase displacement in a vibration direction. In actual use, another effective means of increasing displacement may be used. For example, the folded ring part is designed in an elliptical manner, or the diaphragm 521 is made of a material with a high elastic modulus. Certainly, in another embodiment, the diaphragm may not include a folded ring part. A shape of the diaphragm is not limited in this application.

As shown in FIG. 38, in this embodiment, the vibration assembly 52 may further include a dome 524, and the dome 524 may also be referred to as a reinforcement plate. The dome 524 may cover a surface of the diaphragm 521 to increase rigidity of the diaphragm 521 and improve structural stability of the diaphragm 521. In some embodiments, the dome 524 covers a surface that is of the diaphragm 521 and that faces the first voice coil 522. In this embodiment, the dome 524 is of a flat plate shape. In another embodiment, there may alternatively be two domes 524, and the two domes respectively cover two surfaces that are of the diaphragm 521 and that face the first voice coil 522 and the second voice coil 523. Alternatively, the dome 524 may further cover a surface that is of the diaphragm 521 and that faces the second voice coil 523. When the dome is applied to a speaker of a horn type, the dome may alternatively be of an arc shape.

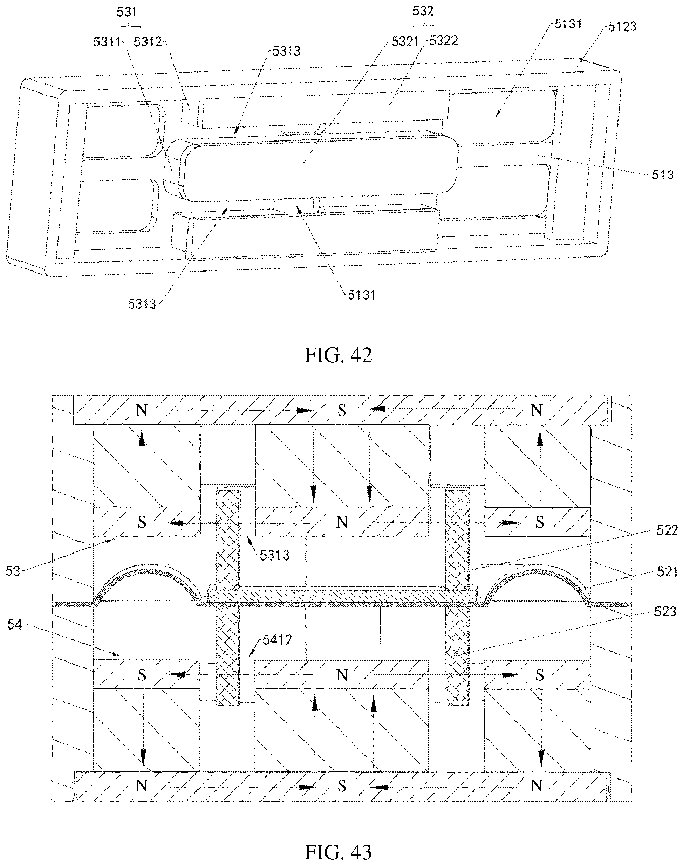

Refer to FIG. 38 and FIG. 42. FIG. 42 is a diagram of a structure of the first magnetic circuit assembly 53 of the speaker 3 shown in FIG. 32 in some embodiments.

In some embodiments, the first magnetic circuit assembly 53 may further include a first magnetic steel 531 and a first magnetically conductive plate 532. The first magnetically conductive plate 532 is located on a side of the first magnetic steel 531, and a side that is of the first magnetic steel 531 and that is away from the first magnetically conductive plate 532 is fastened to the first cover plate 513, and is located on a side that is of the first cover plate 513 and that is close to the frame body 512. In other words, the first magnetic steel 531 is clamped between the first magnetically conductive plate 532 and the first cover plate 513. The first magnetic steel 531 may be fastened to the first cover plate 513 through bonding. The first magnetically conductive plate 532 is disposed on a side of the first magnetic steel 531. In some embodiments, a material of the first magnetically conductive plate 532 may be a magnetically conductive material, to enhance overall magnetic field intensity of the first magnetic circuit assembly 53, so that a size of the first magnetic steel 531 may be smaller under a condition of same magnetic field intensity. This is conductive to miniaturization of the entire speaker 3.

Certainly, in another embodiment, the first magnetic circuit assembly 53 may not include the first magnetically conductive plate.

It may be understood that, in this embodiment, the first magnetic steel 531 is connected to a middle of the first cover plate 513, and first sound outlet holes 5131 are located on two sides of the middle of the first cover plate 513, so that the first magnetic steel 531 does not block a position of the first sound outlet holes 5131. This ensures that a sound wave is not disturbed in a transmission process.

In this embodiment, the first magnetic steel 531 includes a central magnetic steel 5311 and edge magnetic steels 5312 disposed on two sides of the central magnetic steel 5311. The central magnetic steel 5311 and the edge magnetic steel 5312 form a first gap 5313. A height of the first voice coil 522 in the first direction is a first height, a distance between the first magnetic circuit assembly 53 and the first surface 5211 is a first distance, and the first height is greater than the first distance. The first voice coil 522 partially extends into the first gap 5313, so that the first voice coil 522 performs the movement of cutting the magnetic induction line in the thickness direction of the speaker after being powered on. A specific structure and shape of the first magnetic steel 531 are not limited in this application.

The first magnetically conductive plate 532 includes a middle magnetically conductive plate 5321 and edge magnetically conductive plates 5322 disposed on two sides of the middle magnetically conductive plate 5321. The middle magnetically conductive plate 5321 is fastened to a surface that is of the central magnetic steel 5311 and that faces away from the first cover plate 513, and the two edge magnetically conductive plates 5322 are respectively correspondingly located on sides that are of the two edge magnetic steels 5312 and that face away from the first cover plate 513.

In this embodiment, the middle magnetically conductive plate 5321 may be fastened to the central magnetic steel 5311 in a connection manner like bonding, clamping, or welding. The two edge magnetically conductive plates 5322 are embedded in the first basin stand 5123. For example, the two edge magnetically conductive plates 5322 may form an integrated structure with the first basin stand 5123 by using an insert molding process. Certainly, in another embodiment, the two edge magnetically conductive plates 5322 may alternatively be fastened to the corresponding edge magnetic steels 5312 in another connection manner like bonding, clamping, or welding. An assembly manner of the first magnetic circuit assembly 53 is not limited in this embodiment.

In some embodiments, the first magnetic steel 531 may alternatively not be mounted on the first cover plate 513 through bonding. In some embodiments, the first magnetic steel 531 may alternatively be fastened to the first cover plate 513 in another connection manner like screw connection or clamping connection by disposing a positioning slot, a slot, or the like on the first cover plate. A manner of fastening the first magnetically conductive plate 532 is not limited to the foregoing description. An assembly manner of the first magnetic circuit assembly 53 is not limited in this embodiment.

In some embodiments, to further enhance the magnetic field intensity and improve working efficiency of the speaker 3, a material of the first cover plate 513 may alternatively be a magnetically conductive material. In other words, the first magnetic steel 531 is clamped between two magnetically conductive plates, and the two magnetically conductive plates jointly act on the first magnetic steel 531, so that the magnetic field intensity of the first magnetic steel 531 increases, and the size of the first magnetic steel 531 may be smaller under the same magnetic field intensity. This is conductive to miniaturization of the entire speaker 3.

Refer to FIG. 38 and FIG. 43 together. FIG. 43 is a diagram of magnetic pole setting of a magnetic circuit assembly of the speaker 3 shown in FIG. 32.

In some embodiments, the second magnetic circuit assembly 54 may include a second magnetic steel 541 and a second magnetically conductive plate 542. It may be understood that structures of the second magnetic steel 541 and the second magnetically conductive plate 542 and a manner of assembling the second magnetic steel 541 and the second magnetically conductive plate 542 onto the second cover plate 514 are respectively the same as structures of the first magnetic steel 531 and the first magnetically conductive plate 532 and a manner of assembling the first magnetic steel 531 and the first magnetically conductive plate 532 and the first cover plate 513. Details are not described again. The second magnetic steel 541 forms a second gap 5412. A height of the second voice coil 523 in the first direction is a second height, a distance between the second magnetic circuit assembly 54 and the second surface 5212 is a second distance, and the second height is greater than the second distance. The second voice coil 523 partially extends into the second gap 5412, so that the second voice coil 523 performs the movement of cutting the magnetic induction line in the thickness direction of the speaker after being powered on.

In some embodiments, the first magnetic circuit assembly 53 and the second magnetic circuit assembly 54 are mounted on the speaker 3 based on the foregoing description, and magnetic poles of the first magnetic circuit assembly 53 and the second magnetic circuit assembly 54 are arranged symmetrically as shown in FIG. 43. The first magnetic circuit assembly 53 and the second magnetic circuit assembly 54 respectively converge magnetic fields to the first gap 5313 and the second gap 5412, to enhance magnetic field intensity at the first gap 5313 and the second gap 5412. In FIG. 43, N represents an N magnetic pole, and S represents an S magnetic pole. In addition, the magnetic poles of the first magnetic circuit assembly 53 and the second magnetic circuit assembly 54 are disposed in this manner, so that the first voice coil 522 and the second voice coil 523 that correspond to the first gap 5313 and the second gap 5412 are subject to a Lorentz force in the thickness direction of the speaker after being powered on, to implement that the first voice coil 522 and the second voice coil 523 cut the magnetic induction line in the thickness direction of the speaker to drive the diaphragm 521 to vibrate.

Certainly, in another embodiment, an arrangement manner of the magnetic poles of the first magnetic circuit assembly 53 and the second magnetic circuit assembly 54 may be different from an arrangement manner shown in FIG. 43, provided that it can be ensured that the first voice coil 522 and the second voice coil 523 move in the thickness direction of the speaker to cut the magnetic induction line.

In some embodiments, to further enhance the magnetic field intensity and improve working efficiency of the speaker 3, a material of the second cover plate 514 may alternatively be a magnetically conductive material. In other words, the second magnetic steel 541 is clamped between two magnetically conductive plates, and the two magnetically conductive plates jointly act on the second magnetic steel 541, so that the magnetic field intensity of the second magnetic steel 541 increases, and the size of the second magnetic steel 541 may be smaller under the same magnetic field intensity. This is conductive to miniaturization of the entire speaker 3.

In some other embodiments, materials of the first cover plate 513 and the second cover plate 514 are both magnetically conductive materials. In this way, symmetry of an internal structure of the speaker 3 is ensured, and effects of enhancing magnetic field intensity on the two sides of the diaphragm 521 are consistent, to ensure that magnetic fields on the two sides of the diaphragm 521 are equal, and ensure that vibration frequencies of voice coils on the two sides of the diaphragm 521 are consistent. In addition, when the materials of the first cover plate 513 and the second cover plate 514 are both magnetically conductive materials, under a condition of same magnetic field intensity, sizes of the first magnetic steel 531 and the second magnetic steel 541 may be further reduced. In other words, a size of the entire speaker 3 may be further reduced. This is conducive to miniaturization of the speaker 3.

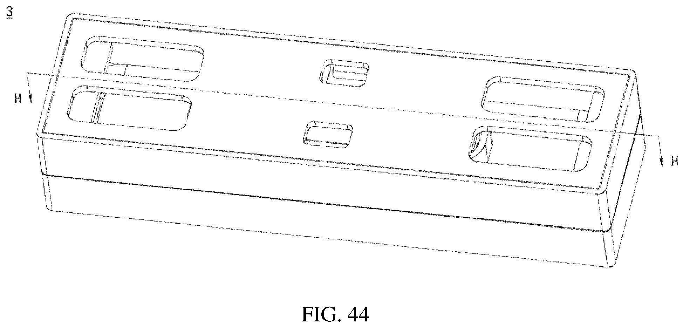

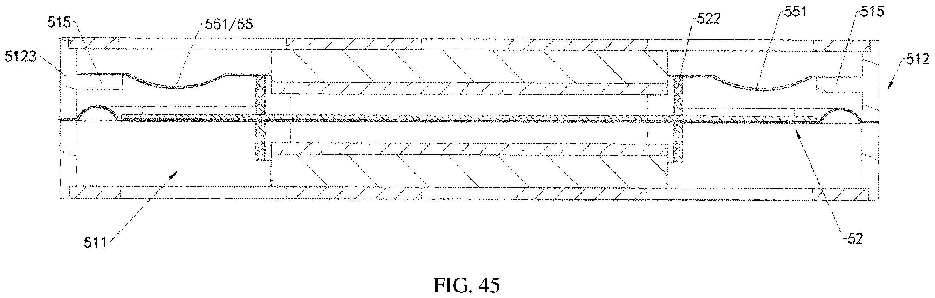

In another embodiment, refer to FIG. 44 and FIG. 45 together. FIG. 44 is a diagram of a structure of the speaker 3 shown in FIG. 6 in another embodiment. FIG. 45 is a diagram of a cross-sectional structure of the speaker 3 shown in FIG. 44 in an H-H direction.

A structure of the speaker 3 in this embodiment is roughly the same as the structure of the speaker 3 shown in FIG. 32, and a same part is not described again. A difference is that a vibration assembly 52 in this embodiment may further include a suspension piece 55. A frame body 512 may include a first connection protrusion 515.

In this embodiment, the first connection protrusion 515 is disposed on an inner wall that is of a first basin stand 5123 and that faces an inner cavity 511. There are two first connection protrusions 515, and the two first connection protrusions 515 are respectively located at two ends of a first voice coil 522. The suspension piece 55 includes two first elastic films 551. The two first elastic films 551 are both connected between the first voice coil 522 and the frame body 512, and are respectively located at two opposite ends of the first voice coil 522. One side of one first elastic film 551 is connected to one end that is of the first voice coil 522 and that is away from a diaphragm 521, and the other side is fastened to the frame body 512, and is specifically fastened to the first connection protrusion 515 of the frame body 512. The other first elastic film 551 is symmetrically disposed at the other end of the first voice coil 522.

In this embodiment, the first connection protrusion 515 is disposed on the frame body 512, so that the first elastic film 551 is more easily and securely connected to the frame body 512. Certainly, in another embodiment, the first connection protrusion may not be provided on the frame body 512, and the first elastic film 551 may be directly fastened to the frame body 512 in a connection manner like bonding.

Generally, an operating frequency band of the speaker 3 is distributed in a range of 50 Hz to 12000 Hz (including 50 Hz and 12000 Hz), and the vibration assembly 52 formed by the diaphragm 521 and the two voice coils has different vibration modes at different frequencies. Therefore, in an actual vibration process, a vibration mode not in the thickness direction of the speaker is generated. In other words, the vibration assembly 52 may be deflected relative to the thickness direction of the speaker in the vibration process.

In this implementation, two first elastic films 551 are disposed at ends that are of the first voice coil 522 and that are away from the diaphragm 521, to form a double-end-constrained vibration body. When the first voice coil 522 vibrates relative to the frame body 512 in the thickness direction of the speaker, because one end of the first elastic film 551 is fastened to the frame body 512, a problem that deflection occurs in a vibration process is greatly suppressed, so that vibration of the vibration assembly 52 is more stable, and sound fields generated by the vibration assembly 52 on the left and the right are more consistent, a more stable sound field is obtained, and sound quality of the speaker 3 is effectively improved.

In an implementation scenario of another embodiment, the suspension piece 55 may alternatively include at least one first elastic film 551. In other words, the suspension piece 55 may include one first elastic film 551, or the suspension piece 55 may alternatively include a plurality of first elastic films 551. When the suspension piece 55 includes only one first elastic film 551, the first elastic film 551 may be disposed only at one end of the first voice coil 522. When the suspension piece 55 includes a plurality of first elastic films 551, the plurality of first elastic films 551 are arranged at intervals at a circumferential edge of the first voice coil 522. In another implementation scenario of another embodiment, the first elastic film 551 may alternatively be an annular film disposed around the first voice coil 522. An inner side of the first elastic film 551 is connected to the first voice coil 522, and an outer side of the first elastic film 551 is connected to the frame body 512.

In this embodiment, the first elastic film 551 adopts a semi-arc design, and is configured to increase moving in a vibration direction. During actual use, another effective means of increasing moving may be used, for example, an elliptical design is used, or the first elastic film uses a material with a high elastic modulus. A quantity of first elastic films 551 and a shape of the first elastic film 551 are not limited in this application.

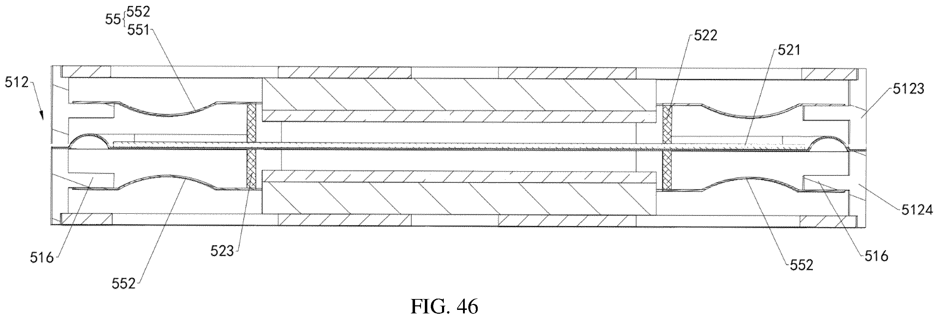

In another embodiment, refer to FIG. 46. FIG. 46 is a diagram of a structure of the speaker 3 shown in FIG. 45 in another implementation.

A structure of the speaker 3 in this embodiment is roughly the same as the structure of the speaker 3 shown in FIG. 45, and a same part is not described again. A difference lies in that a suspension piece 55 in this embodiment further includes a second elastic film 552, and the frame body 512 further includes a second connection protrusion 516.

In this embodiment, the second connection protrusion 516 is disposed on an inner wall that is of a second basin stand 5124 and that faces an inner cavity. There are two second connection protrusions 516, and the two second connection protrusions 516 are respectively located at two ends of a second voice coil 523. There are two second elastic films 552, and the two second elastic films 552 are both connected between the second voice coil 523 and the frame body 512, and are respectively located at two opposite ends of the second voice coil 523. One side of one second elastic film 552 is connected to one end that is of the second voice coil 523 and that is away from the diaphragm 521, and the other side is fastened to the frame body 512, and is specifically fastened to the second connection protrusion 516 of the frame body 512. The other second elastic film 552 is symmetrically disposed at the other end of the second voice coil 523.

In this embodiment, the second connection protrusion 516 is disposed on the frame body 512, so that the second elastic film 552 is more easily and securely connected to the frame body 512. Certainly, in another embodiment, the second connection protrusion may not be provided on the frame body 512, and the second elastic film 552 may be directly fastened to the frame body 512 in a connection manner like bonding.

Because deviations inevitably occur on the two voice coils in a manufacturing process and an assembly process, in an actual manufacturing process, the first voice coil 522 and the second voice coil 523 are not completely symmetrical in shape and position settings, and movement correspondence is poor. As a result, when the two voice coils jointly drive the diaphragm 521 to vibrate, the diaphragm 521 is affected by the poor correspondence, and deflection and tilt are generated.

However, in a design of elastic films on two sides, an elastic film is disposed on each of both sides that are of the two voice coils and that face away from the diaphragm 521, constraints may be added on two sides of the first voice coil 522 and two sides of the second voice coil 523, to improve movement correspondence between the two voice coils, and enable the diaphragm 521 to vibrate more smoothly. In addition, design solutions of the two elastic films are also completely the same, and are implemented by using a same set of molds for processing, to ensure higher consistency between the two elastic films, further obtain a stable front to back sound field of equal strength, and achieve a better superposition cancellation effect of the dipole.

In this embodiment, the second elastic film 552 and the first elastic film 551 are symmetrically disposed relative to the diaphragm 521, so that forces on the two sides of the diaphragm 521 are more balanced. Therefore, the vibration assembly 52 is not prone to deflect in a movement process, and a more stable sound field is obtained. This improves sound quality of the speaker 3.

In an implementation scenario of another embodiment, the second elastic film 552 and the first elastic film 551 may not be symmetrically disposed relative to the diaphragm 521, to reduce product assembly difficulty, facilitate assembly, and improve product assembly efficiency. A specific setting manner may be determined based on an actual application scenario. This is not limited in this application.

In this embodiment, a structure of the second elastic film 552 is the same as that of the first elastic film 551. Therefore, the second elastic film 552 and the first elastic film 551 may be processed by using one set of molds, to ensure higher consistency between the second elastic film 552 and the first elastic film 551, and ensure that the vibration assembly is more stable in a moving process. The second elastic film 552 adopts a semi-arc design, and is configured to increase moving in a vibration direction. During actual use, another effective means of increasing moving may be used, for example, an elliptical design is used, or the second elastic film uses a material with a high elastic modulus. A quantity of second elastic films 552 and a shape of the second elastic film 552 are not limited in this application. Certainly, in another embodiment, a structure of the second elastic film 552 may alternatively be different from that of the first elastic film 551.

In an implementation scenario of another embodiment, the suspension piece 55 may alternatively include at least one second elastic film 552. In other words, the suspension piece 55 may include one second elastic film 552, or the suspension piece 55 may alternatively include a plurality of second elastic films 552. When the suspension piece 55 includes only one second elastic film 552, the second elastic film 552 may be disposed only at one end of the second voice coil 523. When the suspension piece 55 includes a plurality of second elastic films 552, the plurality of second elastic films 552 are arranged at intervals at a circumferential edge of the second voice coil 523. In another implementation scenario of another embodiment, the second elastic film 552 may alternatively be an annular film disposed around the second voice coil 523. An inner side of the second elastic film 552 is connected to the second voice coil 523, and an outer side of the second elastic film 552 is connected to the frame body 512. A quantity of second elastic films 552 and a shape of the second elastic film 552 are not limited in this application.

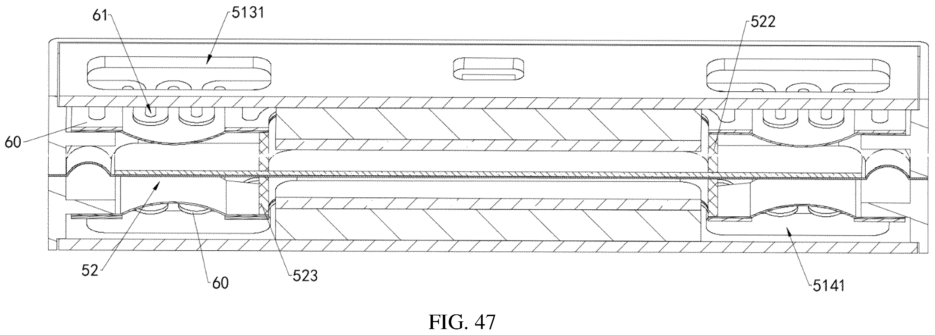

In another embodiment, refer to FIG. 47. FIG. 47 is a diagram of a structure of the speaker 3 shown in FIG. 46 in another implementation.

A structure of the speaker 3 in this embodiment is roughly the same as the structure of the speaker 3 shown in FIG. 46, and a same part is not described again. A difference is that a vibration assembly 52 in this embodiment may further include a flexible printed circuit board 60. There are a plurality of flexible printed circuit boards 60. A flexible printed circuit board 60 is disposed on each first elastic film 551 and each second elastic film 552. One end of the flexible printed circuit board 60 disposed on the first elastic film 551 is electrically connected to the first voice coil 522, and the other end is electrically connected to a circuit board 40. One end of the flexible printed circuit board 60 disposed on the second elastic film 552 is electrically connected to the second voice coil 523, and the other end is electrically connected to the circuit board 40.

In this embodiment, the first voice coil 522 and the second voice coil 523 are electrically connected to the circuit board 40 by using the flexible printed circuit board 60. Certainly, in another embodiment, the first voice coil 522 and the second voice coil 523 may alternatively be electrically connected to the circuit board 40 by using an external wire or a voice coil line. However, compared with the external wire or the voice coil line, the flexible printed circuit board 60 are used to electrically connect the first voice coil 522 and the second voice coil 523 to the circuit board 40, so that electrical reliability of the vibration assembly 52 is better.

In another embodiment, there may be one or more flexible printed circuit boards 60. For example, there may be two flexible printed circuit boards 60, one is disposed on one of the first elastic films 551, and the other is disposed on one of the second elastic films 552, so that the first voice coil 522 and the second voice coil 523 are electrically connected to the circuit board 40.

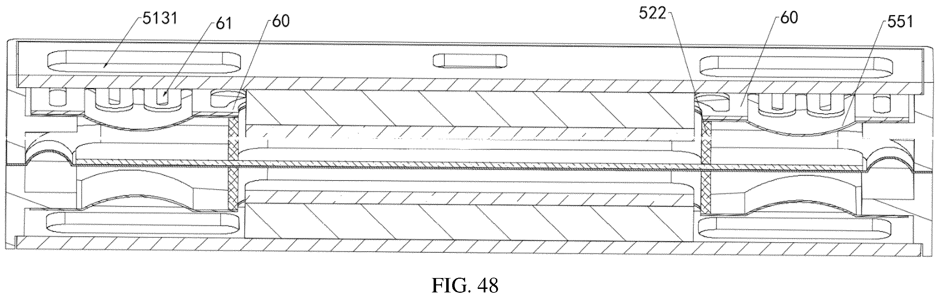

In another embodiment, the flexible printed circuit board 60 may alternatively be disposed only on the first elastic film 551. As shown in FIG. 48, FIG. 48 is a diagram of a structure of the speaker 3 shown in FIG. 6 in another embodiment. Compared with disposing the flexible printed circuit board 60 only on the first elastic film 551, disposing a flexible printed circuit board 60 on each of the first elastic film 551 and the second elastic film 552 optimizes electrical reliability of the vibration assembly 52, and ensures structural symmetry of the entire speaker 3 relative to two sides of a surface of the diaphragm 521, so that sound wave transfer channels and air volumes enclosed on the two sides of the diaphragm 521 remain approximately equal, to achieve an excellent superposition cancellation effect of the dipole.

In this embodiment, gaps 61 are provided on the flexible printed circuit board 60, and the gaps 61 are provided opposite to the first sound outlet hole 5131 and the second sound outlet hole 5141, to minimize impact on sound wave transmission and reduce a loss of a sound wave in a propagation process.

In another implementation scenario of another embodiment, the gap 61 on the flexible printed circuit board 60 may not be disposed in correspondence with the sound outlet hole, or the flexible printed circuit board 60 may not be provided with a gap.

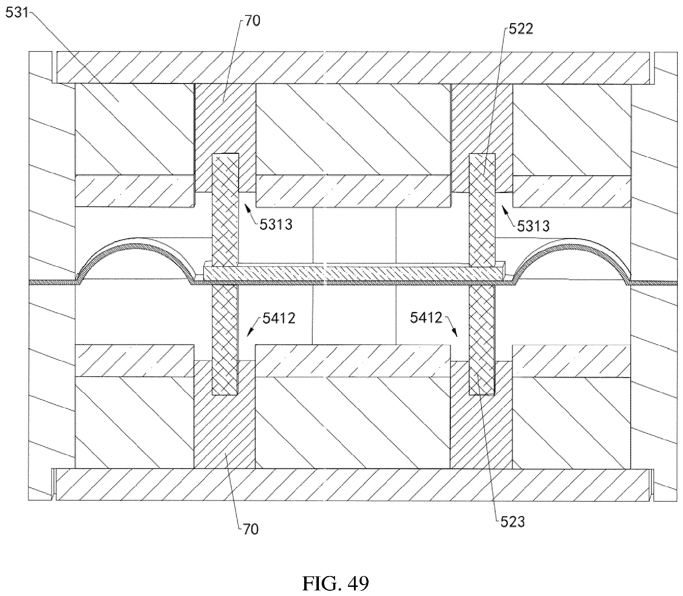

In another embodiment, refer to FIG. 49. FIG. 49 is a diagram of a structure of the speaker 3 shown in FIG. 6 in another implementation.

The structure of this embodiment is roughly the same as the structure of the embodiment shown in FIG. 47, and a same part is not described again. A difference lies in that a magnetic liquid 70 is further disposed in the first gap 5313 in the first magnetic circuit assembly 53 in this application. Specifically, the magnetic fluid 70 is a functional material that has both liquid fluidity and magnetism of a solid magnetic material. When the magnetic fluid 70 is static, the magnetic fluid 70 has no magnetic attraction. When an external magnetic field is applied, the magnetic fluid 70 is magnetic. Therefore, when the magnetic fluid 70 is filled in the first gap 5313, because the first magnetic steel 531 generates a magnetic field, the magnetic fluid 70 is adsorbed in the first gap 5313 and does not drop.

In a vibration process of the vibration assembly 52, when the first voice coil 522 is powered on and performs the movement of cutting the magnetic induction line in the thickness direction of the speaker due to an effect of a Lorentz force, the first voice coil 522 further generates vibration in a non-thickness direction of the speaker, and moves or tilts in the non-thickness direction of the speaker. A phenomenon that the first voice coil 522 collides with the first magnetic steel 531 in the vibration process may occur.

However, in this embodiment, the first gap 5313 is filled with the magnetic fluid 70. Because the magnetic fluid 70 has liquid fluidity, when the first voice coil 522 partially extends into the first gap 5313, the magnetic fluid 70 may wrap a part that the first voice coil 522 extends into the first gap 5313. When the first voice coil 522 generates vibration in the non-thickness direction of the speaker in the vibration process, the magnetic fluid 70 limits moving or tilting of the first voice coil 522 in the non-thickness direction of the speaker, to reduce the moving or tilting of the first voice coil 522 in the non-thickness direction of the speaker. In addition, due to fluidity of the magnetic fluid 70, limitation of the magnetic fluid 70 on the first voice coil 522 does not affect movement of the first voice coil 522, so that the first voice coil 522 vibrates more stably in the vibration process and avoids colliding with the first magnetic steel 531, and vibration stability of a vibration system is improved.

In another aspect, in a conventional speaker design, to avoid a phenomenon that the first voice coil 522 collides with the first magnetic steel 531, the first gap 5313 is designed to be wide enough. However, in this embodiment, the first gap 5313 is filled with the magnetic liquid 70 to mitigate the collision problem. Therefore, in a design aspect of the speaker 3, a width of the first gap 5313 may be further reduced, magnetic field intensity may be improved, and working efficiency of the speaker may be improved. In addition, the first gap 5313 is reduced, and overall integration of the speaker 3 is further improved. This is conducive to miniaturization of the speaker.

Correspondingly, because the second magnetic circuit assembly 54 and the first magnetic circuit assembly 53 are symmetrically disposed relative to the vibration assembly 52, the second gap 5412 in the second magnetic circuit assembly 54 is also correspondingly filled with a magnetic liquid 70, and wraps a part of the second voice coil 523. Certainly, in another embodiment, either of the first gap 5313 and the second gap 5412 may alternatively be filled with a magnetic liquid 70.

Refer to FIG. 5, FIG. 6, and FIG. 38 again. One of the first sound outlet hole 5131 and the second sound outlet hole 5141 of the speaker 3 may communicate with the first space 411, and the other may communicate with the second space 412, to communicate with the first sound emitting hole 42 and the second sound emitting hole 43. For example, this embodiment is described by using an example in which the first sound outlet hole 5131 communicates with the first space 411 and the first sound emitting hole 42, and the second sound outlet hole 5141 communicates with the second space 412 and the second sound emitting hole 43. When the speaker module 30 is mounted in the glasses temple 12 (that is, mounted inside the housing), the first sound outlet hole 5131 of the speaker 3 communicates with the first channel 1228 and the first sound output hole 13, and the second sound outlet hole 5141 communicates with the second channel 1229 and the second sound output hole 14. For example, the first sound output hole 13 may be aligned with some holes of the first sound outlet hole 5131, and the second sound output hole 14 may be aligned with some holes of the second sound outlet hole 5141.

In some other embodiments, the speaker 3 may be a moving coil speaker of another structure, or may be a piezoelectric speaker, a micro-electro-mechanical system (Micro-Electro-Mechanical System, MEMS) speaker, or the like.

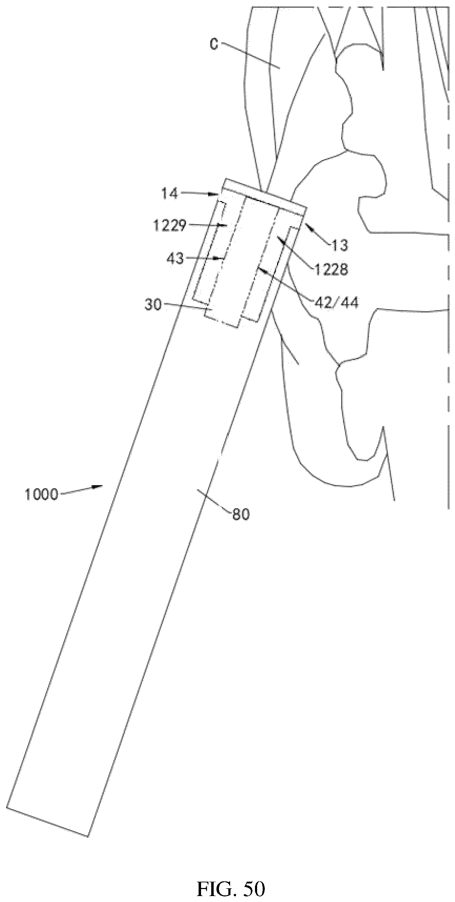

FIG. 50 is a diagram of a structure of another electronic device 1000 according to an embodiment.

In this embodiment, the electronic device 1000 is a mobile phone. The electronic device 1000 includes a housing 80 and a speaker module 30. The speaker module 30 is accommodated inside the housing 80. The housing 80 includes a first sound output hole 13 and a second sound output hole 14 that are disposed opposite to each other. A first sound emitting hole 42 and a third sound emitting hole 44 of the speaker module 30 communicate with a first channel 1228 and the first sound output hole 13, and a second sound emitting hole 43 of the speaker module 30 communicates with a second channel 1229 and the second sound output hole 14.

It may be understood that, the speaker module 30 and the speaker 3 of the speaker module 30 in this embodiment may be the speaker 3 described in any one of the foregoing embodiments. Because the speaker module 30 in this application has a very good effect of reducing a sound leakage, the electronic device 1000 having the speaker module 30 can effectively protect user privacy and improve user experience.

A first sound wave emitted from the first sound emitting hole 42 and a third sound wave emitted from the third sound emitting hole 44 are emitted from the first sound output hole 13 through the first channel 1228, and a second sound wave emitted from the second sound emitting hole 43 is emitted from the second sound output hole 14 through the second channel 1229. The second sound wave and the first sound wave have equal amplitudes and opposite phases, and the third sound wave and the first sound wave have same phases.

When using the electronic device 1000, a user places the second sound output hole 14 close to an ear C of a wearer, and the first sound output hole 13 is closer to the ear C of the wearer relative to the second sound output hole 14. For a person around the wearer, a sound dipole effect can be formed. Specifically, a distance between the two sound output holes may be ignored, distances from the two sound output holes to an ear C of a surrounding person are close, and sound waves of opposite phases of the two sound output holes cancel each other when reaching a position of the ear C of the surrounding person, to reduce a sound leakage. For the wearer, there is a large difference between distances from the two sound output holes to the ear C of the wearer, and a condition of a sound dipole effect is not met. A sound wave cancellation degree is small. Therefore, the wearer can hear a sound with proper loudness. In addition, superposition of the third sound wave and the first sound wave helps improve a frequency response, so that the wearer can feel a better sense of hearing.

It should be noted that embodiments in this application and features in embodiments may be combined with each other without a conflict, and any combination of features in different embodiments also falls within the protection scope of this application. In other words, the foregoing described plurality of embodiments may further be combined according to an actual requirement. All the foregoing accompanying drawings are examples of this application, and do not represent an actual size of a product. In addition, a size proportion relationship between components in the accompanying drawings is not intended to limit an actual product in this application.

While the above description is useful to illustrate the invention, said invention is defined in the appended claims which follow.

## Claims

1. A speaker module (30), comprising a housing (80) and a speaker, wherein
the housing (80) has mounting space (41), the speaker is fastened in the mounting space (41), and divides the mounting space (41) into first space (411) and second space (412), and when the speaker works, a first sound wave is formed in the first space (411), and a second sound wave is formed in the second space (412), wherein the second sound wave and the first sound wave have equal amplitudes and opposite phases;
the housing (80) further has a first sound emitting hole and a second sound emitting hole that are disposed opposite to each other, the first sound emitting hole communicates with the first space (411), and the second sound emitting hole communicates with the second space (412); and
the housing (80) further has a third sound emitting hole and an inverter cavity (45), one end of the inverter cavity communicates with the second space (412), the other end of the inverter cavity communicates with the third sound emitting hole, the inverter cavity (45) is configured to form a third sound wave at the third sound emitting hole when the speaker works, a phase of the third sound wave is the same as a phase of the first sound wave, and the third sound wave is superposed with the first sound wave passing through the first sound emitting hole;
wherein the speaker comprises a base (31, 51), a vibration assembly (32, 52), and a magnetic circuit assembly (33);
the base (31, 51) has an inner cavity (311, 511);
the magnetic circuit assembly (33) is disposed in the inner cavity (311, 511), and the magnetic circuit assembly (33) has a magnetic gap (333, 3331, 3332);
the vibration assembly (32, 52) comprises a first diaphragm (321), a second diaphragm (322), and a voice coil (323), wherein the first diaphragm (321) and the second diaphragm (322) are respectively located on two opposite sides of the magnetic circuit assembly (33), circumferential edges of the first diaphragm (321) and the second diaphragm (322) are connected to the base (31, 51), the voice coil (323) is located inside the magnetic gap (333, 3331, 3332), and two opposite sides of the voice coil (323) are respectively connected to the first diaphragm (321) and the second diaphragm (322); and
one of the first diaphragm (321) and the second diaphragm (322) faces the first space (411), and the other faces the second space (412); and
wherein the voice coil (323) comprises a first end face (3234) and a second end face (3235) that are disposed opposite to each other, both the first end face (3234) and the second end face (3235) are perpendicular to a central axis of the voice coil (323), the first end face (3234) is connected to the first diaphragm (321), and the second end face (3235) is connected to the second diaphragm (322).

2. The speaker module (30) according to claim 1, wherein a sound emitting direction of the third sound emitting hole is the same as a sound emitting direction of the first sound emitting hole.

3. The speaker module (30) according to claim 1, wherein the third sound wave produces resonance in a frequency band range of 50 Hz to 200 Hz.

4. The speaker module (30) according to claim 1, wherein the voice coil (323) comprises a first side part (3231) and a second side part (3232) that are disposed opposite to each other, both the first side part (3231) and the second side part (3232) are parallel to a central axis of the voice coil (323), the first side part (3231) is connected to the first diaphragm (321), and the second side part (3232) is connected to the second diaphragm (322); and
wherein the magnetic circuit assembly (33) comprises a first part and a second part, both the first part and the second part are magnetic, the first part and the second part are spaced from each other, and the magnetic gap (333, 3331, 3332) is formed between the first part and the second part.

5. The speaker module (30) according to any one of claims 1 to 4, wherein there are a plurality of voice coils (323), and the plurality of voice coils (323) are arranged in a length direction of the speaker.

6. The speaker module (30) according to claim 5, wherein the magnetic gap (333, 3331, 3332) extends in the length direction of the speaker, and the plurality of voice coils (323) are arranged at intervals in the magnetic gap (333, 3331, 3332); or the speaker comprises a plurality of magnetic gaps (333, 3331, 3332), the plurality of magnetic gaps (333, 3331, 3332) are provided at intervals in the length direction of the speaker, and the plurality of voice coils (323) are located inside the plurality of magnetic gaps (333, 3331, 3332) in a one-to-one correspondence.

7. The speaker module (30) according to any one of claims 1 to 4, wherein the first diaphragm (321) and the second diaphragm (322) are symmetrically disposed relative to the magnetic circuit assembly (33).

8. A speaker module (30), comprising a housing (80) and a speaker, wherein
the housing (80) has mounting space (41), the speaker is fastened in the mounting space (41), and divides the mounting space (41) into first space (411) and second space (412), and when the speaker works, a first sound wave is formed in the first space (411), and a second sound wave is formed in the second space (412), wherein the second sound wave and the first sound wave have equal amplitudes and opposite phases;
the housing (80) further has a first sound emitting hole and a second sound emitting hole that are disposed opposite to each other, the first sound emitting hole communicates with the first space (411), and the second sound emitting hole communicates with the second space (412); and
the housing (80) further has a third sound emitting hole and an inverter cavity (45), one end of the inverter cavity communicates with the second space (412), the other end of the inverter cavity communicates with the third sound emitting hole, the inverter cavity (45) is configured to form a third sound wave at the third sound emitting hole when the speaker works, a phase of the third sound wave is the same as a phase of the first sound wave, and the third sound wave is superposed with the first sound wave passing through the first sound emitting hole;
wherein the speaker comprises a base (31, 51), a vibration assembly (32, 52), a first magnetic circuit assembly (34, 53), and a second magnetic circuit assembly (35, 54), the base (31, 51) has an inner cavity (311, 511), the vibration assembly (32, 52) is disposed in the inner cavity (311, 511), and the first magnetic circuit assembly (34, 53) and the second magnetic circuit assembly (35, 54) are respectively located on two sides of the vibration assembly (32, 52) and are symmetrically disposed relative to the vibration assembly (32, 52);
the vibration assembly (32, 52) comprises a diaphragm (321, 322, 521), a first voice coil (522), and a second voice coil (523), the diaphragm (321, 322, 521), the first voice coil (522), and the second voice coil (523) are stacked in a first direction, the diaphragm (321, 322, 521) comprises a first surface (5211) and a second surface (5212) that are disposed opposite to each other in the first direction, and the diaphragm (321, 322, 521) divides the inner cavity (311, 511) into a first sound cavity (5112) and a second sound cavity (5113); the first voice coil (522) is fastened to the first surface (5211), and the second voice coil (523) is fastened to the second surface (5212); the first magnetic circuit assembly (34, 53) and the second magnetic circuit assembly (35, 54) are respectively located in the first sound cavity (5112) and the second sound cavity (5113); and
the first sound cavity communicates with the first space (411), and the second sound cavity communicates with the second space (412).

9. The speaker module (30) according to claim 8, wherein a projection of the first voice coil (522) on the first surface (5211) is a ring, a height of the first voice coil (522) in the first direction is a first height, a distance between the first magnetic circuit assembly (34, 53) and the first surface (5211) is a first distance, and the first height is greater than the first distance; and/or a projection of the second voice coil (523) on the second surface (5212) is a ring, a height of the second voice coil (523) in the first direction is a second height, a distance between the second magnetic circuit assembly (35, 54) and the second surface (5212) is a second distance, and the second height is greater than the second distance.

10. The speaker module (30) according to claim 8, wherein the first voice coil (522) and the second voice coil (523) are symmetrically disposed relative to the diaphragm (321, 322, 521), and the first magnetic circuit assembly (34, 53) and the second magnetic circuit assembly (35, 54) are symmetrically disposed relative to the diaphragm (321, 322, 521).

11. The speaker module (30) according to any one of claims 8 to 10, wherein the base (31, 51) comprises a frame body (111, 312, 512), a first cover plate (313, 513), and a second cover plate (314, 514), the first cover plate (313, 513) and the second cover plate (314, 514) respectively cover two opposite sides of the frame body (111, 312, 512), the diaphragm (321, 322, 521) is connected to inside of the frame body (111, 312, 512), the first magnetic circuit assembly (34, 53) and the second magnetic circuit assembly (35, 54) are respectively connected to the first cover plate (313, 513) and the second cover plate (314, 514), the first cover plate (313, 513) comprises a first sound outlet hole (5131), the second cover plate (314, 514) comprises a second sound outlet hole (5141), and the first sound outlet hole (5131) and the second sound outlet hole (5141) are symmetrical relative to the diaphragm (321, 322, 521); and the first sound outlet hole (5131) communicates with the first space (411), and the second sound outlet hole (5141) communicates with the second space (412).

12. The speaker module (30) according to any one of claims 8 to 10, wherein the first magnetic circuit assembly (34, 53) comprises a first gap (5313), the second magnetic circuit assembly (35, 54) comprises a second gap (5412), the first gap (5313) and the second gap (5412) are symmetrically disposed relative to the diaphragm (321, 322, 521), the first voice coil (522) extends at least partially into the first gap (5313), and the second voice coil (523) extends at least partially into the second gap (5412).

13. An electronic device (1000), wherein the electronic device (1000) comprises a housing (80) and the speaker module (30) according to any one of claims 1 to 7 or any one of claims 8 to 12, the housing (80) has a first sound output hole (13) and a second sound output hole (14), the speaker module (30) is mounted inside the housing (80), both a first sound emitting hole and a third sound emitting hole of the speaker module communicate with the first sound output hole (13), and a second sound emitting hole of the speaker module communicates with the second sound output hole (14).

## Patentansprüche

1. Lautsprechermodul (30), umfassend ein Gehäuse (80) und einen Lautsprecher, wobei
das Gehäuse (80) einen Montageraum (41) aufweist, der Lautsprecher in dem Montageraum (41) befestigt ist und den Montageraum (41) in einen ersten Raum (411) und einen zweiten Raum (412) aufteilt, und, wenn der Lautsprecher betrieben wird, in dem ersten Raum (411) eine erste Schallwelle gebildet wird und in dem zweiten Raum (412) eine zweite Schallwelle gebildet wird, wobei die zweite Schallwelle und die erste Schallwelle die gleiche Amplitude und entgegengesetzte Phasen aufweisen;
das Gehäuse (80) ferner eine erste Schallemissionsöffnung und eine zweite Schallemissionsöffnung aufweist, die einander gegenüberliegend angeordnet sind, die erste Schallemissionsöffnung mit dem ersten Raum (411) in Verbindung steht und die zweite Schallemissionsöffnung mit dem zweiten Raum (412) in Verbindung steht; und
das Gehäuse (80) ferner eine dritte Schallemissionsöffnung und einen Wechselrichterhohlraum (45) aufweist, ein Ende des Wechselrichterhohlraums mit dem zweiten Raum (412) in Verbindung steht, das andere Ende des Wechselrichterhohlraums mit der dritten Schallemissionsöffnung in Verbindung steht, der Wechselrichterhohlraum (45) dazu konfiguriert ist, an der dritten Schallemissionsöffnung eine dritte Schallwelle zu bilden, wenn der Lautsprecher betrieben wird, eine Phase der dritten Schallwelle gleich der Phase der ersten Schallwelle ist und die erste Schallwelle, welche durch die erste Schallemissionsöffnung tritt, die dritte Schallwelle überlagert;
wobei der Lautsprecher eine Basis (31, 51), eine Schwingungsbaugruppe (32, 52) und eine Magnetkreisbaugruppe (33) umfasst;
die Basis (31, 51) einen inneren Hohlraum (311, 511) aufweist;
die Magnetkreisbaugruppe (33) in dem inneren Hohlraum (311, 511) angeordnet ist und die Magnetkreisbaugruppe (33) einen Magnetspalt (333, 3331, 3332) aufweist;
die Schwingungsbaugruppe (32, 52) eine erste Membran (321), eine zweite Membran (322) und eine Schwingspule (323) umfasst, wobei sich die erste Membran (321) und die zweite Membran (322) jeweils auf zwei gegenüberliegenden Seiten der Magnetkreisbaugruppe (33) befinden, Umfangskanten der ersten Membran (321) und der zweiten Membran (322) mit der Basis (31, 51) verbunden sind, sich die Schwingspule (323) innerhalb des Magnetspalts (333, 3331, 3332) befindet und zwei gegenüberliegende Seiten der Schwingspule (323) jeweils mit der ersten Membran (321) und der zweiten Membran (322) verbunden sind; und
eine von der ersten Membran (321) und der zweiten Membran (322) dem ersten Raum (411) zugewandt ist und die andere dem zweiten Raum (412) zugewandt ist; und
wobei die Schwingspule (323) eine erste Endfläche (3234) und eine zweite Endfläche (3235) umfasst, die einander gegenüberliegend angeordnet sind, wobei sowohl die erste Endfläche (3234) als auch die zweite Endfläche (3235) senkrecht zu einer Mittelachse der Schwingspule (323) sind, die erste Endfläche (3234) mit der ersten Membran (321) verbunden ist und die zweite Endfläche (3235) mit der zweiten Membran (322) verbunden ist.

2. Lautsprechermodul (30) nach Anspruch 1, wobei eine Schallemissionsrichtung der dritten Schallemissionsöffnung die gleiche ist wie eine Schallemissionsrichtung der ersten Schallemissionsöffnung.

3. Lautsprechermodul (30) nach Anspruch 1, wobei die dritte Schallwelle eine Resonanz in einem Frequenzbandbereich von 50 Hz bis 200 Hz erzeugt.

4. Lautsprechermodul (30) nach Anspruch 1, wobei die Schwingspule (323) ein erstes Seitenteil (3231) und ein zweites Seitenteil (3232) umfasst, die einander gegenüberliegend angeordnet sind, wobei sowohl das erste Seitenteil (3231) als auch das zweite Seitenteil (3232) parallel zu einer Mittelachse der Schwingspule (323) verlaufen, das erste Seitenteil (3231) mit der ersten Membran (321) verbunden ist und das zweite Seitenteil (3232) mit der zweiten Membran (322) verbunden ist; und
wobei die Magnetkreisbaugruppe (33) einen ersten und einen zweiten Teil umfasst, wobei sowohl der erste Teil als auch der zweite Teil magnetisch sind, der erste Teil und der zweite Teil voneinander beabstandet sind und der Magnetspalt (333, 3331, 3332) zwischen dem ersten Teil und dem zweiten Teil gebildet ist.

5. Lautsprechermodul (30) nach einem der Ansprüche 1 bis 4, wobei eine Vielzahl von Schwingspulen (323) vorhanden ist und die Vielzahl von Schwingspulen (323) in einer Längsrichtung des Lautsprechers angeordnet ist.

6. Lautsprechermodul (30) nach Anspruch 5, wobei sich der Magnetspalt (333, 3331, 3332) in der Längsrichtung des Lautsprechers erstreckt und die Vielzahl von Schwingspulen (323) in regelmäßigen Abständen in dem Magnetspalt (333, 3331, 3332) angeordnet ist; oder der Lautsprecher eine Vielzahl von Magnetspalten (333, 3331, 3332) umfasst, wobei die Vielzahl von Magnetspalten (333, 3331, 3332) in der Längsrichtung des Lautsprechers in regelmäßigen Abständen angeordnet ist und sich die Vielzahl von Schwingspulen (323) in einer Eins-zu-Eins-Entsprechung auf der Innenseite der Magnetspalten (333, 3331, 3332) befindet.

7. Lautsprechermodul (30) nach einem der Ansprüche 1 bis 4, wobei die erste Membran (321) und die zweite Membran (322) bezogen auf die Magnetkreisbaugruppe (33) symmetrisch angeordnet sind.

8. Lautsprechermodul (30), umfassend ein Gehäuse (80) und einen Lautsprecher, wobei
das Gehäuse (80) einen Montageraum (41) aufweist, der Lautsprecher in dem Montageraum (41) befestigt ist und den Montageraum (41) in einen ersten Raum (411) und einen zweiten Raum (412) aufteilt, und, wenn der Lautsprecher betrieben wird, in dem ersten Raum (411) eine erste Schallwelle gebildet wird und in dem zweiten Raum (412) eine zweite Schallwelle gebildet wird, wobei die zweite Schallwelle und die erste Schallwelle die gleiche Amplitude und entgegengesetzte Phasen aufweisen;
das Gehäuse (80) ferner eine erste Schallemissionsöffnung und eine zweite Schallemissionsöffnung aufweist, die einander gegenüberliegend angeordnet sind, die erste Schallemissionsöffnung mit dem ersten Raum (411) in Verbindung steht und die zweite Schallemissionsöffnung mit dem zweiten Raum (412) in Verbindung steht; und
das Gehäuse (80) ferner eine dritte Schallemissionsöffnung und einen Wechselrichterhohlraum (45) aufweist, ein Ende des Wechselrichterhohlraums mit dem zweiten Raum (412) in Verbindung steht, das andere Ende des Wechselrichterhohlraums mit der dritten Schallemissionsöffnung in Verbindung steht, der Wechselrichterhohlraum (45) dazu konfiguriert ist, an der dritten Schallemissionsöffnung eine dritte Schallwelle zu bilden, wenn der Lautsprecher betrieben wird, eine Phase der dritten Schallwelle gleich der Phase der ersten Schallwelle ist und die erste Schallwelle, welche durch die erste Schallemissionsöffnung tritt, die dritte Schallwelle überlagert;
wobei der Lautsprecher eine Basis (31, 51), eine Schwingungsbaugruppe (32, 52), eine erste Magnetkreisbaugruppe (34, 53) und eine zweite Magnetkreisbaugruppe (35, 54) umfasst, die Basis (31, 51) einen inneren Hohlraum (311, 511) aufweist, die Schwingungsbaugruppe (32, 52) in dem inneren Hohlraum (311, 511) angeordnet ist und die erste Magnetkreisbaugruppe (34, 53) und sich die zweite Magnetkreisbaugruppe (35, 54) jeweils auf zwei Seiten der Schwingungsbaugruppe (32, 52) befinden und bezogen auf die Schwingungsbaugruppe (32, 52) symmetrisch angeordnet sind;
die Schwingungsbaugruppe (32, 52) eine Membran (321, 322, 521), eine erste Schwingspule (522) und eine zweite Schwingspule (523) umfasst, die Membran (321, 322, 521), die erste Schwingspule (522) und die zweite Schwingspule (523) in einer ersten Richtung gestapelt sind, die Membran (321, 322, 521) eine erste Fläche (5211) und eine zweite Fläche (5212) umfasst, die in der ersten Richtung einander gegenüberliegend angeordnet sind, und die Membran (321, 322, 521) den inneren Hohlraum (311, 511) in einen ersten Schallhohlraum (5112) und einen zweiten Schallhohlraum (5113) unterteilt; die erste Schwingspule (522) an der ersten Fläche (5211) befestigt ist und die zweite Schwingspule (523) an der zweiten Fläche (5212) befestigt ist; sich die erste Magnetkreisbaugruppe (34, 53) und die zweite Magnetkreisbaugruppe (35, 54) jeweils in dem ersten Schallhohlraum (5112) und dem zweiten Schallhohlraum (5113) befinden; und
der erste Schallhohlraum mit dem ersten Raum (411) in Verbindung steht und der zweite Schallhohlraum mit dem zweiten Raum (412) in Verbindung steht.

9. Lautsprechermodul (30) nach Anspruch 8, wobei ein Vorsprung der ersten Schwingspule (522) auf der ersten Fläche (5211) ein Ring ist, eine Höhe der ersten Schwingspule (522) in der ersten Richtung eine erste Höhe ist, eine Entfernung zwischen der ersten Magnetkreisbaugruppe (34, 53) und der ersten Fläche (5211) eine erste Entfernung ist und die erste Höhe größer als die erste Entfernung ist; und/oder ein Vorsprung der zweiten Schwingspule (523) auf der zweiten Fläche (5212) ein Ring ist, eine Höhe der zweiten Schwingspule (523) in der ersten Richtung eine zweite Höhe ist, eine Entfernung zwischen der zweiten Magnetkreisbaugruppe (35, 54) und der zweiten Fläche (5212) eine zweite Entfernung ist und die zweite Höhe größer als die zweite Entfernung ist.

10. Lautsprechermodul (30) nach Anspruch 8, wobei die erste Schwingspule (522) und die zweite Schwingspule (523) bezogen auf die Membran (321, 322, 521) symmetrisch angeordnet sind und die erste Magnetkreisbaugruppe (34, 53) und die zweite Magnetkreisbaugruppe (35, 54) bezogen auf die Membran (321, 322, 521) symmetrisch angeordnet sind.

11. Lautsprechermodul (30) nach einem der Ansprüche 8 bis 10, wobei die Basis (31, 51) einen Rahmenkörper (111, 312, 512), eine erste Abdeckplatte (313, 513) und eine zweite Abdeckplatte (314, 514) umfasst, die erste Abdeckplatte (313, 513) und die zweite Abdeckplatte (314, 514) jeweils zwei gegenüberliegende Seiten des Rahmenkörpers (111, 312, 512) abdecken, die Membran (321, 322, 521) mit einer Innenseite des Rahmenkörpers (111, 312, 512) verbunden ist, die erste Magnetkreisbaugruppe (34, 53) und die zweite Magnetkreisbaugruppe (35, 54) jeweils mit der ersten Abdeckplatte (313, 513) und der zweiten Abdeckplatte (314, 514) verbunden sind, die erste Abdeckplatte (313, 513) eine erste Schallaustrittsöffnung (5131) umfasst, die zweite Abdeckplatte (314, 514) eine zweite Schallaustrittsöffnung (5141) umfasst und die erste Schallaustrittsöffnung (5131) und die zweite Schallaustrittsöffnung (5141) bezogen auf die Membran (321, 322, 521) symmetrisch sind; und die erste Schallaustrittsöffnung (5131) mit dem ersten Raum (411) in Verbindung steht und die zweite Schallaustrittsöffnung (5141) mit dem zweiten Raum (412) in Verbindung steht.

12. Lautsprechermodul (30) nach einem der Ansprüche 8 bis 10, wobei die erste Magnetkreisbaugruppe (34, 53) einen ersten Spalt (5313) umfasst, die zweite Magnetkreisbaugruppe (35, 54) einen zweiten Spalt (5412) umfasst, der erste Spalt (5313) und der zweite Spalt (5412) bezogen auf die Membran (321, 322, 521) symmetrisch angeordnet sind, sich die erste Schwingspule (522) mindestens teilweise in den ersten Spalt (5313) erstreckt und sich die zweite Schwingspule (523) mindestens teilweise in den zweiten Spalt (5412) erstreckt.

13. Elektronische Vorrichtung (1000), wobei die elektronische Vorrichtung (1000) ein Gehäuse (80) und das Lautsprechermodul (30) nach einem der Ansprüche 1 bis 7 oder einem der Ansprüche 8 bis 12 umfasst, das Gehäuse (80) eine erste Schallaustrittsöffnung (13) und eine zweite Schallaustrittsöffnung (14) aufweist, das Lautsprechermodul (30) an der Innenseite des Gehäuses (80) montiert ist, sowohl eine erste Schallemissionsöffnung als auch eine dritte Schallemissionsöffnung des Lautsprechermoduls mit der ersten Schallaustrittsöffnung (13) in Verbindung stehen und eine zweite Schallemissionsöffnung des Lautsprechermoduls mit der zweiten Schallaustrittsöffnung (14) in Verbindung steht.

## Revendications

1. Module de haut-parleur (30), comprenant un boîtier (80) et un haut-parleur, dans lequel
le boîtier (80) a un espace de montage (41), le haut-parleur est fixé dans l'espace de montage (41), et divise l'espace de montage (41) en un premier espace (411) et un second espace (412), et lorsque le haut-parleur fonctionne, une première onde sonore est formée dans le premier espace (411), et une deuxième onde sonore est formée dans le second espace (412), dans lequel la deuxième onde sonore et la première onde sonore ont des amplitudes égales et des phases opposées ;
le boîtier (80) a également un premier orifice d'émission sonore et un deuxième orifice d'émission sonore qui sont disposés opposés l'un de l'autre, le premier orifice d'émission sonore communique avec le premier espace (411), et le deuxième orifice d'émission sonore communique avec le second espace (412) ; et le boîtier (80) a également un troisième orifice d'émission sonore et une cavité d'onduleur (45), une extrémité de la cavité d'onduleur communique avec le second espace (412), l'autre extrémité de la cavité d'onduleur communique avec le troisième orifice d'émission sonore, la cavité d'onduleur (45) est configurée pour former une troisième onde sonore au niveau du troisième orifice d'émission sonore lorsque le haut-parleur fonctionne, une phase de la troisième onde sonore est la même qu'une phase de la première onde sonore, et la troisième onde sonore est superposée à la première onde sonore traversant le premier orifice d'émission sonore ;
dans lequel le haut-parleur comprend une base (31, 51), un ensemble de vibration (32, 52) et un ensemble de circuit magnétique (33) ;
la base (31, 51) a une cavité intérieure (311, 511) ;
l'ensemble de circuit magnétique (33) est disposé dans la cavité intérieure (311, 511), et l'ensemble de circuit magnétique (33) a un entrefer magnétique (333, 3331, 3332) ;
l'ensemble de vibration (32, 52) comprend un premier diaphragme (321), un second diaphragme (322) et une bobine acoustique (323), dans lequel le premier diaphragme (321) et le second diaphragme (322) sont respectivement situés sur deux côtés opposés de l'ensemble de circuit magnétique (33), les bords circonférentiels du premier diaphragme (321) et du second diaphragme (322) sont reliés à la base (31, 51), la bobine acoustique (323) est située à l'intérieur de l'entrefer magnétique (333, 3331, 3332), et deux côtés opposés de la bobine acoustique (323) sont respectivement reliés au premier diaphragme (321) et au second diaphragme (322) ; et
l'un du premier diaphragme (321) et du second diaphragme (322) font face au premier espace (411), et l'autre fait face au second espace (412) ; et
dans lequel la bobine acoustique (323) comprend une première face d'extrémité (3234) et une seconde face d'extrémité (3235) qui sont disposées opposées l'une à l'autre, à la fois la première face d'extrémité (3234) et la seconde face d'extrémité (3235) sont perpendiculaires à un axe central de la bobine acoustique (323), la première face d'extrémité (3234) est reliée au premier diaphragme (321) et la seconde face d'extrémité (3235) est reliée au second diaphragme (322).

2. Module de haut-parleur (30) selon la revendication 1, dans lequel la direction d'émission sonore du troisième orifice d'émission sonore est la même qu'une direction d'émission sonore du premier orifice d'émission sonore.

3. Module de haut-parleur (30) selon la revendication 1, dans lequel la troisième onde sonore produit une résonance dans une plage de bandes de fréquences comprise entre 50 Hz et 200 Hz.

4. Module de haut-parleur (30) selon la revendication 1, dans lequel la bobine acoustique (323) comprend une première partie latérale (3231) et une seconde partie latérale (3232) qui sont disposées opposées l'une de l'autre, à la fois la première partie latérale (3231) et la seconde partie latérale (3232) sont parallèles à un axe central de la bobine acoustique (323), la première partie latérale (3231) est reliée au premier diaphragme (321) et la seconde partie latérale (3232) est reliée au second diaphragme (322) ; et
dans lequel l'ensemble de circuit magnétique (33) comprend une première partie et une seconde partie, à la fois la première partie et la seconde partie sont magnétiques, la première partie et la seconde partie sont espacées l'une de l'autre, et l'entrefer magnétique (333, 3331, 3332) est formé entre la première partie et la seconde partie.

5. Module de haut-parleur (30) selon l'une quelconque des revendications 1 à 4, dans lequel il existe une pluralité de bobines acoustiques (323), et la pluralité de bobines acoustiques (323) sont disposées dans une direction de longueur du haut-parleur.

6. Module de haut-parleur (30) selon la revendication 5, dans lequel l'entrefer magnétique (333, 3331, 3332) se prolonge dans la direction de longueur du haut-parleur, et la pluralité de bobines acoustiques (323) sont disposées à intervalles réguliers dans l'entrefer magnétique (333, 3331, 3332) ; ou le haut-parleur comprend une pluralité d'entrefers magnétiques (333, 3331, 3332), la pluralité d'entrefers magnétiques (333, 3331, 3332) sont pourvus à intervalles réguliers dans la direction de longueur du haut-parleur, et la pluralité de bobines acoustiques (323) sont situées à l'intérieur de la pluralité d'entrefers magnétiques (333, 3331, 3332) en correspondance biunivoque.

7. Module de haut-parleur (30) selon l'une quelconque des revendications 1 à 4, dans lequel le premier diaphragme (321) et le second diaphragme (322) sont disposés symétriquement par rapport à l'ensemble de circuit magnétique (33).

8. Module de haut-parleur (30), comprenant un boîtier (80) et un haut-parleur, dans lequel
le boîtier (80) a un espace de montage (41), le haut-parleur est fixé dans l'espace de montage (41), et divise l'espace de montage (41) en un premier espace (411) et un second espace (412), et lorsque le haut-parleur fonctionne, une première onde sonore est formée dans le premier espace (411), et une deuxième onde sonore est formée dans le second espace (412), dans lequel la deuxième onde sonore et la première onde sonore ont des amplitudes égales et des phases opposées ;
le boîtier (80) a également un premier orifice d'émission sonore et un deuxième orifice d'émission sonore qui sont disposés opposés l'un de l'autre, le premier orifice d'émission sonore communique avec le premier espace (411), et le deuxième orifice d'émission sonore communique avec le second espace (412) ; et le boîtier (80) a également un troisième orifice d'émission sonore et une cavité d'onduleur (45), une extrémité de la cavité d'onduleur communique avec le second espace (412), l'autre extrémité de la cavité d'onduleur communique avec le troisième orifice d'émission sonore, la cavité d'onduleur (45) est configurée pour former une troisième onde sonore au niveau du troisième orifice d'émission sonore lorsque le haut-parleur fonctionne, une phase de la troisième onde sonore est la même qu'une phase de la première onde sonore, et la troisième onde sonore est superposée à la première onde sonore traversant le premier orifice d'émission sonore ;
dans lequel le haut-parleur comprend une base (31, 51), un ensemble de vibration (32, 52), un premier ensemble de circuit magnétique (34, 53) et un second ensemble de circuit magnétique (35, 54), la base (31, 51) a une cavité intérieure (311, 511), l'ensemble de vibration (32, 52) est disposé dans la cavité intérieure (311, 511), et le premier ensemble de circuit magnétique (34, 53) et le second ensemble de circuit magnétique (35, 54) sont respectivement situés sur deux côtés de l'ensemble de vibration (32, 52) et sont disposés symétriquement par rapport à l'ensemble de vibration (32, 52) ;
l'ensemble de vibration (32, 52) comprend un diaphragme (321, 322, 521), une première bobine acoustique (522) et une seconde bobine acoustique (523), le diaphragme (321, 322, 521), la première bobine acoustique (522) et la seconde bobine acoustique (523) sont empilés dans une première direction, le diaphragme (321, 322, 521) comprend une première surface (5211) et une seconde surface (5212) qui sont disposées opposées l'une de l'autre dans la première direction, et le diaphragme (321, 322, 521) divise la cavité intérieure (311, 511) en une première cavité sonore (5112) et une seconde cavité sonore (5113), la première bobine acoustique (522) est fixée à la première surface (5211) et la seconde bobine acoustique (523) est fixée à la seconde surface (5212) ; le premier ensemble de circuit magnétique (34, 53) et le second ensemble de circuit magnétique (35, 54) sont respectivement situés dans la première cavité sonore (5112) et la seconde cavité sonore (5113) ; et
la première cavité sonore communique avec le premier espace (411), et la seconde cavité sonore communique avec le second espace (412).

9. Module de haut-parleur (30) selon la revendication 8, dans lequel une projection de la première bobine acoustique (522) sur la première surface (5211) est un anneau, une hauteur de la première bobine acoustique (522) dans la première direction est une première hauteur, une distance entre le premier ensemble de circuit magnétique (34, 53) et la première surface (5211) est une première distance, et la première hauteur est supérieure à la première distance ; et/ou une projection de la seconde bobine acoustique (523) sur la seconde surface (5212) est un anneau, une hauteur de la seconde bobine acoustique (523) dans la première direction est une seconde hauteur, une distance entre le second ensemble de circuit magnétique (35, 54) et la seconde surface (5212) est une seconde distance, et la seconde hauteur est supérieure à la seconde distance.

10. Module de haut-parleur (30) selon la revendication 8, dans lequel la première bobine acoustique (522) et la seconde bobine acoustique (523) sont disposées symétriquement par rapport au diaphragme (321, 322, 521), et le premier ensemble de circuit magnétique (34, 53) et le second ensemble de circuit magnétique (35, 54) sont disposés symétriquement par rapport au diaphragme (321, 322, 521).

11. Module de haut-parleur (30) selon l'une quelconque des revendications 8 à 10, dans lequel la base (31, 51) comprend un corps de cadre (111, 312, 512), une première plaque de recouvrement (313, 513) et une seconde plaque de recouvrement (314, 514), la première plaque de recouvrement (313, 513) et la seconde plaque de recouvrement (314, 514) recouvrent respectivement deux côtés opposés du corps de cadre (111, 312, 512), le diaphragme (321, 322, 521) est relié à l'intérieur du corps de cadre (111, 312, 512), le premier ensemble de circuit magnétique (34, 53) et le second ensemble de circuit magnétique (35, 54) sont respectivement reliés à la première plaque de recouvrement (313, 513) et à la seconde plaque de recouvrement (314, 514), la première plaque de recouvrement (313, 513) comprend un premier orifice de sortie sonore (5131), la seconde plaque de recouvrement (314, 514) comprend un second orifice de sortie sonore (5141), et le premier orifice de sortie sonore (5131) et le second orifice de sortie sonore (5141) sont symétriques par rapport au diaphragme (321, 322, 521) ; et le premier orifice de sortie sonore (5131) communique avec le premier espace (411), et le second orifice de sortie sonore (5141) communique avec le second espace (412).

12. Module de haut-parleur (30) selon l'une quelconque des revendications 8 à 10, dans lequel le premier ensemble de circuit magnétique (34, 53) comprend un premier entrefer (5313), le second ensemble de circuit magnétique (35, 54) comprend un second entrefer (5412), le premier entrefer (5313) et le second entrefer (5412) sont disposés symétriquement par rapport au diaphragme (321, 322, 521), la première bobine acoustique (522) se prolonge au moins partiellement dans le premier entrefer (5313), et la seconde bobine acoustique (523) se prolonge au moins partiellement dans le second entrefer (5412).

13. Dispositif électronique (1000), dans lequel le dispositif électronique (1000) comprend un boîtier (80) et le module de haut-parleur (30) selon l'une quelconque des revendications 1 à 7 ou l'une quelconque des revendications 8 à 12, le boîtier (80) a un premier orifice de sortie sonore (13) et un second orifice de sortie sonore (14), le module de haut-parleur (30) est monté à l'intérieur du boîtier (80), à la fois un premier orifice d'émission sonore et un troisième orifice d'émission sonore du module de haut-parleur communiquent avec le premier orifice de sortie sonore (13), et un deuxième orifice d'émission sonore du module de haut-parleur communique avec le second orifice de sortie sonore (14).
